# EUROPEAN PATENT APPLICATION

(11) **EP 3 892 112 A1**
(43) Date of publication of application: **13.10.2021**
(21) Application number: 19892656.0
(22) Date of filing: 06.12.2019
(51) Int. Cl.: A23L 2/60, A23L 2/00

(54) **FLAVOR WATER HAVING IMPROVED TASTE QUALITIES OF SUGAR AND SWEETENER**

(30) Priority: 07.12.2018 JP 2018230294
(71) Applicant: Suntory Holdings Limited, Osaka 530-8203 (JP)
(72) Inventor: ASAMI Yoji, Kawasaki-shi, Kanagawa 211-0067 (JP); OHKURI Tadahiro, Kawasaki-shi, Kanagawa 211-0067 (JP); FUJIE Akiko, Kawasaki-shi, Kanagawa 211-0067 (JP); NAGAO Koji, Kawasaki-shi, Kanagawa 211-0067 (JP); YOKOO Yoshiaki, Kawasaki-shi, Kanagawa 211-0067 (JP)
(74) Representative: Mewburn Ellis LLP
(86) International application number: PCT/JP2019/047897
(87) International publication number: WO 2020/116634

(57) **Abstract**

The present invention pertains to a flavor water that comprises: (a) natural sugar in an amount corresponding to sweetness intensity X1; (b) a high intensity sweetener in an amount corresponding to sweetness intensity X2; (c) sodium in an amount of less than 40 mg/100 ml; and (d) potassium in an amount of less than 70 mg/100 ml and/or calcium in an amount of less than 70 mg/100 ml, wherein the high intensity sweetener comprises at least one high intensity sweetener b1 selected from the group consisting of Rebaudioside M, Rebaudioside D, Rebaudioside N, Rebaudioside 0, Rebaudioside E, an extract of Momordica grosvenori, Mogroside V and Thaumatin, and (X1+X2) is larger than 1 and not larger than 20.

## Description

### TECHNICAL FIELD

The present invention relates to flavored waters having a sugar and a sweetener with an improved taste quality, and to methods for producing the flavored waters.

### BACKGROUND ART

Humans have five sensory systems, and the sense of taste is one of the sensory systems of humans. The taste receptor organ to receive tastes is called taste buds, which exist on the fungiform papillae existing over a wide area, mainly on the tip of the tongue, on the vallate papillae existing on a limited area of the back of the tongue, and on the foliate papillae. The taste buds are a cell assembly composed of elongate cells, called taste cells, and basal cells. The taste cells protrude microvilli toward the tongue surface, and form synapses at bottom of the cells with taste nerve fibers entering the taste buds. Tastes we usually sense are transmitted as taste information via the taste nerves to the brain, where the tastes are perceived. Known taste receptors of sweetness include T1R2 and T1R3. T1R2 and T1R3 are reported to form hetero-dimers (Non-patent Literature 1 to 3).

Although various studies have been made on the sense of taste, little has been revealed yet in this field. We usually experience various tastes of foods. Foods that seem to be tasty have appropriately mixed and well-harmonized tastes. The taste of foods may be tasted as a single taste in some cases, but often is tasted as a mixed taste of various tastes, which are associated with one another.

Meanwhile, foods have been required to have lower calories in addition to a good taste in recent years. This relates to a fact that lifestyle-related diseases such as obesity and diabetes are regarded as a problem.

However, to produce lower-calorie foods, their natural sugar concentration has to be maintained low. This is an obstruction in the case of providing foods that exhibit low calories and a good taste.

As an example of a contrast effect, which is an interaction of tastes, there has been long known a phenomenon in which addition of salt to sweet red-bean soup enhances sweetness. There is an example that reports the interaction between saltiness and sweetness by focusing on this phenomenon, and it is concluded that the interaction between sweetness and saltiness requires sweetness that is strong to a certain degree (a 15% solution) and a salt concentration that is high to a certain degree (0.1 to 0.2%) (Non-Patent Literature 4).

In addition, foods and drinks that exhibit sweetness by using a high-intensity sweetener of low calorie, such as Rebaudioside A, as a substitute for natural sugar have also been developed, but the sweetness exhibited by high-intensity sweeteners has distinctive aftertaste, which hinders the provision of good taste.

### CITATION LIST

### Non-Patent Literature

[Non-Patent Literature 1] Zhao G. Q., Zhang Y., Hoon M. A., Chandrashekar J., Erlenbach I., Ryba N. J. P., and Zuker1 C. S., Cell, 2003, Vol. 115, 255-266
[Non-Patent Literature 2] Li X, Staszewski L, Xu H, Durick K, Zoller M, Adler E., Proc Natl Acad Sci U S A. 2002,99(7), 4692-4696.
[Non-Patent Literature 3] Fernstrom J. D., Munger S. D., Sclafani A., de Araujo I. E., Roberts A., and Molinary S., J. Nutr. 2012. Vol. 142: 1134S-1141S
[Non-Patent Literature 4] Ayumi Uchida, Nao Takagi, Rieko Horikiri, Miho Matsue, Yumiko Uchiyama and Masashi Omori, Research Bulletin of Otsuma Women's University for Home Economics -No.49 (2013. 3)

### SUMMARY OF THE INVENTION

### Problem to be Solved by the Invention

The development of a method for well improving the taste quality exhibited by a sugar and a sweetener while having an adequate sweetness intensity and maintaining the amount of the natural sugar used in a flavored water low has been much awaited.

### Means for Solving the Problems

The present inventors succeeded for the first time in enhancing a sweetness based on a combined use of natural sugar and a specific high-intensity sweetener and improving a taste quality by containing not only the natural sugar but also the specific high-intensity sweetener and adding a low concentration of sodium and a low concentration of potassium and/or calcium. It is unexpected that improving effect on taste qualities is synergistically improved by adding a specific amount of potassium and/or calcium in addition to a specific amount of sodium.

That is, the present invention is as follows.
[1] A flavored water comprising:
   (a) natural sugar in an amount corresponding to a sweetness intensity X1;
   (b) high-intensity sweetener in an amount corresponding to a sweetness intensity X2;
   (c) less than 40 mg/100 ml of sodium; and
   (d) less than 70 mg/100 ml of potassium and/or less than 70 mg/100 ml of calcium,
      wherein the high-intensity sweetener comprises at least one high-intensity sweetener b1 selected from the group consisting of rebaudioside M, rebaudioside D, rebaudioside N, rebaudioside O, rebaudioside E, Luo han guo extract, mogroside V, and thaumatin, and
      0.1 < (X1 + X2) ≤ 20 is satisfied.
[2] Flavored water according to [1], wherein the sodium content is 5 to 35 mg/100 ml.
[3] Flavored water according to [1] or [2], which comprises 0.1 to 60 mg/100 ml of potassium and/or 0.1 to 60 mg/100 ml of calcium.
[4] Flavored water according to any one of [1] to [3], wherein energy is 30 Kcal/100 ml or less.
[5] Flavored water according to any one of [1] to [4], wherein X1 is 0.1 to 5.9.
[6] Flavored water according to any one of [1] to [5], wherein an absorbance of the flavored water at a wavelength of 660 nm is 0.06 or less.
[7] Flavored water according to any one of [1] to [6], wherein a carbon dioxide gas pressure of the flavored water at 20°C is less than 1.0 kgf/cm².
[8] Flavored water according to any one of [1] to [7], wherein the natural sugar is at least one selected from the group consisting of glucose, sucrose, fructose, maltose, oligosaccharides, high-fructose corn syrup, lactose, psicose, allose, tagatose, and combinations thereof.
[9] Flavored water according to any one of [1] to [8], wherein the high-intensity sweetener b1 is at least one selected from the group consisting of rebaudioside M, rebaudioside D, Luo han guo extract, mogroside V, and combinations thereof.
[10] Flavored water according to any one of [1] to [9], wherein the sodium is at least one selected from the group consisting of sodium chloride, sodium hydroxide, sodium malate, sodium sulfate, sodium citrate, sodium phosphate, sodium carbonate, sodium disulfide, sodium bicarbonate, sodium alginate, sodium arginate, sodium glucoheptonate, sodium gluconate, monosodium glutamate, sodium tartrate, monosodium aspartate, sodium lactate, sodium caseinate, sodium ascorbate, and mixtures thereof.
[11] Flavored water according to any one of [1] to [10], wherein the potassium is at least one selected from the group consisting of potassium alginate, potassium chloride, potassium citrate, potassium gluconate, monopotassium L-glutamate, potassium bromate, potassium hydrogen DL-tartrate, potassium hydrogen L-tartrate, potassium nitrate, potassium hydroxide, potassium sorbate, potassium carbonate, potassium lactate, potassium norbixin, potassium pyrosulfite, tetrapotassium pyrophosphate, potassium ferrocyanide, potassium polyphosphate, potassium metaphosphate, potassium aluminum sulfate, potassium sulfate, tripotassium phosphate, dipotassium hydrogen phosphate, potassium dihydrogen phosphate, and mixtures thereof.
[12] Flavored water according to any one of [1] to [11], wherein the calcium is at least one selected from the group consisting of calcium L-ascorbate, calcium alginate, calcium disodium ethylenediaminetetraacetate, calcium chloride, carboxymethylcellulose calcium, calcium citrate, calcium glycerophosphate, calcium gluconate, monocalcium Di-L-glutamate, calcium silicate, calcium acetate, calcium oxide, calcium hydroxide, calcium stearate, calcium stearoyl lactate, calcium sorbate, calcium carbonate, calcium lactate, calcium pantothenate, calcium dihydrogen pyrophosphate, calcium ferrocyanide, calcium propionate, calcium 5'-ribonucleotide, calcium sulfate, tricalcium phosphate, calcium monohydrogen phosphate, calcium dihydrogen phosphate, and mixtures thereof.
[13] Flavored water according to any one of [1] to [12], wherein the flavored water comprises 5 to 35 mg/100 ml of sodium and comprises 0.1 to 60 mg/100 ml of potassium and/or 0.1 to 60 mg/100 ml of calcium, energy is 30 Kcal/100 ml or less, and X1 + X2 is 6 or more.
[14] Flavored water according to any one of [1] to [13], which is packed in a container.
[15] A method for producing a flavored water, comprising:
   to a raw material,
   (i) adding (a) natural sugar in an amount corresponding to a sweetness intensity X1 and (b) high-intensity sweetener in an amount corresponding to a sweetness intensity X2;
   (ii) adding (c) sodium such that a sodium content in a flavored water age is less than 40 mg/100 ml; and
   (iii) adding (d) potassium such that a potassium content in the flavored water is less than 70 mg/100 ml and/or adding (d) calcium such that a calcium content in the flavored water is less than 70 mg/100 ml,
      wherein
      the high-intensity sweetener comprises at least one high-intensity sweetener b1 selected from the group consisting of rebaudioside M, rebaudioside D, rebaudioside N, rebaudioside O, rebaudioside E, Luo han guo extract, mogroside V, and thaumatin, and
      0.1 < (X1 + X2) ≤ 20 is satisfied.
[16] Method according to [15], wherein in the flavored water, the sodium content is 5 to 35 mg/100 ml.
[17] Method according to [15] or [16], which comprises 0.1 to 60 mg/100 ml of potassium and/or 0.1 to 60 mg/100 ml of calcium.
[18] Method according to any one of [15] to [17], wherein energy of the flavored water is 30 Kcal/100 ml or less.
[19] Method according to any one of [15] to [18], wherein X1 is 0.1 to 5.9.
[20] Method according to any one of [15] to [19], wherein an absorbance of the flavored water at a wavelength of 660 nm is 0.06 or less.
[21] Method water according to any one of [15] to [20], wherein a carbon dioxide gas pressure of the flavored water at 20°C is less than 1.0 kgf/cm².
[22] Method according to any one of [15] to [21], wherein the natural sugar is at least one selected from the group consisting of glucose, sucrose, fructose, maltose, an oligosaccharide, a high-fructose corn syrup, lactose, psicose, allose, tagatose, and combinations thereof.
[23] Method according to any one of [15] to [22], wherein the high-intensity sweetener b1 is at least one selected from the group consisting of rebaudioside M, rebaudioside D, Luo han guo extract, mogroside V, and combinations thereof.
[24] Method according to any one of [15] to [23], wherein the sodium is at least one selected from the group consisting of sodium chloride, sodium hydroxide, sodium malate, sodium sulfate, sodium citrate, sodium phosphate, sodium carbonate, sodium disulfide, sodium bicarbonate, sodium alginate, sodium arginate, sodium glucoheptonate, sodium gluconate, monosodium glutamate, sodium tartrate, monosodium aspartate, sodium lactate, sodium caseinate, sodium ascorbate, and mixtures thereof.
[25] The flavored water according to any one of [15] to [24], wherein the potassium is at least one selected from the group consisting of potassium alginate, potassium chloride, potassium citrate, potassium gluconate, monopotassium L-glutamate, potassium bromate, potassium hydrogen DL-tartrate, potassium hydrogen L-tartrate, potassium nitrate, potassium hydroxide, potassium sorbate, potassium carbonate, potassium lactate, potassium norbixin, potassium pyrosulfite, tetrapotassium pyrophosphate, potassium ferrocyanide, potassium polyphosphate, potassium metaphosphate, potassium aluminum sulfate, potassium sulfate, tripotassium phosphate, dipotassium hydrogen phosphate, potassium dihydrogen phosphate, and mixtures thereof.
[26] The flavored water according to any one of [15] to [25], wherein the calcium is at least one selected from the group consisting of calcium L-ascorbate, calcium alginate, calcium disodium ethylenediaminetetraacetate, calcium chloride, carboxymethylcellulose calcium, calcium citrate, calcium glycerophosphate, calcium gluconate, monocalcium Di-L-glutamate, calcium silicate, calcium acetate, calcium oxide, calcium hydroxide, calcium stearate, calcium stearoyl lactate, calcium sorbate, calcium carbonate, calcium lactate, calcium pantothenate, calcium dihydrogen pyrophosphate, calcium ferrocyanide, calcium propionate, calcium 5'-ribonucleotide, calcium sulfate, tricalcium phosphate, calcium monohydrogen phosphate, calcium dihydrogen phosphate, and mixtures thereof.
[27] Method according to any one of [15] to [26], wherein the flavored water comprises 10 to 30 mg/100 ml of sodium and comprises 0.1 to 60 mg/100 ml of potassium and/or 0.1 to 60 mg/100 ml of calcium, energy is 30 Kcal/100 ml or less, and X1 + X2 is 6 or more.
[28] A concentrate for providing a flavored water according to [1], comprising:
   (a) natural sugar in an amount corresponding to a sweetness intensity X4;
   (b) high-intensity sweetener in an amount corresponding to a sweetness intensity X5;
   (c) less than 400 mg/100 ml of sodium; and
   (d) less than 700 mg/100 ml of potassium and/or less than 700 mg/100 ml of calcium,
   wherein (X4 + X5) ≤ 200 is satisfied.
[29] A method for enhancing the sweetness of a flavored water, comprising containing:
   (a) natural sugar in an amount corresponding to a sweetness intensity X1;
   (b) high-intensity sweetener in an amount corresponding to a sweetness intensity X2;
   (c) less than 40 mg/100 ml of sodium; and
   (d) less than 70 mg/100 ml of potassium and/or less than 70 mg/100 ml of calcium
   in the flavored water.

### ADVANTAGEOUS EFFECTS OF THE INVENTION

The present invention provides a method for increasing the sweetness of a flavored water, which is not a simple sweetness that is obtained by increasing the amounts of natural sugar and high-intensity sweetener used, and providing good taste quality. In addition, the method of the present invention provides a flavored water having good taste quality with increased sweetness by a means other than control of the used amounts of sugar and sweetener.

### DESCRIPTION OF EMBODIMENTS

Hereinafter, the present invention will be described in detail. The following embodiments are examples to describe the present invention and do not intend to limit the present invention only to these embodiments. The present invention can be carried out in various embodiments without departing from the spirit of the present invention.

Note that all of the literature, laid-open publications, patent publications, and other patent literature cited herein are deemed to be incorporated by reference into the present specification.

In the present specification, for example, the phrase "the content of the A component is X mg/100ml" means that "X mg of the A component is contained in 100 ml of the beverage". In addition, for example, the phrase "the content of the B component is Y ppm" means that "the B component is contained in Y ppm with respect to the total amount (100 mass%) of the beverage".

### 1. Flavored water having a natural sugar and a high-intensity sweetener with an improved taste quality

The present invention provides the following flavored water (hereinafter, referred to as "the flavored water of the present invention") as a first embodiment.

A flavored water comprising:
(a) natural sugar in an amount corresponding to a sweetness intensity X1;
(b) high-intensity sweetener in an amount corresponding to a sweetness intensity X2;
(c) less than 40 mg/100ml of sodium; and
(d) less than 70 mg/100ml of potassium and/or less than 70 mg/100ml of calcium,
   wherein the high-intensity sweetener comprises at least one high-intensity sweetener b1 selected from the group consisting of rebaudioside M, rebaudioside D, rebaudioside N, rebaudioside O, rebaudioside E, Luo han guo extract, mogroside V, and thaumatin, and
   0.1 < (X1 + X2) ≤ 20 is satisfied.

The flavored water of the present invention has a sweetness of a sweetness intensity X3 exhibited by the components (a) to (d).

In other words, in the flavored water of the present invention, the components having a sweetness are (a) a specific amount of natural sugar and (b) a specific amount of a predetermined high-intensity sweetener. The sweetness exhibited by the flavored water of the present invention should computationally be the total value of the sweetness intensity obtained when the component (a) is added to the flavored water and the sweetness intensity obtained when the component (b) is added to the flavored water. However, (c) sodium and (d) potassium and/or calcium are present in the flavored water although the concentrations thereof are low, and thus the sweetness exhibited by (a) the natural sugar and (b) the high-intensity sweetener is enhanced, and the flavored water of the present invention has a sweetness more than the simple sum of the sweetness intensities. The present invention means to possibly further include additional components such as an acidulant, a flavor, a vitamin, a color, an antioxidant, an emulsifier, a preservative, a seasoning, an extract, a pH adjuster, and a quality stabilizer in addition to these components (a) to (d). However, the flavored water of the present invention does not include a substance having a sweetness other than the components (a) and (b) as a sweetener.

Further, in the flavored water according to a preferable embodiment of the present invention, improving effect on taste qualities is exhibited in addition to sweetness enhancement. For example, in the flavored water according to an embodiment of the present invention, it is preferable for at least one of flavor (aroma) intensity and suppression of an odd taste (bitterness, astringency, or the like) to be improved. The effect of eliciting a flavor (aroma) can be confirmed not only by sensory evaluation but also by analysis of the amount of a volatilized aroma component by gas chromatography. In addition, in an embodiment of the present invention, by increasing the amount(s) of K and/or Ca added instead of Na, the flavor of a sparkling beverage can be improved while suppressing increase in saltiness.

### Flavored water

In the present invention, a "flavored water" is a beverage which is obtained by adding a flavor, a fruit juice, an extract, or the like to water such as a mineral water (including a natural mineral water) and has a water-like appearance, which is also called a near water. In general, a flavored water is colorless and clear as is water but has a flavor, sweetness, or acidity of a fruit or the like. The flavored water has a refreshing taste so that it can be drunk instead of water, and has the property of being as easy to drink as water or easier to drink than water.

The flavor that can be contained in the flavored water of the present invention is not particularly limited, and examples thereof include a fruit-based flavor, a citrus-based flavor, a mint-based flavor, a coffee flavor, a cocoa flavor, and a tea flavor (including black tea flavor).

Examples of the fruit-based flavor of these include one or more selected from valencene, which is a flavor contained in an essential oil of an orange or the like, linalool, which is a flavor contained in an essential oil of a plant such as rosewood, lavender, bergamot, or coriander, and a nootkatone such as d-nootkatone having a grapefruit-like aroma.

The fruit juice contained in the flavored water of the present invention is not particularly limited, and examples thereof include those of one or more selected from orange, mikan, lemon, grapefruit, lime, pineapple, strawberry, blueberry, blackcurrant, cranberry, blueberry, guava, banana, acerola, papaya, passion fruit, mango, apple, grape, peach, ume, pear, apricot, sumomo, melon, kiwi fruit, and Japanese quince.

These fruit juices can be used regardless of the production method, in the form of straight fruit juice, concentrated fruit juice, or the like. The concentrated fruit juice can be one prepared by either of a heat concentration method and a freeze concentration method.

Here, when a fruit juice is used, it is preferable to use a clear fruit juice that has been subjected to a clearing treatment in consideration of the influence on the liquid color of the beverage. The fruit juice can be subjected to a decolorization treatment. From the viewpoint of keeping the liquid color colorless and clear and from the viewpoint of keeping the liquid color colorless and clear during long-term storage, the content of the clear fruit juice is preferably 5.0% by mass or less, more preferably 2.0% by mass or less, further preferably 1.5% by mass or less, and more further preferably 1.0% by mass or less based on the total amount of the flavored water (100% by mass).

The extract that can be contained in the flavored water of the present invention is not particularly limited, and examples thereof include one or more selected from an alga extract, a dried fish extract, a mushroom extract, a grain extract, a tea extract, a vegetable extract, a fruit extract, a herb extract, a mesophyll extract, and a bean extract, a seed extract, and a yeast extract.

The absorbance of the flavored water of the present invention at a wavelength of 660 nm is preferably 0.06 or less, more preferably 0.02 or less, and further preferably 0.01 or less. The absorbance at a wavelength of 660 nm is an index of clearness, and a flavored water having an absorbance of 0.06 or less can be deemed to be a clear beverage.

Herein, the absorbance at a wavelength of 660 nm can be measured using an ultraviolet visible spectrophotometer such as UV-1600, UV-1800, or UV-1850 (all manufactured by Shimadzu Corporation).

In addition, the ΔE value of the transmitted light through the flavored water of the present invention can be 3.5 or less. A flavored water having a ΔE value of the transmitted light of 3.5 or less can be deemed to be a colorless beverage.

Herein, the ΔE value of the transmitted light is a value measured according to JIS Z 8722, and can be measured using an ultraviolet visible spectrophotometer such as ZE2000 (manufactured by Nippon Denshoku Industries Co., Ltd.).

The flavored water of the present invention can be a carbonated beverage or a non-carbonated beverage.

The carbon dioxide pressure of the flavored water as a carbonated beverage at 20°C can be 1.0 to 5.0 kgf/cm², 1.0 to 4.5 kgf/cm², 1.0 to 4.0 kgf/cm², 1.0 to 3.5 kgf/cm², 1.0 to 3.0 kgf/cm², 1.0 to 2.5 kgf/cm², 1.0 to 2.0 kgf/cm², 1.2 to 5.0 kgf/cm², 1.2 to 4.5 kgf/cm², 1.2 to 4.0 kgf/cm², 1.2 to 3.5 kgf/cm², 1.2 to 3.0 kgf/cm², 1.2 to 2.5 kgf/cm², 1.2 to 2.0 kgf/cm², 1.5 to 5.0 kgf/cm², 1.5 to 4.5 kgf/cm², 1.5 to 4.0 kgf/cm², 1.5 to 3.5 kgf/cm², 1.5 to 3.0 kgf/cm², or 1.5 to 2.5 kgf/cm².

The carbon dioxide pressure of the flavored water as a non-carbonated beverage at 20°C can be less than 1.0 kgf/cm², 0 to 0.9 kgf/cm², 0 to 0.8 kgf/cm², 0 to 0.7 kgf/cm², 0 to 0.6 kgf/cm², 0 to 0.5 kgf/cm², 0 to 0.4 kgf/cm², 0 to 0.3 kgf/cm², 0.1 to 0.9 kgf/cm², 0.1 to 0.8 kgf/cm², 0.1 to 0.7 kgf/cm², 0.1 to 0.6 kgf/cm², 0.1 to 0.5 kgf/cm², 0.1 to 0.4 kgf/cm², 0.1 to 0.3 kgf/cm², 0.2 to 0.9 kgf/cm², 0.2 to 0.8 kgf/cm², 0.2 to 0.7 kgf/cm², 0.2 to 0.6 kgf/cm², 0.2 to 0.5 kgf/cm², 0.2 to 0.4 kgf/cm², or 0.2 to 0.3 kgf/cm².

Herein, the carbon dioxide gas pressure can be measured using a gas volume analyzer such as GVA-500A of Kyoto Electronics Manufacturing Co., Ltd. For example, the carbon dioxide gas pressure can be measured after the sample temperature is set to 20°C and the container is degassed (snifted) and shaken in the gas volume analyzer.

The form of the flavored water of the present invention is not limited, and can be, for example, the form of a beverage in which a concentrate is dissolved, or the form of a packed-in-container flavored water obtained by enclosing the flavored water in a container such as a can or a PET bottle so that the same is packed in the container.

### Natural Sugar

In the present invention, a "natural sugar", which is represented by the general formula of Cₘ(H₂O)ₙ, wherein m and n independently represent a natural number, contains a D-form carbohydrate, digestible by humans. Examples of the D-form carbohydrate include glucose, sucrose, fructose, maltose, oligosaccharides (for example, fructooligosaccharide, maltooligosaccharide, isomaltooligosaccharide, and galactooligosaccharide), high-fructose corn syrup (isomerized sugars), lactose, psicose, allose, tagatose, and combinations thereof.

Examples of the combination of glucose, sucrose, fructose, maltose, oligosaccharides, high-fructose corn syrup, and lactose include the following. Specifically, the combination includes sucrose and high-fructose corn syrup, sucrose and glucose, sucrose and fructose, sucrose and maltose, sucrose and an oligosaccharide, sucrose and lactose, high-fructose corn syrup and an oligosaccharide, sucrose and psicose; sucrose, high-fructose corn syrup, and glucose; sucrose, high-fructose corn syrup, and fructose; sucrose, high-fructose corn syrup, and maltose; sucrose, high-fructose corn syrup, and an oligosaccharide; sucrose, high-fructose corn syrup, glucose, and an oligosaccharide; sucrose, glucose, fructose, and an oligosaccharides; and glucose, sucrose, fructose, maltose, an oligosaccharide, high-fructose corn syrup, lactose, and tagatose.

Since natural sugar has high energy, the energy (calorie) of the flavored water can be greatly reduced by decreasing the content of the natural sugar. The present invention keeps the concentration of the natural sugar low to decrease the energy (i.e. low calorie), but strong sweetness is felt when ingested by a combination of a natural sugar, high-intensity sweetener, and sodium. Accordingly, the amount of the natural sugar of a sweetness intensity X1 is preferably an amount of providing an energy of 50 Kcal/100 ml or less. The energy of the flavored water of the present invention may be 0 to 50 Kcal/100 ml, 0 to 45 Kcal/100 ml, 0 to 40 Kcal/100 ml, 0 to 35 Kcal/100 ml, 0 to 30 Kcal/100 ml, 0 to 25 Kcal/100 ml, 0 to 22 Kcal/100 ml, 0 to 20 Kcal/100 ml, 0 to 15 Kcal/100 ml, 0 to 10 Kcal/100 ml, 0 to 5 Kcal/100 ml, 5 to 50 Kcal/100 ml, 5 to 45 Kcal/100 ml, 5 to 40 Kcal/100 ml, 5 to 35 Kcal/100 ml, 5 to 30 Kcal/100 ml, 5 to 25 Kcal/100 ml, 5 to 20 Kcal/100 ml, 5 to 15 Kcal/100 ml, 5 to 10 Kcal/100 ml, 10 to 50 Kcal/100 ml, 10 to 45 Kcal/100 ml, 10 to 40 Kcal/100 ml, 10 to 35 Kcal/100 ml, 10 to 30 Kcal/100 ml, 10 to 25 Kcal/100 ml, 10 to 20 Kcal/100 ml, 10 to 15 Kcal/100 ml, 15 to 50 Kcal/100 ml, 15 to 45 Kcal/100 ml, 15 to 40 Kcal/100 ml, 15 to 35 Kcal/100 ml, 15 to 30 Kcal/100 ml, 15 to 25 Kcal/100 ml, 15 to 20 Kcal/100 ml, 20 to 50 Kcal/100 ml, 20 to 45 Kcal/100 ml, 20 to 40 Kcal/100 ml, 20 to 35 Kcal/100 ml, 20 to 30 Kcal/100 ml, 20 to 25 Kcal/100 ml, 25 to 50 Kcal/100 ml, 25 to 45 Kcal/100 ml, 25 to 40 Kcal/100 ml, 25 to 35 Kcal/100 ml, or 25 to 30 Kcal/100 ml, depending on embodiments. The energy of the flavored water of the present invention may also be 0 to 32 Kcal/100ml, 0 to 24 Kcal/100ml, 0 to 8 Kcal/100ml, 0 to 4 Kcal/100ml, 4 to 32 Kcal/100ml, 4 to 24 Kcal/100ml, 4 to 8 Kcal/100ml, 8 to 32 Kcal/100ml, 8 to 24 Kcal/100ml, or 24 to 32 Kcal/100ml, depending on embodiments. When a high calorie component such as a milk component, a total calorie of a natural sugar and a component such as a milk component is preferably 50 Kcal/100ml or less.

Additionally, X1 of "the sweetness intensity X1" may be 0 to 0.5, 0 to 1.0, 0 to 1.5, 0 to 2.0, 0 to 2.5, 0 to 3.0, 0 to 3.5, 0 to 4.0, 0 to 4.5, 0 to 5.0, 0 to 5.5, 0 to 6.0, 0 to 6.5, 0 to 7.0, 0 to 7.5, 0 to 8.0, 0 to 8.25, 0 to 8.5, 0 to 8.75, 0 to 9.0, 0 to 9.25, 0 to 9.5, 0 to 9.75, 0 to 10.0, 0.05 to 0.5, 0.05 to 1.0, 0.05 to 1.5, 0.05 to 2.0, 0.05 to 2.5, 0.05 to 3.0, 0.05 to 3.5, 0.05 to 4.0, 0.05 to 4.5, 0.05 to 5.0, 0.05 to 5.5, 0.05 to 6.0, 0.05 to 6.5, 0.05 to 7.0, 0.05 to 7.5, 0.05 to 8.0, 0.05 to 8.25, 0.05 to 8.5, 0.05 to 8.75, 0.05 to 9.0, 0.05 to 9.25, 0.05 to 9.5, 0.05 to 9.75, 0.05 to 10.0, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.1 to 5.9, 0.1 to 6.0, 0.1 to 6.5, 0.1 to 7.0, 0.1 to 7.5, 0.1 to 8.0, 0.1 to 8.25, 0.1 to 8.5, 0.1 to 8.75, 0.1 to 9.0, 0.1 to 9.25, 0.1 to 9.5, 0.1 to 9.75, 0.1 to 10.0, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 0.5 to 6.0, 0.5 to 6.5, 0.5 to 7.0, 0.5 to 7.5, 0.5 to 8.0, 0.5 to 8.25, 0.5 to 8.5, 0.5 to 8.75, 0.5 to 9.0, 0.5 to 9.25, 0.5 to 9.5, 0.5 to 9.75, 0.5 to 10.0, 1.0 to 0.5, 1.0 to 1.0, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.0 to 6.0, 1.0 to 6.5, 1.0 to 7.0, 1.0 to 7.5, 1.0 to 8.0, 1.0 to 8.25, 1.0 to 8.5, 1.0 to 8.75, 1.0 to 9.0, 1.0 to 9.25, 1.0 to 9.5, 1.0 to 9.75, 1.0 to 10.0, 1.5 to 0.5, 1.5 to 1.0, 1.5 to 1.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 1.5 to 6.0, 1.5 to 6.5, 1.5 to 7.0, 1.5 to 7.5, 1.5 to 8.0, 1.5 to 8.25, 1.5 to 8.5, 1.5 to 8.75, 1.5 to 9.0, 1.5 to 9.25, 1.5 to 9.5, 1.5 to 9.75, 1.5 to 10.0, 2.0 to 0.5, 2.0 to 1.0, 2.0 to 1.5, 2.0 to 2.0, 2.0 to 2.5, 2.0 to 3.0, 2.0 to 3.5, 2.0 to 4.0, 2.0 to 4.5, 2.0 to 5.0, 2.0 to 5.5, 2.0 to 6.0, 2.0 to 6.5, 2.0 to 7.0, 2.0 to 7.5, 2.0 to 8.0, 2.0 to 8.25, 2.0 to 8.5, 2.0 to 8.75, 2.0 to 9.0, 2.0 to 9.25, 2.0 to 9.5, 2.0 to 9.75, 2.0 to 10.0, 2.5 to 0.5, 2.5 to 1.0, 2.5 to 1.5, 2.5 to 2.0, 2.5 to 2.5, 2.5 to 3.0, 2.5 to 3.5, 2.5 to 4.0, 2.5 to 4.5, 2.5 to 5.0, 2.5 to 5.5, 2.5 to 6.0, 2.5 to 6.5, 2.5 to 7.0, 2.5 to 7.5, 2.5 to 8.0, 2.5 to 8.25, 2.5 to 8.5, 2.5 to 8.75, 2.5 to 9.0, 2.5 to 9.25, 2.5 to 9.5, 2.5 to 9.75, or 2.5 to 10.0.

X1 may also be 0 to 10.5, 0 to 11.0, 0 to 11.5, 0 to 12.0, 0 to 12.5, 0 to 13.0, 0 to 13.5, 0 to 14.0, 0 to 14.5, 0 to 15.0, 0.05 to 10.5, 0.05 to 11.0, 0.05 to 11.5, 0.05 to 12.0, 0.05 to 12.5, 0.05 to 13.0, 0.05 to 13.5, 0.05 to 14.0, 0.05 to 14.5, 0.05 to 15.0, 0.1 to 10.5, 0.1 to 11.0, 0.1 to 11.5, 0.1 to 12.0, 0.1 to 12.5, 0.1 to 13.0, 0.1 to 13.5, 0.1 to 14.0, 0.1 to 14.5, 0.1 to 15.0, 0.5 to 10.5, 0.5 to 11.0, 0.5 to 11.5, 0.5 to 12.0, 0.5 to 12.5, 0.5 to 13.0, 0.5 to 13.5, 0.5 to 14.0, 0.5 to 14.5, 0.5 to 15.0, 1.0 to 10.5, 1.0 to 11.0, 1.0 to 11.5, 1.0 to 12.0, 1.0 to 12.5, 1.0 to 13.0, 1.0 to 13.5, 1.0 to 14.0, 1.0 to 14.5, 1.0 to 15.0, 1.5 to 10.5, 1.5 to 11.0, 1.5 to 11.5, 1.5 to 12.0, 1.5 to 12.5, 1.5 to 13.0, 1.5 to 13.5, 1.5 to 14.0, 1.5 to 14.5, 1.5 to 15.0, 2.0 to 10.5, 2.0 to 11.0, 2.0 to 11.5, 2.0 to 12.0, 2.0 to 12.5, 2.0 to 13.0, 2.0 to 13.5, 2.0 to 14.0, 2.0 to 14.5, 2.0 to 15.0, 2.5 to 10.5, 2.5 to 11.0, 2.5 to 11.5, 2.5 to 12.0, 2.5 to 12.5, 2.5 to 13.0, 2.5 to 13.5, 2.5 to 14.0, 2.5 to 14.5, or 2.5 to 15.0.

The amount corresponding to the sweetness intensity X1 of the natural sugar refers to an amount (a concentration) that exhibits the sweetness of the sweetness intensity X1 under conditions where the natural sugar is dissolved in water at 20°C having a volume equivalent to that of the flavored water of the present invention.

Here, the sweetness intensity means sweetness exhibited by a substance. For example, in the case where the sweetness intensity exhibited by sucrose per unit concentration Brix 1 is defined as a degree of sweetness of 1, glucose has a degree of sweetness of 0.6 to 0.7 (center value: 0.65). A numerical value obtained by multiplying this degree of sweetness by the concentration Brix value of glucose is the sweetness intensity of glucose. Thus, when the concentration of glucose is Brix 1.5, the sweetness intensity of glucose is 0.65 × 1.5 = 0.975. When calculating the sweetness intensity in the present invention, the sweetness intensity of a sugar showing a range in the degree of sweetness, the center value is used unless otherwise noted.

**Table 1**

| Sugar (D-form) | Degree of sweetness |
|---|---|
| Sucrose | 1 |
| Glucose | 0.6 to 0.7 |
| Fructose | 1.3 to 1.7 |
| Maltose | 0.4 |
| Fructooligosaccharide | 0.6 |
| Maltooligosaccharide | 0.3 |
| Isomaltooligosaccharide | 0.4 to 0.5 |
| Galactooligosaccharide | 0.7 |
| Isomerized sugar | 0.8 to 0.9 |
| Lactose | 0.2 to 0.3 |
| Psicose | 0.7 |
| Allose | 0.8 |
| Tagatose | 0.9 |

### High-Intensity Sweetener

In the present invention, the "high-intensity sweetener" refers to a compound having sweetness more intense than that of sucrose, and may be a naturally occurring compound, a synthetic compound, and a combination of a naturally occurring compound and a synthetic compound. The high-intensity sweetener, in an amount equivalent to sucrose, exhibits sweetness 5 times or more, 10 times or more, 50 times or more, 100 times or more, 500 times or more, 1000 times or more, 5000 times or more, 10000 times or more, 50000 times or more, or 100000 times or more as that of sucrose. The high-intensity sweetener exhibits extremely intense sweetness in this way. When the existence of the natural sugar and high-intensity sweetener in the flavored water of the present invention is expressed in a weight ratio, "natural sugar:high-intensity sweetener" is 5:1 to 10:1, 50:1 to 100:1, 50:1 to 200:1, 500:1 to 1000:1, 5000:1 to 10000:1, and 50000:1 to 100000:1.

In the present invention, as the high-intensity sweetener, at least one high-intensity sweetener b1 selected from the group consisting of rebaudioside M, rebaudioside D, rebaudioside N, rebaudioside O, rebaudioside E, Luo han guo extract, mogroside V, and thaumatin is used.

The content of the high-intensity sweetener b1 based on the total amount (100 mass%) of the high-intensity sweetener as the component (b) is preferably 50 mass% or more, more preferably 60 mass% or more, further preferably 70 mass% or more, more further preferably 80 mass% or more, and particularly preferably 90 mass% or more. In an aspect of the present invention, the high-intensity sweetener as the component (b) may substantially consist of the high-intensity sweetener b1. In the present specification, the phrase "substantially consist of the high-intensity sweetener b1" means that impurities, such as other steviol glycoside and mogroside, which are inevitably included in the process (e.g. purification of a stevia extract or a Luo han guo extract or biosynthesis) of preparing the high-intensity sweetener b1 may be included.

Rebaudioside M, rebaudioside D, rebaudioside N, rebaudioside O, and rebaudioside E may be directly extracted from stevia or may be obtained by attaching glucose to a compound having another structure contained in a stevia extract.

The Luo han guo extract as a sweetener is an extract of Luo han guo containing a sweet substance derived from Luo han guo, and has been approved as a food additive in various countries including Japan and is commercially available. Examples of the sweet substance derived from Luo han guo include mogroside V, mogroside IV, 11-oxo-mogroside V, and Siamenoside I.

Mogroside V is one of the major mogrol glycosides contained in Luo han guo, and it has been reported that it has a good-quality sweetness property close to sucrose when compared with rebaudioside A. In addition, the degree of sweetness of mogroside V is about 300 times that of sucrose (Murata Y. et al., Nippon Shokuhin Kagaku Kogaku Kaishi, Vol. 53, No. 10, 527 to 533, (2006)). Mogroside V can be obtained from a Luo han guo extract (e.g. an alcohol extract of Luo han guo) through purification by chromatography or the like. Alternatively, mogroside V may be obtained by attaching glucose to a compound having another structure contained in a Luo han guo extract.

The Luo han guo extract preferably contains mogroside V and the ratio thereof is not limited and can be 10 wt% or more, 15 wt% or more, 20 wt% or more, 25 wt% or more, 30 wt% or more, 35 wt% or more, 40 wt% or more, 45 wt% or more, 50 wt% or more, 55 wt% or more, 60 wt% or more, 65 wt% or more, 70 wt% or more, and 75 wt% or more, of the total dry weight of a Luo han guo extract. The content of mogroside V can be determined by a known technique such as liquid chromatography. The Luo han guo extract can be obtained by extracting a fruit of Luo han guo (Siraitia grosvenorii) with a suitable solvent (for example, an aqueous solvent such as water, an alcohol solvent such as ethanol or methanol, a mixed solvent of an aqueous solvent and an alcohol solvent such as water-containing ethanol or water-containing methanol), and then optionally carrying out a treatment such as degreasing, purification, concentration, and drying.

Mogroside V may be one having a high purity, for example, a purity of 80% or more, 85% or more, 90% or more, 91% or more, 92% or more, 93% or more, 94% or more, 95% or more, 96% or more, 97% or more, or 98% or more. In mogroside V obtained by purifying a Luo han guo extract, understandably, the amount of Luo han guo extract components other than mogroside V is decreased with an increase in purity.

Thaumatin is a protein-based sweetener extracted from a plant.

In the present invention, an optional high-intensity sweetener b2 may be used in combination with the above-described high-intensity sweetener b1, as needed. Specific examples of the optional high-intensity sweetener b2 include peptide-based sweeteners, such as aspartame, neotame, and alitame; sucrose derivatives, such as sucralose; synthetic sweeteners, such as acesulfame K, saccharine, advantame, cyclamate, and dulcin; protein-based sweeteners extracted from plants, such as monellin, curculin, and brazzein, other than thaumatin; high-intensity sweeteners other than protein-based sweetener extracted from plants; tourmaline; and neohesperidin dihydrochalcone.

The sucrose derivative is that obtained by substituting the OH group or the H group of sucrose with another substituent, and examples thereof include halogen derivatives of sucrose (sucralose), oxathiazinonedioxide derivatives, sugar alcohols, aldonic acid, and uronic acid.

Examples of the high-intensity sweetener other than the protein-based sweeteners extracted from plants include sweeteners present in a stevia extract, other than rebaudioside M, rebaudioside D, rebaudioside N, rebaudioside O, and rebaudioside E; sweeteners present in a Luo han guo extract, other than mogroside V; sweeteners present in a Glycyrrhiza extract; and glycosides thereof, and also include monatin and glycyrrhizin.

Examples of the sweetener present in a stevia extract, other than rebaudioside M, rebaudioside D, rebaudioside N, rebaudioside O, and rebaudioside E and the glycoside thereof include steviol, stevioside, rebaudioside A, rebaudioside B, and rebaudioside C.

Examples of the sweetener present in a Luo han guo extract, other than mogroside V and the glycoside thereof include mogroside IV.

The Glycyrrhiza extract refers to that obtained from roots or rhizomes of Glycyrrhiza uralensis Fisher, Glycyrrhiza inflata Batalin, or Glycyrrhiza glabra Linne and having glycyrrhizic acid as a main component. Examples of the Glycyrrhiza extract include a Glycyrrhiza extract, glycyrrhizin, and a licorice extract.

In the present invention, the high-intensity sweetener b1 is suitable at least one selected from the group consisting of rebaudioside M, rebaudioside D, Luo han guo extract, mogroside V, and combinations thereof. In particular, rebaudioside D, rebaudioside M, or a mixture of rebaudioside D and rebaudioside M is suitable as the high-intensity sweetener b1.

Rebaudioside D and rebaudioside M have less negative flavor, such as astringent taste and metallic taste, than is observed in rebaudioside A and have characteristics, such as good-quality sweetness, and they are expected to be used in the fields of food and drink (NIPPON KAGAKU KAISHI, (5), (1981), 726-735, "Sweet Diterpene-Glycoside of Leaves of Stevia rebaudiana Bertoni Synthesis and Structure-Sweetness Relationship of Rebaudiosides-A, -D, -E and Their Related glycosides", Kasai, Kaneda, Tanaka, Yamasaki, Sakamoto, Morimoto, Okada, Kitahata, and Furukawa). Thus, rebaudioside D and rebaudioside M when used alone are excellent in that they have less odd taste compared to rebaudioside A and sweetness close to sucrose. Rebaudioside D and rebaudioside M each have sweetness about 200 times that of sucrose.

Examples of the combination of the high-intensity sweeteners b1 and the combination of the high-intensity sweetener b1 and the optional high-intensity sweetener b2 include the following. Specifically, the examples include combinations of rebaudioside D and rebaudioside M; rebaudioside D and rebaudioside A; rebaudioside M and rebaudioside A; rebaudioside M and mogroside V; rebaudioside D and mogroside V; rebaudioside D and advantame; rebaudioside D and acesulfame K; rebaudioside D and sucralose; rebaudioside M, rebaudioside D, and rebaudioside A; rebaudioside M, rebaudioside D, and mogroside V; rebaudioside M, rebaudioside D, and advantame; rebaudioside M, rebaudioside D, and acesulfame K; rebaudioside M, rebaudioside D, and sucralose; rebaudioside A, rebaudioside M, rebaudioside D, and mogroside V; rebaudioside A, rebaudioside M, mogroside V, and sucralose; rebaudioside D, rebaudioside M, mogroside V, and acesulfame K; rebaudioside M, rebaudioside A, mogroside V, and neohesperidin dihydrochalcone; and rebaudioside M, rebaudioside D, sucralose, neohesperidin dihydrochalcone, and brazzein.

In addition, the examples include combinations of rebaudioside D and mogroside V; rebaudioside D and Luo han guo extract; rebaudioside M and Luo han guo extract; rebaudioside M, rebaudioside D, and Luo han guo extract; rebaudioside A, rebaudioside M, rebaudioside D, and Luo han guo extract; rebaudioside A, rebaudioside M, Luo han guo extract, and sucralose; rebaudioside D, rebaudioside M, Luo han guo extract, and acesulfame K; and rebaudioside M, rebaudioside A, Luo han guo extract, and neohesperidin dihydrochalcone.

X2 of "the sweetness intensity X2" may be 0.05 to 0.5, 0.05 to 1.0, 0.05 to 1.5, 0.05 to 2.0, 0.05 to 2.5, 0.05 to 3.0, 0.05 to 3.5, 0.05 to 4.0, 0.05 to 4.5, 0.05 to 5.0, 0.05 to 5.5, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, 3.0 to 5.5, 2.0 to 6.5, 2.0 to 7.0, 2.0 to 7.5, 2.0 to 6.0, 2.5 to 7.0, 2.5 to 7.5, 2.5 to 6.0, 2.5 to 6.5, 3.0 to 6.0, 3.0 to 6.5, 3.0 to 7.0, 3.0 to 7.5, 3.0 to 8.0, 3.0 to 8.5, 3.0 to 9.0, 3.0 to 9.5, 3.5 to 7.0, 3.5 to 7.5, 3.5 to 8.0, 4.5 to 8.5, 3.5 to 9.0, 3.5 to 9.5, 4.0 to 7.5, 4.0 to 8.0, 4.0 to 8.5, 4.0 to 9.0, 4.0 to 9.5, 3.5 to 8.5, 3.5 to 10.0, 3.5 to 10.5, 3.5 to 11.0, 3.5 to 11.5, or 4.0 to 11.5.

X2 may also be 0.05 to 6.0, 0.05 to 6.5, 0.05 to 7.0, 0.05 to 7.5, 0.05 to 8.0, 0.05 to 8.5, 0.05 to 9.0, 0.05 to 9.5, 0.05 to 10.0, 0.05 to 10.5, 0.05 to 11.0, 0.05 to 11.5, 0.05 to 12.0, 0.05 to 13.0, 0.05 to 14.0, 0.05 to 15.0, 0.05 to 16.0, 0.05 to 17.0, 0.05 to 18.0, 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11.0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 10.0, 3.0 to 10.5, 3.0 to 11.0, 3.0 to 11.5, 3.0 to 12.0, 3.0 to 13.0, 3.0 to 14.0, 3.0 to 15.0, 3.0 to 16.0, 3.0 to 17.0, 3.0 to 18.0, 3.5 to 4.0, 3.5 to 4.5, 3.5 to 5.0, 3.5 to 5.5, 3.5 to 6.0, 3.5 to 6.5, 3.5 to 12.0, 3.5 to 13.0, 3.5 to 14.0, 3.5 to 15.0, 3.5 to 16.0, 3.5 to 17.0, 3.5 to 18.0, 4.0 to 4.5, 4.0 to 5.0, 4.0 to 5.5, 4.0 to 6.0, 4.0 to 6.5, 4.0 to 7.0, 4.0 to 10.0, 4.0 to 10.5, 4.0 to 11.0, 4.0 to 12.0, 4.0 to 13.0, 4.0 to 14.0, 4.0 to 15.0, 4.0 to 16.0, 4.0 to 17.0, or 4.0 to 18.0.

The amount corresponding to a sweetness intensity X2 of a high-intensity sweetener refers to an amount which provides sweetness of a sweetness intensity X2 under the conditions when the high-intensity sweetener is dissolved in water having the same volume as the flavored water of the present invention at 20°C.

As in natural sugar, also here, the sweetness intensity means the sweetness exhibited by a substance. For example, when the sweetness intensity exhibited by sucrose per unit concentration Brix 1 is defined as a degree of sweetness of 1, the degree of sweetness of rebaudioside D is 200 to 250 (center value 225), the degree of sweetness of rebaudioside M is 200 to 260 (center value 230), the degree of sweetness of rebaudioside N is 200 to 250 (center value 225), the degree of sweetness of rebaudioside O is 200 to 250 (center value 225), the degree of sweetness of rebaudioside E is 70 to 80 (center value 75), the degree of sweetness of a Luo han guo extract is 110 to 150 (center value 130), the degree of sweetness of mogroside V is 240 to 300 (center value 270), and the degree of sweetness of thaumatin is 2,000. The numerical value obtained by multiplying these degrees of sweetness by the concentration (w/v% (considered to be the same as w/w% in the case of a beverage)) of the high-intensity sweetener in the flavored water is the sweetness intensity of the high-intensity sweetener. When calculating the sweetness intensity in the present invention, the sweetness intensity of a high-intensity sweetener showing a range in the degree of sweetness, the center value is used unless otherwise noted.

Further, the amount of high-intensity sweetener can be P2 ppm and P2 ppm herein refers to an amount corresponding to a sweetness intensity X2. The P2 herein can be a value of 20 to 550, 25 to 550, 30 to 550, 35 to 550, 40 to 550, 45 to 550, 50 to 550, 55 to 550, 20 to 540, 25 to 540, 30 to 540, 35 to 540, 40 to 540, 45 to 540, 50 to 540, 55 to 540, 20 to 530, 25 to 530, 30 to 530, 35 to 530, 40 to 530, 45 to 530, 50 to 530, 55 to 530, 20 to 520, 25 to 520, 30 to 520, 35 to 520, 40 to 520, 45 to 520, 50 to 520, 55 to 520, 20 to 510, 25 to 510, 30 to 510, 35 to 510, 40 to 510, 45 to 510, 50 to 510, 55 to 510, 20 to 505, 25 to 505, 30 to 505, 35 to 505, 40 to 505, 45 to 505, 50 to 505, 55 to 505, 20 to 500, 25 to 500, 30 to 500, 35 to 500, 40 to 500, 45 to 500, 50 to 500, 55 to 500, 20 to 495, 25 to 495, 30 to 495, 35 to 495, 40 to 495, 45 to 495, 50 to 495, 55 to 495, 20 to 490, 25 to 490, 30 to 490, 35 to 490, 40 to 490, 45 to 490, 50 to 490, or 55 to 490.

The P2 can also be a value of 1 to 1500, 1 to 1200, 5 to 1200, 1 to 1000, 5 to 1000, 10 to 1000, 1 to 900, 5 to 900, 10 to 900, 15 to 900, 20 to 900, 25 to 900, 30 to 900, 35 to 900, 40 to 900, 45 to 900, 50 to 900, 55 to 900, 1 to 800, 5 to 800, 10 to 800, 15 to 800, 20 to 800, 25 to 800, 30 to 800, 35 to 800, 40 to 800, 45 to 800, 50 to 800, 55 to 800, 1 to 700, 5 to 700, 10 to 700, 15 to 700, 20 to 700, 25 to 700, 30 to 700, 35 to 700, 40 to 700, 45 to 700, 50 to 700, 55 to 700, 1 to 600, 5 to 600, 10 to 600, 15 to 600, 20 to 600, 25 to 600, 30 to 600, 35 to 600, 40 to 600, 45 to 600, 50 to 600, 55 to 600, 1 to 550, 1 to 540, 1 to 530, 1 to 520, 1 to 510, 1 to 505, 1 to 500, 1 to 495, 1 to 490, 5 to 550, 5 to 540, 5 to 530, 5 to 520, 5 to 510, 5 to 505, 5 to 500, 5 to 495, 5 to 490, 10 to 550, 10 to 540, 10 to 530, 10 to 520, 10 to 510, 10 to 505, 10 to 500, 10 to 495, 10 to 490, 15 to 550, 15 to 550, 15 to 530, 15 to 520, 15 to 510, 15 to 505, 15 to 500, 15 to 495, or 15 to 490.

### Sodium

The present invention contains (c) less than 40 mg/100ml of sodium, which means that the amount of sodium atoms is less than 40 mg/100ml of sodium. The amount of sodium (or sodium content) may be 0.1g/100ml to less than 40mg/100ml, 0.1 to 39mg/100ml, 0.1 to 38mg/100ml, 0.1 to 37mg/100ml, 0.1 to 36mg/100ml, 0.1 to 35mg/100ml, 0.1 to 34mg/100ml, 0.1 to 33mg/100ml, 0.1 to 32mg/100ml, 0.1 to 31mg/100ml, 0.1 to 30mg/100ml, 0.1 to 29mg/100ml, 0.1 to 28mg/100ml, 0.1 to 27mg/100ml, 0.1 to 26mg/100ml, 0.1 to 25mg/100ml, 0.1 to 24mg/100ml, 0.1 to 23mg/100ml, 0.1 to 22mg/100ml, 0.1 to 21mg/100ml, 0.1 to 20mg/100ml, 0.1 to 19mg/100ml, 0.1 to 18mg/100ml, 0.1 to 17mg/100ml, 0.1 to 16mg/100ml, 0.1 to 15mg/100ml, 0.1 to 14mg/100ml, 0.1 to 13mg/100ml, 0.1 to 12mg/100ml, 0.1 to 11mg/100ml, 0.1 to 10mg/100ml, 1g/100ml to less than 40mg/100ml, 1 to 39mg/100ml, 1 to 38mg/100ml, 1 to 37mg/100ml, 1 to 36mg/100ml, 1 to 35mg/100ml, 1 to 34mg/100ml, 1 to 33mg/100ml, 1 to 32mg/100ml, 1 to 31mg/100ml, 1 to 30mg/100ml, 1 to 29mg/100ml, 1 to 28mg/100ml, 1 to 27mg/100ml, 1 to 26mg/100ml, 1 to 25mg/100ml, 1 to 24mg/100ml, 1 to 23mg/100ml, 1 to 22mg/100ml, 1 to 21mg/100ml, 1 to 20mg/100ml, 1 to 19mg/100ml, 1 to 18mg/100ml, 1 to 17mg/100ml, 1 to 16mg/100ml, 1 to 15mg/100ml, 1 to 14mg/100ml, 1 to 13mg/100ml, 1 to 12mg/100ml, 1 to 11mg/100ml, 1 to 10mg/100ml, 5g/100ml to less than 40mg/100ml, 5 to 39mg/100ml, 5 to 38mg/100ml, 5 to 37mg/100ml, 5 to 36mg/100ml, 5 to 35mg/100ml, 5 to 34mg/100ml, 5 to 33mg/100ml, 5 to 32mg/100ml, 5 to 31mg/100ml, 5 to 30mg/100ml, 5 to 29mg/100ml, 5 to 28mg/100ml, 5 to 27mg/100ml, 5 to 26mg/100ml, 5 to 25mg/100ml, 5 to 24mg/100ml, 5 to 23mg/100ml, 5 to 22mg/100ml, 5 to 21mg/100ml, 5 to 20mg/100ml, 5 to 19mg/100ml, 5 to 18mg/100ml, 5 to 17mg/100ml, 5 to 16mg/100ml, 5 to 15mg/100ml, 5 to 14mg/100ml, 5 to 13mg/100ml, 5 to 12mg/100ml, 5 to 11mg/100ml, 5 to 10mg/100ml, 10g/100ml to less than 40mg/100ml, 10 to 39mg/100ml, 10 to 38mg/100ml, 10 to 37mg/100ml, 10 to 36mg/100ml, 10 to 35mg/100ml, 10 to 34mg/100ml, 10 to 33mg/100ml, 10 to 32mg/100ml, 10 to 31mg/100ml, 10 to 30mg/100ml, 10 to 29mg/100ml, 10 to 28mg/100ml, 10 to 27mg/100ml, 10 to 26mg/100ml, 10 to 25mg/100ml, 10 to 24mg/100ml, 10 to 23mg/100ml, 10 to 22mg/100ml, 10 to 21mg/100ml, 10 to 20mg/100ml, 15g/100ml to less than 40mg/100ml, 15 to 39mg/100ml, 15 to 38mg/100ml, 15 to 37mg/100ml, 15 to 36mg/100ml, 15 to 35mg/100ml, 15 to 34mg/100ml, 15 to 33mg/100ml, 15 to 32mg/100ml, 15 to 31mg/100ml, 15 to 30mg/100ml, 20g/100ml to less than 40mg/100ml, 20 to 39mg/100ml, 20 to 38mg/100ml, 20 to 37mg/100ml, 20 to 36mg/100ml, 20 to 35mg/100ml, 20 to 34mg/100ml, 20 to 33mg/100ml, 20 to 32mg/100ml, 20 to 31mg/100ml, 20 to 30mg/100ml, 25g/100ml to less than 40mg/100ml, 25 to 39mg/100ml, 25 to 38mg/100ml, 25 to 37mg/100ml, 25 to 36mg/100ml, or 25 to 35mg/100ml.

The amount of sodium may be 0.1 to 22mg/100ml, 0.1 to 21mg/100ml, 1 to 22mg/100ml, 1 to 21mg/100ml, 4 to 40mg/100ml, 4 to 35mg/100ml, 4 to 34mg/100ml, 4 to 33mg/100ml, 4 to 32mg/100ml, 4 to 31mg/100ml, 4 to 30mg/100ml, 4 to 29mg/100ml, 4 to 26mg/100ml, 4 to 25mg/100ml, 4 to 22mg/100ml, 4 to 21mg/100ml, 4 to 20mg/100ml, 4 to 19mg/100ml, 4 to 18mg/100ml, 4 to 17mg/100ml, 4 to 16mg/100ml, 4 to 15mg/100ml, 4 to 14mg/100ml, 4 to 13mg/100ml, 4 to 12mg/100ml, 4 to 11mg/100ml, 4 to 10mg/100ml, 5 to 34mg/100ml, 5 to 33mg/100ml, 5 to 32mg/100ml, 5 to 31mg/100ml, 5 to 29mg/100ml, 5 to 22mg/100ml, 5 to 21mg/100ml, 10 to 34mg/100ml, 10 to 33mg/100ml, 10 to 32mg/100ml, 10 to 31mg/100ml, 10 to 29mg/100ml, 10 to 22mg/100ml, 10 to 21mg/100ml, 11.5 to 34mg/100ml, 11.5 to 33mg/100ml, 11.5 to 32mg/100ml, 11.5 to 31mg/100ml, 11.5 to 30mg/100ml, 11.5 to 29mg/100ml, 11.5 to 22mg/100ml, 11.5 to 21mg/100ml, 11.5 to 20mg/100ml, 11.5 to 19mg/100ml, 11.5 to 18mg/100ml, 11.5 to 17mg/100ml, 11.5 to 16mg/100ml, 11.5 to 15mg/100ml, 11.5 to 14mg/100ml, 11.5 to 13mg/100ml, 11.5 to 12mg/100ml, 5.75 to 34.5mg/100ml, 5.75 to 28.75mg/100ml, 5.75 to 23mg/100ml, 5.75 to 17.25mg/100ml, 5.75 to 11.5mg/100ml, 11.5 to 34.5mg/100ml, 11.5 to 28.75mg/100ml, 11.5 to 23mg/100ml, 11.5 to 17.25mg/100ml, 17.25 to 34.5mg/100ml, 17.25 to 28.75mg/100ml, 17.25 to 23mg/100ml, 23 to 34.5mg/100ml, 23 to 28.75mg/100ml, or 28.75 to 34.5mg/100ml.

In addition, the amount of sodium that is added to a flavored water may be 0.1g/100ml to less than 40mg/100ml, 0.1 to 39mg/100ml, 0.1 to 38mg/100ml, 0.1 to 37mg/100ml, 0.1 to 35mg/100ml, 0.1 to 30mg/100ml, 0.1 to 25mg/100ml, 0.1 to 20mg/100ml, 0.1 to 19mg/100ml, 0.1 to 18mg/100ml, 0.1 to 17mg/100ml, 0.1 to 16mg/100ml, 0.1 to 15mg/100ml, 0.1 to 14mg/100ml, 0.1 to 13mg/100ml, 0.1 to 12mg/100ml, 0.1 to 11mg/100ml, 0.1 to 10mg/100ml, 1g/100ml to less than 40mg/100ml, 1 to 39mg/100ml, 1 to 38mg/100ml, 1 to 37mg/100ml, 1 to 35mg/100ml, 1 to 30mg/100ml, 1 to 25mg/100ml, 1 to 20mg/100ml, 1 to 19mg/100ml, 1 to 18mg/100ml, 1 to 17mg/100ml, 1 to 16mg/100ml, 1 to 15mg/100ml, 1 to 14mg/100ml, 1 to 13mg/100ml, 1 to 12mg/100ml, 1 to 11mg/100ml, 1 to 10mg/100ml, 5g/100ml to less than 40mg/100ml, 5 to 39mg/100ml, 5 to 38mg/100ml, 5 to 37mg/100ml, 5 to 35mg/100ml, 5 to 30mg/100ml, 5 to 25mg/100ml, 5 to 20mg/100ml, 5 to 19mg/100ml, 5 to 18mg/100ml, 5 to 17mg/100ml, 5 to 16mg/100ml, 5 to 15mg/100ml, 5 to 14mg/100ml, 5 to 13mg/100ml, 5 to 12mg/100ml, 5 to 11mg/100ml, 5 to 10mg/100ml, 10g/100ml to less than 40mg/100ml, 10 to 39mg/100ml, 10 to 38mg/100ml, 10 to 37mg/100ml, 10 to 35mg/100ml, 10 to 30mg/100ml, 10 to 25mg/100ml, 10 to 20mg/100ml, 10 to 19mg/100ml, 10 to 18mg/100ml, 10 to 17mg/100ml, 10 to 16mg/100ml, 10 to 15mg/100ml, 10g/100ml to less than 40mg/100ml, 15 to 39mg/100ml, 15 to 38mg/100ml, 15 to 37mg/100ml, 15 to 35mg/100ml, 15 to 30mg/100ml, 15 to 25mg/100ml, 15 to 20mg/100ml, 20g/100ml to less than 40mg/100ml, 20 to 39mg/100ml, 20 to 38mg/100ml, 20 to 37mg/100ml, 20 to 35mg/100ml, 20 to 30mg/100ml, 20 to 25mg/100ml, 25g/100ml to less than 40mg/100ml, 25 to 39mg/100ml, 25 to 38mg/100ml, 25 to 37mg/100ml, 25 to 35mg/100ml, or 25 to 30mg/100ml.

The form of the sodium is not particularly limited provided that sodium in an ingestible state is contained in the flavored water of the present invention, and may be in at least one form selected from the group consisting of sodium chloride, sodium hydroxide, sodium malate, sodium sulfate, sodium citrate, sodium phosphate, sodium carbonate, sodium disulfide, sodium bicarbonate, sodium alginate, sodium argininate, sodium glucoheptanoate, sodium gluconate, sodium glutamate, sodium tartrate, sodium aspartate, sodium lactate, sodium caseinate, sodium ascorbate, and mixtures thereof, for example.

In addition, when a flavor, a fruit juice and an extract, etc. in a flavor water contains a sodium, the sodium derived from them is also encompassed in sodium in the flavored water of the present invention.

In an aspect of the present invention, sodium derived from a sodium component that is used as a preservative (e.g. sodium benzoate, sodium sulfite, sodium hyposulfite, sodium dehydroacetate, sodium pyrosulfite, or sodium propionate) is not substantially included in the component (c).

In the present specification, the sodium content in a beverage can be measured by atomic absorption spectrometry. Incidentally, when the amount of a sodium-containing compound contained in the beverage is known, the value calculated from the amount may be used.

### Potassium

The present invention may contain less than 70 mg/100ml of potassium. This means that the amount of potassium atom in a flavored water is less than 70 mg/100ml. The amount of potassium (or potassium content) may be 0.1 to less than 70 mg/100ml, 0.1 to 65 mg/100ml, 0.1 to 60 mg/100ml, 0.1 to 55 mg/100ml, 0.1 to 50 mg/100ml, 0.1 to 45 mg/100ml, 0.1 to 40 mg/100ml, 0.1 to 35 mg/100ml, 0.1 to 30 mg/100ml, 0.1 to 25 mg/100ml, 0.1 to 20 mg/100ml, 0.1 to 19 mg/100ml, 0.1 to 18 mg/100ml, 0.1 to 17 mg/100ml, 0.1 to 16 mg/100ml, 0.1 to 15 mg/100ml, 0.1 to 14mg/100ml, 0.1 to 13 mg/100ml, 0.1 to 12 mg/100ml, 0.1 to 11mg/100ml, 0.1 to 10 mg/100ml, 0.5 to less than 70mg/100ml, 0.5 to 65mg/100ml, 0.5 to 60 mg/100ml, 0.5 to 55 mg/100ml, 0.5 to 50 mg/100ml, 0.5 to 45 mg/100ml, 0.5 to 40 mg/100ml, 0.5 to 35 mg/100ml, 0.5 to 30 mg/100ml, 0.5 to 25 mg/100ml, 0.5 to 20 mg/100ml, 0.5 to 19 mg/100ml, 0.5 to 18 mg/100ml, 0.5 to 17 mg/100ml, 0.5 to 16 mg/100ml, 0.5 to 15 mg/100ml, 0.5 to 14 mg/100ml, 0.5 to 13 mg/100ml, 0.5 to 12 mg/100ml, 0.5 to 11 mg/100ml, 0.5 to 10 mg/100ml, 1 to less than 70 mg/100ml, 1 to 65 mg/100ml, 1 to 60 mg/100ml, 1 to 55 mg/100ml, 1 to 50 mg/100ml, 1 to 45 mg/100ml, 1 to 40 mg/100ml, 1 to 35 mg/100ml, 1 to 30 mg/100ml, 1 to 25 mg/100ml, 1 to 20 mg/100ml, 1 to 19 mg/100ml, 1 to 18 mg/100ml, 1 to 17 mg/100ml, 1 to 16 mg/100ml, 1 to 15 mg/100ml, 1 to 14 mg/100ml, 1 to 13 mg/100ml, 1 to 12 mg/100ml, 1 to 11 mg/100ml, 1 to 10 mg/100ml, 5 to less than 70 mg/100ml, 5 to 65 mg/100ml, 5 to 60 mg/100ml, 5 to 55 mg/100ml, 5 to 50 mg/100ml, 5 to 45 mg/100ml, 5 to 40 mg/100ml, 5 to 35 mg/100ml, 5 to 30 mg/100ml, 5 to 25 mg/100ml, 5 to 20 mg/100ml, 5 to 19 mg/100ml, 5 to 18 mg/100ml, 5 to 17 mg/100ml, 5 to 16 mg/100ml, 5 to 15 mg/100ml, 5 to 14 mg/100ml, 5 to 13 mg/100ml, 5 to 12 mg/100ml, 5 to 11 mg/100ml, 5 to 10 mg/100ml, 7 to less than 70mg/100ml, 7 to 65 mg/100ml, 7 to 60 mg/100ml, 7 to 55 mg/100ml, 7 to 50 mg/100ml, 7 to 45 mg/100ml, 7 to 40 mg/100ml, 7 to 35 mg/100ml, 7 to 30 mg/100ml, 7 to 25 mg/100ml, 7 to 20 mg/100ml, 7 to 19 mg/100ml, 7 to 18 mg/100ml, 7 to 17 mg/100ml, 7 to 16 mg/100ml, 7 to 15 mg/100ml, 10 to less than 70 mg/100ml, 10 to 65 mg/100ml, 10 to 60 mg/100ml, 10 to 55 mg/100ml, 10 to 50 mg/100ml, 10 to 45 mg/100ml, 10 to 40 mg/100ml, 10 to 35 mg/100ml, 10 to 30 mg/100ml, 10 to 25 mg/100ml, 10 to 20 mg/100ml, 10 to 19 mg/100ml, 10 to 18 mg/100ml, 10 to 17 mg/100ml, 10 to 16 mg/100ml, 10 to 15 mg/100ml, 15 to less than 70 mg/100ml, 15 to 65 mg/100ml, 15 to 60 mg/100ml, 15 to 55 mg/100ml, 15 to 50 mg/100ml, 15 to 45 mg/100ml, 15 to 40 mg/100ml, 15 to 35 mg/100ml, 15 to 30 mg/100ml, 15 to 25 mg/100ml, 15 to 20 mg/100ml, 20 to less than 70 mg/100ml, 20 to 65 mg/100ml, 20 to 60 mg/100ml, 20 to 55 mg/100ml, 20 to 50 mg/100ml, 20 to 45 mg/100ml, 20 to 40 mg/100ml, 20 to 35 mg/100ml, 20 to 30 mg/100ml, 20 to 25 mg/100ml, 25 to less than 70 mg/100ml, 25 to 65 mg/100ml, 25 to 60 mg/100ml, 25 to 55 mg/100ml, 25 to 50 mg/100ml, 25 to 45 mg/100ml, 25 to 40 mg/100ml, 25 to 35 mg/100ml, or 25 to 30 mg/100ml, depending on embodiments.

In addition, the amount of potassium that is added to a flavored water may be 0.1 to 50 mg/100ml, 0.1 to 45 mg/100ml, 0.1 to 40 mg/100ml, 0.1 to 35 mg/100ml, 0.1 to 30 mg/100ml, 0.1 to 25 mg/100ml, 0.1 to 20 mg/100ml, 0.1 to 19 mg/100ml, 0.1 to 18 mg/100ml, 0.1 to 17 mg/100ml, 0.1 to 16 mg/100ml, 0.1 to 15 mg/100ml, 0.1 to 14 mg/100ml, 0.1 to 13 mg/100ml, 0.1 to 12 mg/100ml, 0.1 to 11 mg/100ml, 0.1 to 10 mg/100ml, 0.5 to 50 mg/100ml, 0.5 to 45 mg/100ml, 0.5 to 40 mg/100ml, 0.5 to 35 mg/100ml, 0.5 to 30 mg/100ml, 0.5 to 25 mg/100ml, 0.5 to 20 mg/100ml, 0.5 to 19 mg/100ml, 0.5 to 18 mg/100ml, 0.5 to 17 mg/100ml, 0.5 to 16 mg/100ml, 0.5 to 15 mg/100ml, 0.5 to 14 mg/100ml, 0.5 to 13 mg/100ml, 0.5 to 12 mg/100ml, 0.5 to 11 mg/100ml, 0.5 to 10 mg/100ml, 1 to 50 mg/100ml, 1 to 45 mg/100ml, 1 to 40 mg/100ml, 1 to 35 mg/100ml, 1 to 30 mg/100ml, 1 to 25 mg/100ml, 1 to 20 mg/100ml, 1 to 19 mg/100ml, 1 to 18 mg/100ml, 1 to 17 mg/100ml, 1 to 16 mg/100ml, 1 to 15 mg/100ml, 1 to 14 mg/100ml, 1 to 13 mg/100ml, 1 to 12 mg/100ml, 1 to 11 mg/100ml, 1 to 10 mg/100ml, 5 to 50 mg/100ml, 5 to 45 mg/100ml, 5 to 40 mg/100ml, 5 to 35 mg/100ml, 5 to 30 mg/100ml, 5 to 25 mg/100ml, 5 to 20 mg/100ml, 5 to 19 mg/100ml, 5 to 18 mg/100ml, 5 to 17 mg/100ml, 5 to 16 mg/100ml, 5 to 15 mg/100ml, 5 to 14 mg/100ml, 5 to 13 mg/100ml, 5 to 12 mg/100ml, 5 to 11 mg/100ml, 5 to 10 mg/100ml, 7 to 50 mg/100ml, 7 to 45 mg/100ml, 7 to 40 mg/100ml, 7 to 35 mg/100ml, 7 to 30 mg/100ml, 7 to 25 mg/100ml, 7 to 20 mg/100ml, 7 to 19 mg/100ml, 7 to 18 mg/100ml, 7 to 17 mg/100ml, 7 to 16 mg/100ml, 7 to 15 mg/100ml, 10 to 50 mg/100ml, 10 to 45 mg/100ml, 10 to 40 mg/100ml, 10 to 35 mg/100ml, 10 to 30 mg/100ml, 10 to 25 mg/100ml, 10 to 20 mg/100ml, 10 to 19 mg/100ml, 10 to 18 mg/100ml, 10 to 17 mg/100ml, 10 to 16 mg/100ml, 10 to 15 mg/100ml, 15 to 50 mg/100ml, 15 to 45 mg/100ml, 15 to 40 mg/100ml, 15 to 35 mg/100ml, 15 to 30 mg/100ml, 15 to 25 mg/100ml, 15 to 20 mg/100ml, 20 to 50 mg/100ml, 20 to 45 mg/100ml, 20 to 40 mg/100ml, 20 to 35 mg/100ml, 20 to 30 mg/100ml, 20 to 25 mg/100ml, 25 to 50 mg/100ml, 25 to 45 mg/100ml, 25 to 40 mg/100ml, 25 to 35 mg/100ml, or 25 to 30 mg/100ml.

The form of the potassium is not particularly limited as long as it is contained in the flavored water of the present invention in an ingestible state. For example, the form may be at least one form selected from the group consisting of potassium alginate, potassium chloride, potassium citrate, potassium gluconate, L-potassium glutamate, potassium bromate, DL-potassium hydrogen tartrate, L-potassium hydrogen tartrate, potassium nitrate, potassium hydroxide, potassium sorbate, potassium carbonate, potassium lactate, potassium norbixin, potassium pyrosulfate, tetrapotassium pyrophosphate, potassium ferrocyanide, potassium polyphosphate, potassium metaphosphate, potassium aluminum sulfate, potassium sulfate, tripotassium phosphate, dipotassium hydrogen phosphate, potassium dihydrogen phosphate, and mixtures thereof.

In addition, when potassium is contained in the flavor, the fruit juice, the extract, and the like contained in the flavored water, potassium derived from these is also included in the potassium contained in the flavored water of the present invention.

In the present specification, the content of potassium in a beverage can be measured by atomic absorption spectrometry. Incidentally, when the amount of a potassium-containing compound contained in the beverage is known, the value calculated from the amount may be used.

### Calcium

The present invention may contain (d) less than 70 mg/100ml of calcium, which means that the amount of calcium atoms is less than 70 mg/100ml. The amount of calcium (or calcium content) may be the amount of 0.1g/100ml to less than 70mg/100ml, 0.1 to 65mg/100ml, 0.1 to 60mg/100ml, 0.1 to 55mg/100ml, 0.1 to 50mg/100ml, 0.1 to 45mg/100ml, 0.1 to 40mg/100ml, 0.1 to 35mg/100ml, 0.1 to 30mg/100ml, 0.1 to 25mg/100ml, 0.1 to 20mg/100ml, 0.1 to 19mg/100ml, 0.1 to 18mg/100ml, 0.1 to 17mg/100ml, 0.1 to 16mg/100ml, 0.1 to 15mg/100ml, 0.1 to 14mg/100ml, 0.1 to 13mg/100ml, 0.1 to 12mg/100ml, 0.1 to 11mg/100ml, 0.1 to 10mg/100ml, 0.5g/100ml to less than 70mg/100ml, 0.5 to 65mg/100ml, 0.5 to 60mg/100ml, 0.5 to 55mg/100ml, 0.5 to 50mg/100ml, 0.5 to 45mg/100ml, 0.5 to 40mg/100ml, 0.5 to 35mg/100ml, 0.5 to 30mg/100ml, 0.5 to 25mg/100ml, 0.5 to 20mg/100ml, 0.5 to 19mg/100ml, 0.5 to 18mg/100ml, 0.5 to 17mg/100ml, 0.5 to 16mg/100ml, 0.5 to 15mg/100ml, 0.5 to 14mg/100ml, 0.5 to 13mg/100ml, 0.5 to 12mg/100ml, 0.5 to 11mg/100ml, 0.5 to 10mg/100ml, 1g/100ml to less than 70mg/100ml, 1 to 65mg/100ml, 1 to 60mg/100ml, 1 to 55mg/100ml, 1 to 50mg/100ml, 1 to 45mg/100ml, 1 to 40mg/100ml, 1 to 35mg/100ml, 1 to 30mg/100ml, 1 to 25mg/100ml, 1 to 20mg/100ml, 1 to 19mg/100ml, 1 to 18mg/100ml, 1 to 17mg/100ml, 1 to 16mg/100ml, 1 to 15mg/100ml, 1 to 14mg/100ml, 1 to 13mg/100ml, 1 to 12mg/100ml, 1 to 11mg/100ml, 1 to 10mg/100ml, 5g/100ml to less than 70mg/100ml, 5 to 65mg/100ml, 5 to 60mg/100ml, 5 to 55mg/100ml, 5 to 50mg/100ml, 5 to 45mg/100ml, 5 to 40mg/100ml, 5 to 35mg/100ml, 5 to 30mg/100ml, 5 to 25mg/100ml, 5 to 20mg/100ml, 5 to 19mg/100ml, 5 to 18mg/100ml, 5 to 17mg/100ml, 5 to 16mg/100ml, 5 to 15mg/100ml, 5 to 14mg/100ml, 5 to 13mg/100ml, 5 to 12mg/100ml, 5 to 11mg/100ml, 5 to 10mg/100ml, 7g/100ml to less than 70mg/100ml, 7 to 65mg/100ml, 7 to 60mg/100ml, 7 to 55mg/100ml, 7 to 50mg/100ml, 7 to 45mg/100ml, 7 to 40mg/100ml, 7 to 35mg/100ml, 7 to 30mg/100ml, 7 to 25mg/100ml, 7 to 20mg/100ml, 7 to 19mg/100ml, 7 to 18mg/100ml, 7 to 17mg/100ml, 7 to 16mg/100ml, 7 to 15mg/100ml, 10g/100ml to less than 70mg/100ml, 10 to 65mg/100ml, 10 to 60mg/100ml, 10 to 55mg/100ml, 10 to 50mg/100ml, 10 to 45mg/100ml, 10 to 40mg/100ml, 10 to 35mg/100ml, 10 to 30mg/100ml, 10 to 25mg/100ml, 10 to 20mg/100ml, 10 to 19mg/100ml, 10 to 18mg/100ml, 10 to 17mg/100ml, 10 to 16mg/100ml, 10 to 15mg/100ml, 15g/100ml to less than 70mg/100ml, 15 to 65mg/100ml, 15 to 60mg/100ml, 15 to 55mg/100ml, 15 to 50mg/100ml, 15 to 45mg/100ml, 15 to 40mg/100ml, 15 to 35mg/100ml, 15 to 30mg/100ml, 15 to 25mg/100ml, 15 to 20mg/100ml, 20g/100ml to less than 70mg/100ml, 20 to 65mg/100ml, 20 to 60mg/100ml, 20 to 55mg/100ml, 20 to 50mg/100ml, 20 to 45mg/100ml, 20 to 40mg/100ml, 20 to 35mg/100ml, 20 to 30mg/100ml, 20 to 25mg/100ml, 25g/100ml to less than 70mg/100ml, 25 to 65mg/100ml, 25 to 60mg/100ml, 25 to 55mg/100ml, 25 to 50mg/100ml, 25 to 45mg/100ml, 25 to 40mg/100ml, 25 to 35mg/100ml, or 25 to 30mg/100ml, depending on embodiments.

In addition, the amount of calcium that is added to a flavored water may be 0.1 to 50mg/100ml, 0.1 to 45mg/100ml, 0.1 to 40mg/100ml, 0.1 to 35mg/100ml, 0.1 to 30mg/100ml, 0.1 to 25mg/100ml, 0.1 to 20mg/100ml, 0.1 to 19mg/100ml, 0.1 to 18mg/100ml, 0.1 to 17mg/100ml, 0.1 to 16mg/100ml, 0.1 to 15mg/100ml, 0.1 to 14mg/100ml, 0.1 to 13mg/100ml, 0.1 to 12mg/100ml, 0.1 to 11mg/100ml, 0.1 to 10mg/100ml, 0.5 to 50mg/100ml, 0.5 to 45mg/100ml, 0.5 to 40mg/100ml, 0.5 to 35mg/100ml, 0.5 to 30mg/100ml, 0.5 to 25mg/100ml, 0.5 to 20mg/100ml, 0.5 to 19mg/100ml, 0.5 to 18mg/100ml, 0.5 to 17mg/100ml, 0.5 to 16mg/100ml, 0.5 to 15mg/100ml, 0.5 to 14mg/100ml, 0.5 to 13mg/100ml, 0.5 to 12mg/100ml, 0.5 to 11mg/100ml, 0.5 to 10mg/100ml, 1 to 50mg/100ml, 1 to 45mg/100ml, 1 to 40mg/100ml, 1 to 35mg/100ml, 1 to 30mg/100ml, 1 to 25mg/100ml, 1 to 20mg/100ml, 1 to 19mg/100ml, 1 to 18mg/100ml, 1 to 17mg/100ml, 1 to 16mg/100ml, 1 to 15mg/100ml, 1 to 14mg/100ml, 1 to 13mg/100ml, 1 to 12mg/100ml, 1 to 11mg/100ml, 1 to 10mg/100ml, 5 to 50mg/100ml, 5 to 45mg/100ml, 5 to 40mg/100ml, 5 to 35mg/100ml, 5 to 30mg/100ml, 5 to 25mg/100ml, 5 to 20mg/100ml, 5 to 19mg/100ml, 5 to 18mg/100ml, 5 to 17mg/100ml, 5 to 16mg/100ml, 5 to 15mg/100ml, 5 to 14mg/100ml, 5 to 13mg/100ml, 5 to 12mg/100ml, 5 to 11mg/100ml, 5 to 10mg/100ml, 7 to 50mg/100ml, 7 to 45mg/100ml, 7 to 40mg/100ml, 7 to 35mg/100ml, 7 to 30mg/100ml, 7 to 25mg/100ml, 7 to 20mg/100ml, 7 to 19mg/100ml, 7 to 18mg/100ml, 7 to 17mg/100ml, 7 to 16mg/100ml, 7 to 15mg/100ml, 10 to 50mg/100ml, 10 to 45mg/100ml, 10 to 40mg/100ml, 10 to 35mg/100ml, 10 to 30mg/100ml, 10 to 25mg/100ml, 10 to 20mg/100ml, 10 to 19mg/100ml, 10 to 18mg/100ml, 10 to 17mg/100ml, 10 to 16mg/100ml, 10 to 15mg/100ml, 15 to 50mg/100ml, 15 to 45mg/100ml, 15 to 40mg/100ml, 15 to 35mg/100ml, 15 to 30mg/100ml, 15 to 25mg/100ml, 15 to 20mg/100ml, 20 to 50mg/100ml, 20 to 45mg/100ml, 20 to 40mg/100ml, 20 to 35mg/100ml, 20 to 30mg/100ml, 20 to 25mg/100ml, 25 to 50mg/100ml, 25 to 45mg/100ml, 25 to 40mg/100ml, 25 to 35mg/100ml, or 25 to 30mg/100ml.

The form of the calcium is not particularly limited as long as it is contained in the flavored water of the present invention in an ingestible state. For example, the form may be at least one form selected from the group consisting of L-calcium ascorbate, calcium alginate, calcium disodium ethylenediaminetetraacetate, calcium chloride, calcium carboxymethyl cellulose, calcium citrate, calcium glycerophosphate, calcium gluconate, L-calcium glutamate, calcium silicate, calcium acetate, calcium oxide, calcium hydroxide, calcium stearate, calcium stearoyl lactate, calcium sorbate, calcium carbonate, calcium lactate, calcium pantothenate, calcium dihydrogen pyrophosphate, calcium ferrocyanide, calcium propionate, calcium 5'-ribonucleotide, calcium sulfate, tricalcium phosphate, calcium monohydrogen phosphate, calcium dihydrogen phosphate, and mixtures thereof.

In addition, when a fruit juice contains a calcium, the calcium contained in the fruit juice is also encompassed in calcium of the flavored water of the present invention.

Incidentally, for example, when an additive containing two or more atoms selected from sodium, potassium, and calcium, such as calcium disodium ethylenediaminetetraacetate, is added, the amount thereof is adjusted such that the amounts of sodium, potassium, and calcium are within the above-mentioned ranges.

In the present specification, the content of calcium in a beverage can be measured by ICP emission spectrometry. Incidentally, when the amount of a calcium-containing compound contained in the beverage is known, the value calculated from the amount may be used.

The flavored water of the present invention has an enhanced sweetness as having been already mentioned. Whether or not the sweetness of the flavored water of the present invention is enhanced can be evaluated by panelists who have received sensory training. Further, for the sweetness intensity X3 of the flavored water of the present invention, standard flavored waters to be the sweetness standards are prepared with sucrose concentrations assigned as sweetness intensities 1, 2, 3, 4, 5, 6, 7, 8, 9, 10, 11, 12, 13, 14, and 15 and panelists compare the sweetness of the flavored water of the present invention with the sweetnesses of these standard flavored waters thereby to measure the sweetness of the flavored water of the present invention. Note that the standard flavored waters having a sweetness intensity of 1, 2, ... 15 are prepared by adding sucrose in such a way that a sucrose content is 1 g/100 g, 2 g/100 g, ... 15 g/100 g to the flavored water to which sucrose is not added.

Furthermore, of the standard flavored waters having a lower sweetness than the flavored water of the present invention in the above measurement, the standard flavored water having the closest sweetness to that of the flavored water of the present invention is selected and adjusted in such a way as to have the same sweetness as that of the flavored water of the present invention by adding sucrose to the selected standard flavored water, during which a sweetness intensity X3 of the flavored water of the present invention can also be measured from a sucrose content in the adjusted standard flavored water.

Other examples of the method for measuring a sweetness of the flavored water of the present invention include a sweetness intensity rating using Visual Analogue Scale (VAS method). For the VAS method, literature in The journal of Japanese Society of Stomatognathic Function (2014) 20 pp. 115-129 ("Construction of a Screening Test for Gustatory Function in Four Basic Tastes" by Toyota et al.) and the like can be referred. Specifically, in the measurement of sweetness intensity by the VAS method, for example, evaluators define sweetness intensities as "not sweet at all" at the lower end and "nothing is sweeter than this" at the upper end and, using a piece of paper on which a vertical line indicating the intensities of sweetness on the straight line, assess a sweetness intensity sensed at that time by showing a position on the straight line.

The sweetness intensity X3 exhibited by the flavored water of the present invention may be 4.0 to 20, 4.0 to 15, 4.0 to 12. 5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, or 10.5 to 12.5. Alternatively, X3 may be 4.0 to 18, 4.0 to 16, 4.0 to 15.5, 4.0 to 14, 4.5 to 18, 4.5 to 16, 4.5 to 15.5, 4.5 to 14, 5.0 to 18, 5.0 to 16, 5.0 to 15.5, 5.0 to 14, 5.5 to 18, 5.5 to 16, 5.5 to 15.5, 5.5 to 14, 6.0 to 18, 6.0 to 16, 6.0 to 15.5, 6.0 to 14, 6.5 to 18, 6.5 to 16, 6.5 to 15.5, 6.5 to 14, 7.0 to 18, 7.0 to 16, 7.0 to 15.5, 7.0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9.0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16, or 10.5 to 15.5.

In a certain embodiment, the flavored water of the present invention is a flavored water comprising:
(a) natural sugar in an amount corresponding to a sweetness intensity X1 of 0.1 to 5;
(b) high-intensity sweetener in an amount corresponding to a sweetness intensity X2 of 0.1 to 5;
(c) less than 40 mg/100 ml of sodium; and
(d) less than 70 mg/100 ml of potassium and/or less than 70 mg/100 ml of calcium,
wherein the flavored water has a sweetness of a sweetness intensity X3 exhibited by the components (a) to (d) of 5.5 to 12.5.

In another embodiment, the flavored water of the present invention is a flavored water comprising:
(a) natural sugar in an amount corresponding to a sweetness intensity X1 of 3 to 5;
(b) high-intensity sweetener in an amount corresponding to a sweetness intensity X2 of 1 to 5;
(c) 5 to 35 mg/100 ml of sodium; and
(d) 0.1 to 60 mg/100 ml of potassium and/or 0.1 to 60 mg/100 ml of calcium,
wherein the flavored water has a sweetness of a sweetness intensity X3 exhibited by the components (a) to (d) of 5.5 to 12.5. Preferably, in the flavored water of the present invention, further, the energy is 30 Kcal/100 ml or less and X1 + X2 is 6 or more.

In the flavored water of the present invention, the sweetness intensity X1 of the natural sugar, the sweetness intensity X2 of the high-intensity sweetener, the sodium content, the potassium and/or calcium content, the sweetness intensity X3 exhibited by the flavored water, and the energy of the flavored water can each be any value as long as 0.1 < (X1 + X2) ≤ 20 is satisfied, and for example, any of the numerical values of the sweetness intensity X1, the sweetness intensity X2, the sodium content, the potassium and/or calcium content, the sweetness intensity X3, and the energy shown below can also be combined.

"The sweetness intensity X1": 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.5 to 2.0, 1.5 to 2.5, 1.5 to 3.0, 1.5 to 3.5, 1.5 to 4.0, 1.5 to 4.5, 1.5 to 5.0, 2.0 to 2.5, 2.0 to 3.0, 2.0 to 3.5, 2.0 to 4.0, 2.0 to 4.5, 2.0 to 5.0, 2.5 to 3.0, 2.5 to 3.5, 2.5 to 4.0, 2.5 to 4.5, 2.5 to 5.0, 3.0 to 3.5, 3.0 to 4.0, 3.0 to 4.5, or 3.0 to 5.0.

"The sweetness intensity X2": 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.5 to 2.0, 1.5 to 2.5, 1.5 to 3.0, 1.5 to 3.5, 1.5 to 4.0, 1.5 to 4.5, 1.5 to 5.0, 2.0 to 2.5, 2.0 to 3.0, 2.0 to 3.5, 2.0 to 4.0, 2.0 to 4.5, 2.0 to 5.0, 2.5 to 3.0, 2.5 to 3.5, 2.5 to 4.0, 2.5 to 4.5, 2.5 to 5.0, 3.0 to 3.5, 3.0 to 4.0, 3.0 to 4.5, or 3.0 to 5.0.

"The amount of sodium": 5 to 35mg/100ml, 5 to 34mg/100ml, 5 to 33mg/100ml, 5 to 32mg/100ml, 5 to 31mg/100ml, 5 to 30mg/100ml, 5 to 29mg/100ml, 5 to 28mg/100ml, 5 to 27mg/100ml, 5 to 26mg/100ml, 5 to 25mg/100ml, 5 to 24mg/100ml, 5 to 23mg/100ml, 5 to 22mg/100ml, 5 to 21mg/100ml, 5 to 20mg/100ml, 10 to 35mg/100ml, 10 to 34mg/100ml, 10 to 33mg/100ml, 10 to 32mg/100ml, 10 to 31mg/100ml, 10 to 30mg/100ml, 10 to 29mg/100ml, 10 to 28mg/100ml, 10 to 27mg/100ml, 10 to 26mg/100ml, 10 to 25mg/100ml, 10 to 24mg/100ml, 10 to 23mg/100ml, 10 to 22mg/100ml, 10 to 21mg/100ml, 10 to 20mg/100ml, 15 to 35mg/100ml, 15 to 34mg/100ml, 15 to 33mg/100ml, 15 to 32mg/100ml, 15 to 31mg/100ml, 15 to 30mg/100ml, 15 to 29mg/100ml, 15 to 28mg/100ml, 15 to 27mg/100ml, 15 to 26mg/100ml, 15 to 25mg/100ml, 20 to 35mg/100ml, 20 to 34mg/100ml, 20 to 33mg/100ml, 20 to 32mg/100ml, 20 to 31mg/100ml, 20 to 30mg/100ml, 20 to 29mg/100ml, 20 to 28mg/100ml, 20 to 27mg/100ml, 20 to 26mg/100ml, or 20 to 25mg/100ml.

"The amount of potassium": 0.1 to 60mg/100ml, 0.1 to 55mg/100ml, 0.1 to 50mg/100ml, 0.1 to 45mg/100ml, 0.1 to 40mg/100ml, 0.1 to 39mg/100ml, 0.1 to 38mg/100ml, 0.1 to 37mg/100ml, 0.1 to 36mg/100ml, 0.1 to 35mg/100ml, 0.1 to 34mg/100ml, 0.1 to 33mg/100ml, 0.1 to 32mg/100ml, 0.1 to 31mg/100ml, 0.1 to 30mg/100ml, 0.5 to 60mg/100ml, 0.5 to 55mg/100ml, 0.5 to 50mg/100ml, 0.5 to 45mg/100ml, 0.5 to 40mg/100ml, 0.5 to 39mg/100ml, 0.5 to 38mg/100ml, 0.5 to 37mg/100ml, 0.5 to 36mg/100ml, 0.5 to 35mg/100ml, 0.5 to 34mg/100ml, 0.5 to 33mg/100ml, 0.5 to 32mg/100ml, 0.5 to 31mg/100ml, 0.5 to 30mg/100ml, 1 to 60mg/100ml, 1 to 55mg/100ml, 1 to 50mg/100ml, 1 to 45mg/100ml, 1 to 40mg/100ml, 1 to 39mg/100ml, 1 to 38mg/100ml, 1 to 37mg/100ml, 1 to 36mg/100ml, 1 to 35mg/100ml, 1 to 34mg/100ml, 1 to 33mg/100ml, 1 to 32mg/100ml, 1 to 31mg/100ml, 1 to 30mg/100ml, 5 to 60mg/100ml, 5 to 55mg/100ml, 5 to 50mg/100ml, 5 to 45mg/100ml, 5 to 40mg/100ml, 5 to 39mg/100ml, 5 to 38mg/100ml, 5 to 37mg/100ml, 5 to 36mg/100ml, 5 to 35mg/100ml, 5 to 34mg/100ml, 5 to 33mg/100ml, 5 to 32mg/100ml, 5 to 31mg/100ml, 5 to 30mg/100ml, 7 to 60mg/100ml, 7 to 55mg/100ml, 7 to 50mg/100ml, 7 to 45mg/100ml, 7 to 40mg/100ml, 7 to 39mg/100ml, 7 to 38mg/100ml, 7 to 37mg/100ml, 7 to 36mg/100ml, 7 to 35mg/100ml, 7 to 34mg/100ml, 7 to 33mg/100ml, 7 to 32mg/100ml, 7 to 31mg/100ml, 7 to 30mg/100ml, 10 to 60mg/100ml, 10 to 55mg/100ml, 10 to 50mg/100ml, 10 to 45mg/100ml, 10 to 40mg/100ml, 10 to 39mg/100ml, 10 to 38mg/100ml, 10 to 37mg/100ml, 10 to 36mg/100ml, 10 to 35mg/100ml, 10 to 34mg/100ml, 10 to 33mg/100ml, 10 to 32mg/100ml, 10 to 31mg/100ml, 10 to 30mg/100ml, 15 to 60mg/100ml, 15 to 55mg/100ml, 15 to 50mg/100ml, 15 to 45mg/100ml, 15 to 40mg/100ml, 15 to 39mg/100ml, 15 to 38mg/100ml, 15 to 37mg/100ml, 15 to 36mg/100ml, 15 to 35mg/100ml, 15 to 34mg/100ml, 15 to 33mg/100ml, 15 to 32mg/100ml, 15 to 31mg/100ml, 15 to 30mg/100ml, 20 to 60mg/100ml, 20 to 55mg/100ml, 20 to 50mg/100ml, 20 to 45mg/100ml, 20 to 40mg/100ml, 20 to 39mg/100ml, 20 to 38mg/100ml, 20 to 37mg/100ml, 20 to 36mg/100ml, 20 to 35mg/100ml, 25 to 60mg/100ml, 25 to 55mg/100ml, 25 to 50mg/100ml, 25 to 45mg/100ml, or 25 to 40mg/100ml.

"The amount of calcium": 0.1 to 60mg/100ml, 0.1 to 55mg/100ml, 0.1 to 50mg/100ml, 0.1 to 45mg/100ml, 0.1 to 40mg/100ml, 0.1 to 39mg/100ml, 0.1 to 38mg/100ml, 0.1 to 37mg/100ml, 0.1 to 36mg/100ml, 0.1 to 35mg/100ml, 0.1 to 34mg/100ml, 0.1 to 33mg/100ml, 0.1 to 32mg/100ml, 0.1 to 31mg/100ml, 0.1 to 30mg/100ml, 0.5 to 60mg/100ml, 0.5 to 55mg/100ml, 0.5 to 50mg/100ml, 0.5 to 45mg/100ml, 0.5 to 40mg/100ml, 0.5 to 39mg/100ml, 0.5 to 38mg/100ml, 0.5 to 37mg/100ml, 0.5 to 36mg/100ml, 0.5 to 35mg/100ml, 0.5 to 34mg/100ml, 0.5 to 33mg/100ml, 0.5 to 32mg/100ml, 0.5 to 31mg/100ml, 0.5 to 30mg/100ml, 1 to 60mg/100ml, 1 to 55mg/100ml, 1 to 50mg/100ml, 1 to 45mg/100ml, 1 to 40mg/100ml, 1 to 39mg/100ml, 1 to 38mg/100ml, 1 to 37mg/100ml, 1 to 36mg/100ml, 1 to 35mg/100ml, 1 to 34mg/100ml, 1 to 33mg/100ml, 1 to 32mg/100ml, 1 to 31mg/100ml, 1 to 30mg/100ml, 5 to 60mg/100ml, 5 to 55mg/100ml, 5 to 50mg/100ml, 5 to 45mg/100ml, 5 to 40mg/100ml, 5 to 39mg/100ml, 5 to 38mg/100ml, 5 to 37mg/100ml, 5 to 36mg/100ml, 5 to 35mg/100ml, 5 to 34mg/100ml, 5 to 33mg/100ml, 5 to 32mg/100ml, 5 to 31mg/100ml, 5 to 30mg/100ml, 7 to 60mg/100ml, 7 to 55mg/100ml, 7 to 50mg/100ml, 7 to 45mg/100ml, 7 to 40mg/100ml, 7 to 39mg/100ml, 7 to 38mg/100ml, 7 to 37mg/100ml, 7 to 36mg/100ml, 7 to 35mg/100ml, 7 to 34mg/100ml, 7 to 33mg/100ml, 7 to 32mg/100ml, 7 to 31mg/100ml, 7 to 30mg/100ml, 10 to 60mg/100ml, 10 to 55mg/100ml, 10 to 50mg/100ml, 10 to 45mg/100ml, 10 to 40mg/100ml, 10 to 39mg/100ml, 10 to 38mg/100ml, 10 to 37mg/100ml, 10 to 36mg/100ml, 10 to 35mg/100ml, 10 to 34mg/100ml, 10 to 33mg/100ml, 10 to 32mg/100ml, 10 to 31mg/100ml, 10 to 30mg/100ml, 15 to 60mg/100ml, 15 to 55mg/100ml, 15 to 50mg/100ml, 15 to 45mg/100ml, 15 to 40mg/100ml, 15 to 39mg/100ml, 15 to 38mg/100ml, 15 to 37mg/100ml, 15 to 36mg/100ml, 15 to 35mg/100ml, 15 to 34mg/100ml, 15 to 33mg/100ml, 15 to 32mg/100ml, 15 to 31mg/100ml, 15 to 30mg/100ml, 20 to 60mg/100ml, 20 to 55mg/100ml, 20 to 50mg/100ml, 20 to 45mg/100ml, 20 to 40mg/100ml, 20 to 39mg/100ml, 20 to 38mg/100ml, 20 to 37mg/100ml, 20 to 36mg/100ml, 20 to 35mg/100ml, 25 to 60mg/100ml, 25 to 55mg/100ml, 25 to 50mg/100ml, 25 to 45mg/100ml, or 25 to 40mg/100ml.

"The sweetness intensity X3": 4.0 to 20, 4.0 to 15, 4.0 to 12. 5, 4.0 to 10, 4.5 to 20, 4.5 to 15, 4.5 to 12.5, 4.5 to 10, 5.0 to 20, 5.0 to 15, 5.0 to 12. 5, 5.0 to 10, 5.5 to 20, 5.5 to 15, 5.5 to 12.5, 5.5 to 10, 6.0 to 20, 6.0 to 15, 6.0 to 12. 5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, or 10.5 to 12.5.

The energy: 0 to 30Kcal/100ml, 0 to 25Kcal/100ml, 0 to 20Kcal/100ml, 0 to 15Kcal/100ml, 0 to 10Kcal/100ml, 0 to 5Kcal/100ml, 5 to 30Kcal/100ml, 5 to 25Kcal/100ml, 5 to 20Kcal/100ml, 5 to 15Kcal/100ml, 5 to 10Kcal/100ml, 10 to 30Kcal/100ml, 10 to 25Kcal/100ml, 10 to 20Kcal/100ml, 10 to 15Kcal/100ml, 15 to 30Kcal/100ml, 15 to 25Kcal/100ml, 15 to 20Kcal/100ml, 20 to 30Kcal/100ml, 20 to 25Kcal/100ml, or 25 to 30Kcal/100ml.

In addition, in the present invention, the sweetness intensity X1 of the natural sugar, the sweetness intensity X2 of the high-intensity sweetener, the sodium content, the potassium and/or calcium content, the sweetness intensity X3 exhibited by the flavored water, and the energy of the flavored water are not limited to combinations of the numerical values exemplified above, and any of the numerical values of the sweetness intensity X1, the sweetness intensity X2, the sodium content, the potassium and/or calcium content, the sweetness intensity X3, and the energy described herein can also be combined in a range that satisfies 0.1 < (X1 + X2) ≤ 20.

In the flavored water of the present invention, an acidulant (phosphoric acid, or the like), a vitamin, an antioxidant (sodium erythorbate, or the like), an emulsifier (sucrose fatty acid ester, sorbitan fatty acid ester, polyglycerin fatty acid ester, or the like), a preservative, a pH adjuster, a quality stabilizer, or the like can further be appropriately blended as long as the effects of the present invention are not impaired.

In a specific embodiment, the present invention provides the following flavored water (hereinafter, referred to as "flavored water A of the present invention").

A flavored water comprising:
(a) natural sugar in an amount corresponding to a sweetness intensity X1;
(b) high-intensity sweetener selected from the group consisting of rebaudioside M, rebaudioside D, and combinations thereof in an amount corresponding to a sweetness intensity X2;
(c) 5 to 35 mg/100 ml of sodium; and
(d) 0.5 to 50 mg/100 ml of potassium and/or 0.5 to 50 mg/100 ml of calcium,
wherein the flavored water has a sweetness of a sweetness intensity X3 exhibited by the components (a) to (d), and 0.1 < (X1 + X2) ≤ 20 is satisfied.

In flavored water A of the present invention, the preferable ranges of the sweetness intensity X1, the sweetness intensity X2, the sodium content, the potassium and/or calcium content, the sweetness intensity X3, the high-intensity sweetener concentration P2, and the energy are, for example, as follows. These numerical values can be arbitrarily combined in a range that satisfies 0.1 < (X1 + X2) ≤ 20.

"The sweetness intensity X1": 0.05 to 0.5, 0.05 to 1.0, 0.05 to 1.5, 0.05 to 2.0, 0.05 to 2.5, 0.05 to 3.0, 0.05 to 3.5, 0.05 to 4.0, 0.05 to 4.5, 0.05 to 5.0, 0.05 to 5.5, 0.05 to 6.0, 0.05 to 6.5, 0.05 to 7.0, 0.05 to 7.5, 0.05 to 8.0, 0.05 to 8.25, 0.05 to 8.5, 0.05 to 8.75, 0.05 to 9.0, 0.05 to 9.25, 0.05 to 9.5, 0.05 to 9.75, 0.05 to 10.0, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.1 to 5.9, 0.1 to 6.0, 0.1 to 6.5, 0.1 to 7.0, 0.1 to 7.5, 0.1 to 8.0, 0.1 to 8.25, 0.1 to 8.5, 0.1 to 8.75, 0.1 to 9.0, 0.1 to 9.25, 0.1 to 9.5, 0.1 to 9.75, 0.1 to 10.0, 0.5 to 0.5, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 0.5 to 6.0, 0.5 to 6.5, 0.5 to 7.0, 0.5 to 7.5, 0.5 to 8.0, 0.5 to 8.25, 0.5 to 8.5, 0.5 to 8.75, 0.5 to 9.0, 0.5 to 9.25, 0.5 to 9.5, 0.5 to 9.75, 0.5 to 10.0, 1.0 to 0.5, 1.0 to 1.0, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.0 to 6.0, 1.0 to 6.5, 1.0 to 7.0, 1.0 to 7.5, 1.0 to 8.0, 1.0 to 8.25, 1.0 to 8.5, 1.0 to 8.75, 1.0 to 9.0, 1.0 to 9.25, 1.0 to 9.5, 1.0 to 9.75, 1.0 to 10.0, 1.5 to 0.5, 1.5 to 1.0, 1.5 to 1.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 1.5 to 6.0, 1.5 to 6.5, 1.5 to 7.0, 1.5 to 7.5, 1.5 to 8.0, 1.5 to 8.25, 1.5 to 8.5, 1.5 to 8.75, 1.5 to 9.0, 1.5 to 9.25, 1.5 to 9.5, 1.5 to 9.75, 1.5 to 10.0, 2.0 to 0.5, 2.0 to 1.0, 2.0 to 1.5, 2.0 to 2.0, 2.0 to 2.5, 2.0 to 3.0, 2.0 to 3.5, 2.0 to 4.0, 2.0 to 4.5, 2.0 to 5.0, 2.0 to 5.5, 2.0 to 6.0, 2.0 to 6.5, 2.0 to 7.0, 2.0 to 7.5, 2.0 to 8.0, 2.0 to 8.25, 2.0 to 8.5, 2.0 to 8.75, 2.0 to 9.0, 2.0 to 9.25, 2.0 to 9.5, 2.0 to 9.75, 2.0 to 10.0, 2.5 to 0.5, 2.5 to 1.0, 2.5 to 1.5, 2.5 to 2.0, 2.5 to 2.5, 2.5 to 3.0, 2.5 to 3.5, 2.5 to 4.0, 2.5 to 4.5, 2.5 to 5.0, 2.5 to 5.5, 2.5 to 6.0, 2.5 to 6.5, 2.5 to 7.0, 2.5 to 7.5, 2.5 to 8.0, 2.5 to 8.25, 2.5 to 8.5, 2.5 to 8.75, 2.5 to 9.0, 2.5 to 9.25, 2.5 to 9.5, 2.5 to 9.75, or 2.5 to 10.0. More preferably, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.1 to 5.9, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, or 3.0 to 5.5.

"The sweetness intensity X2": 0.05 to 0.5, 0.05 to 1.0, 0.05 to 1.5, 0.05 to 2.0, 0.05 to 2.5, 0.05 to 3.0, 0.05 to 3.5, 0.05 to 4.0, 0.05 to 4.5, 0.05 to 5.0, 0.05 to 5.5, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, 3.0 to 5.5, 2.0 to 6.5, 2.0 to 7.0, 2.0 to 7.5, 2.0 to 6.0, 2.5 to 7.0, 2.5 to 7.5, 2.5 to 6.0, 2.5 to 6.5, 3.0 to 6.0, 3.0 to 6.5, 3.0 to 7.0, 3.0 to 7.5, 3.0 to 8.0, 3.0 to 8.5, 3.0 to 9.0, 3.0 to 9.5, 3.5 to 7.0, 3.5 to 7.5, 3.5 to 8.0, 4.5 to 8.5, 3.5 to 9.0, 3.5 to 9.5, 4.0 to 7.5, 4.0 to 8.0, 4.0 to 8.5, 4.0 to 9.0, 4.0 to 9.5, 3.5 to 8.5, 3.5 to 10.0, 3.5 to 10.5, 3.5 to 11.0, 3.5 to 11.5, 4.0 to 11.5, 0.05 to 6.0, 0.05 to 6.5, 0.05 to 7.0, 0.05 to 7.5, 0.05 to 8.0, 0.05 to 8.5, 0.05 to 9.0, 0.05 to 9.5, 0.05 to 10.0, 0.05 to 10.5, 0.05 to 11.0, 0.05 to 11.5, 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 2.0 to 8.0, 2.0 to 8.5, 2.0 to 9.0, 2.0 to 9.5, 2.0 to 10.0, 2.0 to 10.5, 2.0 to 11.0, 2.0 to 11.5, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 3.0 to 10.0, 3.0 to 10.5, 3.0 to 11.0, 3.0 to 11.5, 3.5 to 4.0, 3.5 to 4.5, 3.5 to 5.0, 3.5 to 5.5, 3.5 to 6.0, 3.5 to 6.5, 4.0 to 4.5, 4.0 to 5.0, 4.0 to 5.5, 4.0 to 6.0, 4.0 to 6.5, 4.0 to 7.0, 4.0 to 10.0, 4.0 to 10.5, or 4.0 to 11.0. More preferably, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, or 3.0 to 5.5.

"The amount of sodium": 5 to 35mg/100ml, 5 to 34mg/100ml, 5 to 33mg/100ml, 5 to 32mg/100ml, 5 to 31mg/100ml, 5 to 30mg/100ml, 5 to 29mg/100ml, 5 to 28mg/100ml, 5 to 27mg/100ml, 5 to 26mg/100ml, 5 to 25mg/100ml, 5 to 24mg/100ml, 5 to 23mg/100ml, 5 to 22mg/100ml, 5 to 21mg/100ml, 5 to 20mg/100ml, 10 to 35mg/100ml, 10 to 34mg/100ml, 10 to 33mg/100ml, 10 to 32mg/100ml, 10 to 31mg/100ml, 10 to 30mg/100ml, 10 to 29mg/100ml, 10 to 28mg/100ml, 10 to 27mg/100ml, 10 to 26mg/100ml, 10 to 25mg/100ml, 10 to 24mg/100ml, 10 to 23mg/100ml, 10 to 22mg/100ml, 10 to 21mg/100ml, 10 to 20mg/100ml, 15 to 35mg/100ml, 15 to 34mg/100ml, 15 to 33mg/100ml, 15 to 32mg/100ml, 15 to 31mg/100ml, 15 to 30mg/100ml, 15 to 29mg/100ml, 15 to 28mg/100ml, 15 to 27mg/100ml, 15 to 26mg/100ml, 15 to 25mg/100ml, 20 to 35mg/100ml, 20 to 34mg/100ml, 20 to 33mg/100ml, 20 to 32mg/100ml, 20 to 31mg/100ml, 20 to 30mg/100ml, 20 to 29mg/100ml, 20 to 28mg/100ml, 20 to 27mg/100ml, 20 to 26mg/100ml, or 20 to 25mg/100ml.

"The amount of potassium": 0.5 to 45mg/100ml, 0.5 to 40mg/100ml, 0.5 to 39mg/100ml, 0.5 to 38mg/100ml, 0.5 to 37mg/100ml, 0.5 to 36mg/100ml, 0.5 to 35mg/100ml, 0.5 to 34mg/100ml, 0.5 to 33mg/100ml, 0.5 to 32mg/100ml, 0.5 to 31mg/100ml, 0.5 to 30mg/100ml, 1 to 45mg/100ml, 1 to 40mg/100ml, 1 to 39mg/100ml, 1 to 38mg/100ml, 1 to 37mg/100ml, 1 to 36mg/100ml, 1 to 35mg/100ml, 1 to 34mg/100ml, 1 to 33mg/100ml, 1 to 32mg/100ml, 1 to 31mg/100ml, 1 to 30mg/100ml, 5 to 45mg/100ml, 5 to 40mg/100ml, 5 to 39mg/100ml, 5 to 38mg/100ml, 5 to 37mg/100ml, 5 to 36mg/100ml, 5 to 35mg/100ml, 5 to 34mg/100ml, 5 to 33mg/100ml, 5 to 32mg/100ml, 5 to 31mg/100ml, 5 to 30mg/100ml, 7 to 45mg/100ml, 7 to 40mg/100ml, 7 to 39mg/100ml, 7 to 38mg/100ml, 7 to 37mg/100ml, 7 to 36mg/100ml, 7 to 35mg/100ml, 7 to 34mg/100ml, 7 to 33mg/100ml, 7 to 32mg/100ml, 7 to 31mg/100ml, 7 to 30mg/100ml, 10 to 45mg/100ml, 10 to 40mg/100ml, 10 to 39mg/100ml, 10 to 38mg/100ml, 10 to 37mg/100ml, 10 to 36mg/100ml, 10 to 35mg/100ml, 15 to 45mg/100ml, 15 to 40mg/100ml, 15 to 39mg/100ml, 15 to 38mg/100ml, 15 to 37mg/100ml, 15 to 36mg/100ml, 15 to 35mg/100ml, 15 to 34mg/100ml, 15 to 33mg/100ml, 15 to 32mg/100ml, 15 to 31mg/100ml, 15 to 30mg/100ml, 20 to 45mg/100ml, 20 to 40mg/100ml, 20 to 39mg/100ml, 20 to 38mg/100ml, 20 to 37mg/100ml, 20 to 36mg/100ml, 20 to 35mg/100ml, 20 to 34mg/100ml, 20 to 33mg/100ml, 20 to 32mg/100ml, 20 to 31mg/100ml, or 20 to 30mg/100ml.

"The amount of calcium": 0.5 to 45mg/100ml, 0.5 to 40mg/100ml, 0.5 to 39mg/100ml, 0.5 to 38mg/100ml, 0.5 to 37mg/100ml, 0.5 to 36mg/100ml, 0.5 to 35mg/100ml, 0.5 to 34mg/100ml, 0.5 to 33mg/100ml, 0.5 to 32mg/100ml, 0.5 to 31mg/100ml, 0.5 to 30mg/100ml, 1 to 45mg/100ml, 1 to 40mg/100ml, 1 to 39mg/100ml, 1 to 38mg/100ml, 1 to 37mg/100ml, 1 to 36mg/100ml, 1 to 35mg/100ml, 1 to 34mg/100ml, 1 to 33mg/100ml, 1 to 32mg/100ml, 1 to 31mg/100ml, 1 to 30mg/100ml, 5 to 45mg/100ml, 5 to 40mg/100ml, 5 to 39mg/100ml, 5 to 38mg/100ml, 5 to 37mg/100ml, 5 to 36mg/100ml, 5 to 35mg/100ml, 5 to 34mg/100ml, 5 to 33mg/100ml, 5 to 32mg/100ml, 5 to 31mg/100ml, 5 to 30mg/100ml, 7 to 45mg/100ml, 7 to 40mg/100ml, 7 to 39mg/100ml, 7 to 38mg/100ml, 7 to 37mg/100ml, 7 to 36mg/100ml, 7 to 35mg/100ml, 7 to 34mg/100ml, 7 to 33mg/100ml, 7 to 32mg/100ml, 7 to 31mg/100ml, 7 to 30mg/100ml, 10 to 45mg/100ml, 10 to 40mg/100ml, 10 to 39mg/100ml, 10 to 38mg/100ml, 10 to 37mg/100ml, 10 to 36mg/100ml, 10 to 35mg/100ml, 15 to 45mg/100ml, 15 to 40mg/100ml, 15 to 39mg/100ml, 15 to 38mg/100ml, 15 to 37mg/100ml, 15 to 36mg/100ml, 15 to 35mg/100ml, 15 to 34mg/100ml, 15 to 33mg/100ml, 15 to 32mg/100ml, 15 to 31mg/100ml, 15 to 30mg/100ml, 20 to 45mg/100ml, 20 to 40mg/100ml, 20 to 39mg/100ml, 20 to 38mg/100ml, 20 to 37mg/100ml, 20 to 36mg/100ml, 20 to 35mg/100ml, 20 to 34mg/100ml, 20 to 33mg/100ml, 20 to 32mg/100ml, 20 to 31mg/100ml, or 20 to 30mg/100ml.

"The sweetness intensity X3": 4.0 to 20, 4.0 to 15, 4.0 to 12. 5, 4.0 to 10, 4.5 to 20, 4.5 to 15, 4.5 to 12.5, 4.5 to 10, 5.0 to 20, 5.0 to 15, 5.0 to 12. 5, 5.0 to 10, 5.5 to 20, 5.5 to 15, 5.5 to 12.5, 5.5 to 10, 6.0 to 20, 6.0 to 15, 6.0 to 12. 5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, or 10.5 to 12.5.

"The amount of a high intensity sweetener P2 (ppm)": 20 to 550, 25 to 550, 30 to 550, 35 to 550, 40 to 550, 45 to 550, 50 to 550, 55 to 550, 20 to 540, 25 to 540, 30 to 540, 35 to 540, 40 to 540, 45 to 540, 50 to 540, 55 to 540, 20 to 530, 25 to 530, 30 to 530, 35 to 530, 40 to 530, 45 to 530, 50 to 530, 55 to 530, 20 to 520, 25 to 520, 30 to 520, 35 to 520, 40 to 520, 45 to 520, 50 to 520, 55 to 520, 20 to 510, 25 to 510, 30 to 510, 35 to 510, 40 to 510, 45 to 510, 50 to 510, 55 to 510, 20 to 505, 25 to 505, 30 to 505, 35 to 505, 40 to 505, 45 to 505, 50 to 505, 55 to 505, 20 to 500, 25 to 500, 30 to 500, 35 to 500, 40 to 500, 45 to 500, 50 to 500, 55 to 500, 20 to 495, 25 to 495, 30 to 495, 35 to 495, 40 to 495, 45 to 495, 50 to 495, 55 to 495, 20 to 490, 25 to 490, 30 to 490, 35 to 490, 40 to 490, 45 to 490, 50 to 490, or 55 to 490.

The energy: 0 to 25Kcal/100ml, 0 to 20Kcal/100ml, 0 to 15Kcal/100ml, 0 to 10Kcal/100ml, 0 to 5Kcal/100ml, 5 to 25Kcal/100ml, 5 to 20Kcal/100ml, 5 to 15Kcal/100ml, 5 to 10Kcal/100ml, 10 to 25Kcal/100ml, 10 to 20Kcal/100ml, 10 to 15Kcal/100ml, 15 to 25Kcal/100ml, 15 to 20Kcal/100ml, 20 to 25Kcal/100ml, 0 to 24Kcal/100ml, 0 to 8Kcal/100ml, 0 to 4Kcal/100ml, 4 to 24Kcal/100ml, 4 to 8Kcal/100ml, or 8 to 24Kcal/100ml.

The natural sugar (including an example of a combination of glucose, sucrose, fructose, maltose, an oligosaccharide, a high-fructose corn syrup, and lactose) and the forms of sodium, potassium, and calcium in flavored water A of the present invention are defined as described in the section of the flavored water of the present invention.

In another specific embodiment, the present invention provides the following flavored water (hereinafter, referred to as "flavored water B of the present invention").

A flavored water comprising:
(a) natural sugar in an amount corresponding to a sweetness intensity X1;
(b) Luo han guo extract in an amount corresponding to a sweetness intensity X2;
(c) 5 to 35 mg/100 ml of sodium; and
(d) 0.5 to 50 mg/100 ml of potassium and/or 0.5 to 50 mg/100 ml of calcium,
wherein the flavored water has a sweetness of a sweetness intensity X3 exhibited by the components (a) to (d), and 0.1 < (X1 + X2) ≤ 20 is satisfied.

In flavored water B of the present invention, the preferable ranges of the sweetness intensity X1, the sweetness intensity X2, the sodium content, the potassium and/or calcium content, the sweetness intensity X3, the luo han guo extract content P2, and the energy are, for example, as follows. These numerical values can be arbitrarily combined in a range that satisfies 0.1 < (X1 + X2) ≤ 20.

"The sweetness intensity X1": 0.05 to 0.5, 0.05 to 1.0, 0.05 to 1.5, 0.05 to 2.0, 0.05 to 2.5, 0.05 to 3.0, 0.05 to 3.5, 0.05 to 4.0, 0.05 to 4.5, 0.05 to 5.0, 0.05 to 5.5, 0.05 to 6.0, 0.05 to 6.5, 0.05 to 7.0, 0.05 to 7.5, 0.05 to 8.0, 0.05 to 8.25, 0.05 to 8.5, 0.05 to 8.75, 0.05 to 9.0, 0.05 to 9.25, 0.05 to 9.5, 0.05 to 9.75, 0.05 to 10.0, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.1 to 5.9, 0.1 to 6.0, 0.1 to 6.5, 0.1 to 7.0, 0.1 to 7.5, 0.1 to 8.0, 0.1 to 8.25, 0.1 to 8.5, 0.1 to 8.75, 0.1 to 9.0, 0.1 to 9.25, 0.1 to 9.5, 0.1 to 9.75, 0.1 to 10.0, 0.5 to 0.5, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 0.5 to 6.0, 0.5 to 6.5, 0.5 to 7.0, 0.5 to 7.5, 0.5 to 8.0, 0.5 to 8.25, 0.5 to 8.5, 0.5 to 8.75, 0.5 to 9.0, 0.5 to 9.25, 0.5 to 9.5, 0.5 to 9.75, 0.5 to 10.0, 1.0 to 0.5, 1.0 to 1.0, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.0 to 6.0, 1.0 to 6.5, 1.0 to 7.0, 1.0 to 7.5, 1.0 to 8.0, 1.0 to 8.25, 1.0 to 8.5, 1.0 to 8.75, 1.0 to 9.0, 1.0 to 9.25, 1.0 to 9.5, 1.0 to 9.75, 1.0 to 10.0, 1.5 to 0.5, 1.5 to 1.0, 1.5 to 1.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 1.5 to 6.0, 1.5 to 6.5, 1.5 to 7.0, 1.5 to 7.5, 1.5 to 8.0, 1.5 to 8.25, 1.5 to 8.5, 1.5 to 8.75, 1.5 to 9.0, 1.5 to 9.25, 1.5 to 9.5, 1.5 to 9.75, 1.5 to 10.0, 2.0 to 0.5, 2.0 to 1.0, 2.0 to 1.5, 2.0 to 2.0, 2.0 to 2.5, 2.0 to 3.0, 2.0 to 3.5, 2.0 to 4.0, 2.0 to 4.5, 2.0 to 5.0, 2.0 to 5.5, 2.0 to 6.0, 2.0 to 6.5, 2.0 to 7.0, 2.0 to 7.5, 2.0 to 8.0, 2.0 to 8.25, 2.0 to 8.5, 2.0 to 8.75, 2.0 to 9.0, 2.0 to 9.25, 2.0 to 9.5, 2.0 to 9.75, 2.0 to 10.0, 2.5 to 0.5, 2.5 to 1.0, 2.5 to 1.5, 2.5 to 2.0, 2.5 to 2.5, 2.5 to 3.0, 2.5 to 3.5, 2.5 to 4.0, 2.5 to 4.5, 2.5 to 5.0, 2.5 to 5.5, 2.5 to 6.0, 2.5 to 6.5, 2.5 to 7.0, 2.5 to 7.5, 2.5 to 8.0, 2.5 to 8.25, 2.5 to 8.5, 2.5 to 8.75, 2.5 to 9.0, 2.5 to 9.25, 2.5 to 9.5, 2.5 to 9.75, 2.5 to 10.0, 0 to 10.5, 0 to 11.0, 0 to 11.5, 0 to 12.0, 0 to 12.5, 0 to 13.0, 0 to 13.5, 0 to 14.0, 0 to 14.5, 0 to 15.0, 0.05 to 10.5, 0.05 to 11.0, 0.05 to 11.5, 0.05 to 12.0, 0.05 to 12.5, 0.05 to 13.0, 0.05 to 13.5, 0.05 to 14.0, 0.05 to 14.5, 0.05 to 15.0, 0.1 to 10.5, 0.1 to 11.0, 0.1 to 11.5, 0.1 to 12.0, 0.1 to 12.5, 0.1 to 13.0, 0.1 to 13.5, 0.1 to 14.0, 0.1 to 14.5, 0.1 to 15.0, 0.5 to 10.5, 0.5 to 11.0, 0.5 to 11.5, 0.5 to 12.0, 0.5 to 12.5, 0.5 to 13.0, 0.5 to 13.5, 0.5 to 14.0, 0.5 to 14.5, 0.5 to 15.0, 1.0 to 10.5, 1.0 to 11.0, 1.0 to 11.5, 1.0 to 12.0, 1.0 to 12.5, 1.0 to 13.0, 1.0 to 13.5, 1.0 to 14.0, 1.0 to 14.5, 1.0 to 15.0, 1.5 to 10.5, 1.5 to 11.0, 1.5 to 11.5, 1.5 to 12.0, 1.5 to 12.5, 1.5 to 13.0, 1.5 to 13.5, 1.5 to 14.0, 1.5 to 14.5, 1.5 to 15.0, 2.0 to 10.5, 2.0 to 11.0, 2.0 to 11.5, 2.0 to 12.0, 2.0 to 12.5, 2.0 to 13.0, 2.0 to 13.5, 2.0 to 14.0, 2.0 to 14.5, 2.0 to 15.0, 2.5 to 10.5, 2.5 to 11.0, 2.5 to 11.5, 2.5 to 12.0, 2.5 to 12.5, 2.5 to 13.0, 2.5 to 13.5, 2.5 to 14.0, 2.5 to 14.5, or 2.5 to 15.0. More preferably, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.1 to 5.9, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, or 3.0 to 5.5.

"The sweetness intensity X2": 0.05 to 0.5, 0.05 to 1.0, 0.05 to 1.5, 0.05 to 2.0, 0.05 to 2.5, 0.05 to 3.0, 0.05 to 3.5, 0.05 to 4.0, 0.05 to 4.5, 0.05 to 5.0, 0.05 to 5.5, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, 3.0 to 5.5, 2.0 to 6.5, 2.0 to 7.0, 2.0 to 7.5, 2.0 to 6.0, 2.0 to 6.5, 2.0 to 7.0, 2.0 to 7.5, 2.5 to 7.0, 2.5 to 7.5, 2.5 to 6.0, 2.5 to 6.5, 2.5 to 7.0, 2.5 to 7.5, 3.0 to 7.5, 3.0 to 6.0, 3.0 to 6.5, 3.0 to 7.0, 3.0 to 7.5, 3.0 to 8.0, 3.0 to 8.5, 3.0 to 9.0, 3.0 to 9.5, 3.5 to 7.0, 3.5 to 7.5, 3.5 to 8.0, 4.5 to 8.5, 3.5 to 9.0, 3.5 to 9.5, 4.0 to 7.5, 4.0 to 8.0, 4.0 to 8.5, 4.0 to 9.0, 4.0 to 9.5, 3.5 to 8.5, 3.5 to 9.0, 3.5 to 9.5, 3.5 to 10.0, 3.5 to 10.5, 3.5 to 11.0, 3.5 to 11.5, 4.0 to 11.5, 0.05 to 6.0, 0.05 to 6.5, 0.05 to 7.0, 0.05 to 7.5, 0.05 to 8.0, 0.05 to 8.5, 0.05 to 9.0, 0.05 to 9.5, 0.05 to 10.0, 0.05 to 10.5, 0.05 to 11.0, 0.05 to 11.5, 0.05 to 12.0, 0.05 to 13.0, 0.05 to 14.0, 0.05 to 15.0, 0.05 to 16.0, 0.05 to 17.0, 0.05 to 18.0, 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11.0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 10.0, 3.0 to 10.5, 3.0 to 11.0, 3.0 to 11.5, 3.0 to 12.0, 3.0 to 13.0, 3.0 to 14.0, 3.0 to 15.0, 3.0 to 16.0, 3.0 to 17.0, 3.0 to 18.0, 3.5 to 4.0, 3.5 to 4.5, 3.5 to 5.0, 3.5 to 5.5, 3.5 to 6.0, 3.5 to 6.5, 3.5 to 12.0, 3.5 to 13.0, 3.5 to 14.0, 3.5 to 15.0, 3.5 to 16.0, 3.5 to 17.0, 3.5 to 18.0, 4.0 to 4.5, 4.0 to 5.0, 4.0 to 5.5, 4.0 to 6.0, 4.0 to 6.5, 4.0 to 7.0, 4.0 to 10.0, 4.0 to 10.5, 4.0 to 11.0, 4.0 to 12.0, 4.0 to 13.0, 4.0 to 14.0, 4.0 to 15.0, 4.0 to 16.0, 4.0 to 17.0, or 4.0 to 18.0. More preferably, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, or 3.0 to 5.5.

"The amount of sodium": 5 to 35mg/100ml, 5 to 34mg/100ml, 5 to 33mg/100ml, 5 to 32mg/100ml, 5 to 31mg/100ml, 5 to 30mg/100ml, 5 to 29mg/100ml, 5 to 28mg/100ml, 5 to 27mg/100ml, 5 to 26mg/100ml, 5 to 25mg/100ml, 5 to 24mg/100ml, 5 to 23mg/100ml, 5 to 22mg/100ml, 5 to 21mg/100ml, 5 to 20mg/100ml, 10 to 35mg/100ml, 10 to 34mg/100ml, 10 to 33mg/100ml, 10 to 32mg/100ml, 10 to 31mg/100ml, 10 to 30mg/100ml, 10 to 29mg/100ml, 10 to 28mg/100ml, 10 to 27mg/100ml, 10 to 26mg/100ml, 10 to 25mg/100ml, 10 to 24mg/100ml, 10 to 23mg/100ml, 10 to 22mg/100ml, 10 to 21mg/100ml, 10 to 20mg/100ml, 15 to 35mg/100ml, 15 to 34mg/100ml, 15 to 33mg/100ml, 15 to 32mg/100ml, 15 to 31mg/100ml, 15 to 30mg/100ml, 15 to 29mg/100ml, 15 to 28mg/100ml, 15 to 27mg/100ml, 15 to 26mg/100ml, 15 to 25mg/100ml, 20 to 35mg/100ml, 20 to 34mg/100ml, 20 to 33mg/100ml, 20 to 32mg/100ml, 20 to 31mg/100ml, 20 to 30mg/100ml, 20 to 29mg/100ml, 20 to 28mg/100ml, 20 to 27mg/100ml, 20 to 26mg/100ml, or 20 to 25mg/100ml.

"The amount of potassium": 0.5 to 45mg/100ml, 0.5 to 40mg/100ml, 0.5 to 39mg/100ml, 0.5 to 38mg/100ml, 0.5 to 37mg/100ml, 0.5 to 36mg/100ml, 0.5 to 35mg/100ml, 0.5 to 34mg/100ml, 0.5 to 33mg/100ml, 0.5 to 32mg/100ml, 0.5 to 31mg/100ml, 0.5 to 30mg/100ml, 1 to 45mg/100ml, 1 to 40mg/100ml, 1 to 39mg/100ml, 1 to 38mg/100ml, 1 to 37mg/100ml, 1 to 36mg/100ml, 1 to 35mg/100ml, 1 to 34mg/100ml, 1 to 33mg/100ml, 1 to 32mg/100ml, 1 to 31mg/100ml, 1 to 30mg/100ml, 5 to 45mg/100ml, 5 to 40mg/100ml, 5 to 39mg/100ml, 5 to 38mg/100ml, 5 to 37mg/100ml, 5 to 36mg/100ml, 5 to 35mg/100ml, 5 to 34mg/100ml, 5 to 33mg/100ml, 5 to 32mg/100ml, 5 to 31mg/100ml, 5 to 30mg/100ml, 7 to 45mg/100ml, 7 to 40mg/100ml, 7 to 39mg/100ml, 7 to 38mg/100ml, 7 to 37mg/100ml, 7 to 36mg/100ml, 7 to 35mg/100ml, 7 to 34mg/100ml, 7 to 33mg/100ml, 7 to 32mg/100ml, 7 to 31mg/100ml, 7 to 30mg/100ml, 10 to 45mg/100ml, 10 to 40mg/100ml, 10 to 39mg/100ml, 10 to 38mg/100ml, 10 to 37mg/100ml, 10 to 36mg/100ml, 10 to 35mg/100ml, 15 to 45mg/100ml, 15 to 40mg/100ml, 15 to 39mg/100ml, 15 to 38mg/100ml, 15 to 37mg/100ml, 15 to 36mg/100ml, 15 to 35mg/100ml, 15 to 34mg/100ml, 15 to 33mg/100ml, 15 to 32mg/100ml, 15 to 31mg/100ml, 15 to 30mg/100ml, 20 to 45mg/100ml, 20 to 40mg/100ml, 20 to 39mg/100ml, 20 to 38mg/100ml, 20 to 37mg/100ml, 20 to 36mg/100ml, 20 to 35mg/100ml, 20 to 34mg/100ml, 20 to 33mg/100ml, 20 to 32mg/100ml, 20 to 31mg/100ml, or 20 to 30mg/100ml.

"The amount of calcium": 0.5 to 45mg/100ml, 0.5 to 40mg/100ml, 0.5 to 39mg/100ml, 0.5 to 38mg/100ml, 0.5 to 37mg/100ml, 0.5 to 36mg/100ml, 0.5 to 35mg/100ml, 0.5 to 34mg/100ml, 0.5 to 33mg/100ml, 0.5 to 32mg/100ml, 0.5 to 31mg/100ml, 0.5 to 30mg/100ml, 1 to 45mg/100ml, 1 to 40mg/100ml, 1 to 39mg/100ml, 1 to 38mg/100ml, 1 to 37mg/100ml, 1 to 36mg/100ml, 1 to 35mg/100ml, 1 to 34mg/100ml, 1 to 33mg/100ml, 1 to 32mg/100ml, 1 to 31mg/100ml, 1 to 30mg/100ml, 5 to 45mg/100ml, 5 to 40mg/100ml, 5 to 39mg/100ml, 5 to 38mg/100ml, 5 to 37mg/100ml, 5 to 36mg/100ml, 5 to 35mg/100ml, 5 to 34mg/100ml, 5 to 33mg/100ml, 5 to 32mg/100ml, 5 to 31mg/100ml, 5 to 30mg/100ml, 7 to 45mg/100ml, 7 to 40mg/100ml, 7 to 39mg/100ml, 7 to 38mg/100ml, 7 to 37mg/100ml, 7 to 36mg/100ml, 7 to 35mg/100ml, 7 to 34mg/100ml, 7 to 33mg/100ml, 7 to 32mg/100ml, 7 to 31mg/100ml, 7 to 30mg/100ml, 10 to 45mg/100ml, 10 to 40mg/100ml, 10 to 39mg/100ml, 10 to 38mg/100ml, 10 to 37mg/100ml, 10 to 36mg/100ml, 10 to 35mg/100ml, 15 to 45mg/100ml, 15 to 40mg/100ml, 15 to 39mg/100ml, 15 to 38mg/100ml, 15 to 37mg/100ml, 15 to 36mg/100ml, 15 to 35mg/100ml, 15 to 34mg/100ml, 15 to 33mg/100ml, 15 to 32mg/100ml, 15 to 31mg/100ml, 15 to 30mg/100ml, 20 to 45mg/100ml, 20 to 40mg/100ml, 20 to 39mg/100ml, 20 to 38mg/100ml, 20 to 37mg/100ml, 20 to 36mg/100ml, 20 to 35mg/100ml, 20 to 34mg/100ml, 20 to 33mg/100ml, 20 to 32mg/100ml, 20 to 31mg/100ml, or 20 to 30mg/100ml.

"The sweetness intensity X3": 4.0 to 20, 4.0 to 15, 4.0 to 12. 5, 4.0 to 10, 4.5 to 20, 4.5 to 15, 4.5 to 12.5, 4.5 to 10, 5.0 to 20, 5.0 to 15, 5.0 to 12. 5, 5.0 to 10, 5.5 to 20, 5.5 to 15, 5.5 to 12.5, 5.5 to 10, 6.0 to 20, 6.0 to 15, 6.0 to 12. 5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, 10.5 to 12.5, 4.0 to 18, 4.0 to 16, 4.0 to 15.5, 4.0 to 14, 4.5 to 18, 4.5 to 16, 4.5 to 15.5, 4.5 to 14, 5.0 to 18, 5.0 to 16, 5.0 to 15.5, 5.0 to 14, 5.5 to 18, 5.5 to 16, 5.5 to 15.5, 5.5 to 14, 6.0 to 18, 6.0 to 16, 6.0 to 15.5, 6.0 to 14, 6.5 to 18, 6.5 to 16, 6.5 to 15.5, 6.5 to 14, 7.0 to 18, 7.0 to 16, 7.0 to 15.5, 7.0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9.0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16, or 10.5 to 15.5.

"The amount of Luo han guo extract P2 (ppm)": 20 to 550, 25 to 550, 30 to 550, 35 to 550, 40 to 550, 45 to 550, 50 to 550, 55 to 550, 20 to 540, 25 to 540, 30 to 540, 35 to 540, 40 to 540, 45 to 540, 50 to 540, 55 to 540, 20 to 530, 25 to 530, 30 to 530, 35 to 530, 40 to 530, 45 to 530, 50 to 530, 55 to 530, 20 to 520, 25 to 520, 30 to 520, 35 to 520, 40 to 520, 45 to 520, 50 to 520, 55 to 520, 20 to 510, 25 to 510, 30 to 510, 35 to 510, 40 to 510, 45 to 510, 50 to 510, 55 to 510, 20 to 505, 25 to 505, 30 to 505, 35 to 505, 40 to 505, 45 to 505, 50 to 505, 55 to 505, 20 to 500, 25 to 500, 30 to 500, 35 to 500, 40 to 500, 45 to 500, 50 to 500, 55 to 500, 20 to 495, 25 to 495, 30 to 495, 35 to 495, 40 to 495, 45 to 495, 50 to 495, 55 to 495, 20 to 490, 25 to 490, 30 to 490, 35 to 490, 40 to 490, 45 to 490, 50 to 490, 55 to 490, 1 to 1500, 1 to 1200, 5 to 1200, 1 to 1000, 5 to 1000, 10 to 1000, 1 to 900, 5 to 900, 10 to 900, 15 to 900, 20 to 900, 25 to 900, 30 to 900, 35 to 900, 40 to 900, 45 to 900, 50 to 900, 55 to 900, 1 to 800, 5 to 800, 10 to 800, 15 to 800, 20 to 800, 25 to 800, 30 to 800, 35 to 800, 40 to 800, 45 to 800, 50 to 800, 55 to 800, 1 to 700, 5 to 700, 10 to 700, 15 to 700, 20 to 700, 25 to 700, 30 to 700, 35 to 700, 40 to 700, 45 to 700, 50 to 700, 55 to 700, 1 to 600, 5 to 600, 10 to 600, 15 to 600, 20 to 600, 25 to 600, 30 to 600, 35 to 600, 40 to 600, 45 to 600, 50 to 600, 55 to 600, 1 to 550, 1 to 540, 1 to 530, 1 to 520, 1 to 510, 1 to 505, 1 to 500, 1 to 495, 1 to 490, 5 to 550, 5 to 540, 5 to 530, 5 to 520, 5 to 510, 5 to 505, 5 to 500, 5 to 495, 5 to 490, 10 to 550, 10 to 540, 10 to 530, 10 to 520, 10 to 510, 10 to 505, 10 to 500, 10 to 495, 10 to 490, 15 to 550, 15 to 550, 15 to 530, 15 to 520, 15 to 510, 15 to 505, 15 to 500, 15 to 495, or 15 to 490.

The energy: 0 to 30Kcal/100ml, 0 to 25Kcal/100ml, 0 to 20Kcal/100ml, 0 to 15Kcal/100ml, 0 to 10Kcal/100ml, 0 to 5Kcal/100ml, 5 to 30Kcal/100ml, 5 to 25Kcal/100ml, 5 to 20Kcal/100ml, 5 to 15Kcal/100ml, 5 to 10Kcal/100ml, 10 to 30Kcal/100ml, 10 to 25Kcal/100ml, 10 to 20Kcal/100ml, 10 to 15Kcal/100ml, 15 to 30Kcal/100ml, 15 to 25Kcal/100ml, 15 to 20Kcal/100ml, 20 to 30Kcal/100ml, 20 to 25Kcal/100ml, 25 to 30Kcal/100ml, 0 to 24Kcal/100ml, 0 to 8Kcal/100ml, 0 to 4Kcal/100ml, 4 to 30Kcal/100ml, 4 to 24Kcal/100ml, 4 to 8Kcal/100ml, 8 to 30Kcal/100ml, 8 to 24Kcal/100ml, or 24 to 30Kcal/100ml.

In addition, the natural sugar (including an example of a combination of glucose, sucrose, fructose, maltose, an oligosaccharide, a high-fructose corn syrup, and lactose) and the forms of sodium, potassium, and calcium in flavored water B of the present invention are defined as described in the section of the flavored water of the present invention.

In another specific embodiment, the present invention provides the following flavored water (hereinafter, referred to as "flavored water C of the present invention").

A flavored water comprising:
(a) natural sugar in an amount corresponding to a sweetness intensity X1;
(b) mogroside V in an amount corresponding to a sweetness intensity X2;
(c) 5 to 35 mg/100 ml of sodium; and
(d) 0.5 to 50 mg/100 ml of potassium and/or 0.5 to 50 mg/100 ml of calcium,
wherein the flavored water has a sweetness of a sweetness intensity X3 exhibited by the components (a) to (d), and 0.1 < (X1 + X2) ≤ 20 is satisfied.

In flavored water C of the present invention, the preferable ranges of the sweetness intensity X1, the sweetness intensity X2, the sodium content, the potassium and/or calcium content, the sweetness intensity X3, the mogroside V content P2 (ppm), and the energy are, for example, as follows. These numerical values can be arbitrarily combined in a range that satisfies 0.1 < (X1 + X2) ≤ 20.

"The sweetness intensity X1": 0.05 to 0.5, 0.05 to 1.0, 0.05 to 1.5, 0.05 to 2.0, 0.05 to 2.5, 0.05 to 3.0, 0.05 to 3.5, 0.05 to 4.0, 0.05 to 4.5, 0.05 to 5.0, 0.05 to 5.5, 0.05 to 6.0, 0.05 to 6.5, 0.05 to 7.0, 0.05 to 7.5, 0.05 to 8.0, 0.05 to 8.25, 0.05 to 8.5, 0.05 to 8.75, 0.05 to 9.0, 0.05 to 9.25, 0.05 to 9.5, 0.05 to 9.75, 0.05 to 10.0, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.1 to 5.9, 0.1 to 6.0, 0.1 to 6.5, 0.1 to 7.0, 0.1 to 7.5, 0.1 to 8.0, 0.1 to 8.25, 0.1 to 8.5, 0.1 to 8.75, 0.1 to 9.0, 0.1 to 9.25, 0.1 to 9.5, 0.1 to 9.75, 0.1 to 10.0, 0.5 to 0.5, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 0.5 to 6.0, 0.5 to 6.5, 0.5 to 7.0, 0.5 to 7.5, 0.5 to 8.0, 0.5 to 8.25, 0.5 to 8.5, 0.5 to 8.75, 0.5 to 9.0, 0.5 to 9.25, 0.5 to 9.5, 0.5 to 9.75, 0.5 to 10.0, 1.0 to 0.5, 1.0 to 1.0, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.0 to 6.0, 1.0 to 6.5, 1.0 to 7.0, 1.0 to 7.5, 1.0 to 8.0, 1.0 to 8.25, 1.0 to 8.5, 1.0 to 8.75, 1.0 to 9.0, 1.0 to 9.25, 1.0 to 9.5, 1.0 to 9.75, 1.0 to 10.0, 1.5 to 0.5, 1.5 to 1.0, 1.5 to 1.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 1.5 to 6.0, 1.5 to 6.5, 1.5 to 7.0, 1.5 to 7.5, 1.5 to 8.0, 1.5 to 8.25, 1.5 to 8.5, 1.5 to 8.75, 1.5 to 9.0, 1.5 to 9.25, 1.5 to 9.5, 1.5 to 9.75, 1.5 to 10.0, 2.0 to 0.5, 2.0 to 1.0, 2.0 to 1.5, 2.0 to 2.0, 2.0 to 2.5, 2.0 to 3.0, 2.0 to 3.5, 2.0 to 4.0, 2.0 to 4.5, 2.0 to 5.0, 2.0 to 5.5, 2.0 to 6.0, 2.0 to 6.5, 2.0 to 7.0, 2.0 to 7.5, 2.0 to 8.0, 2.0 to 8.25, 2.0 to 8.5, 2.0 to 8.75, 2.0 to 9.0, 2.0 to 9.25, 2.0 to 9.5, 2.0 to 9.75, 2.0 to 10.0, 2.5 to 0.5, 2.5 to 1.0, 2.5 to 1.5, 2.5 to 2.0, 2.5 to 2.5, 2.5 to 3.0, 2.5 to 3.5, 2.5 to 4.0, 2.5 to 4.5, 2.5 to 5.0, 2.5 to 5.5, 2.5 to 6.0, 2.5 to 6.5, 2.5 to 7.0, 2.5 to 7.5, 2.5 to 8.0, 2.5 to 8.25, 2.5 to 8.5, 2.5 to 8.75, 2.5 to 9.0, 2.5 to 9.25, 2.5 to 9.5, 2.5 to 9.75, 2.5 to 10.0, 0 to 10.5, 0 to 11.0, 0 to 11.5, 0 to 12.0, 0 to 12.5, 0 to 13.0, 0 to 13.5, 0 to 14.0, 0 to 14.5, 0 to 15.0, 0.05 to 10.5, 0.05 to 11.0, 0.05 to 11.5, 0.05 to 12.0, 0.05 to 12.5, 0.05 to 13.0, 0.05 to 13.5, 0.05 to 14.0, 0.05 to 14.5, 0.05 to 15.0, 0.1 to 10.5, 0.1 to 11.0, 0.1 to 11.5, 0.1 to 12.0, 0.1 to 12.5, 0.1 to 13.0, 0.1 to 13.5, 0.1 to 14.0, 0.1 to 14.5, 0.1 to 15.0, 0.5 to 10.5, 0.5 to 11.0, 0.5 to 11.5, 0.5 to 12.0, 0.5 to 12.5, 0.5 to 13.0, 0.5 to 13.5, 0.5 to 14.0, 0.5 to 14.5, 0.5 to 15.0, 1.0 to 10.5, 1.0 to 11.0, 1.0 to 11.5, 1.0 to 12.0, 1.0 to 12.5, 1.0 to 13.0, 1.0 to 13.5, 1.0 to 14.0, 1.0 to 14.5, 1.0 to 15.0, 1.5 to 10.5, 1.5 to 11.0, 1.5 to 11.5, 1.5 to 12.0, 1.5 to 12.5, 1.5 to 13.0, 1.5 to 13.5, 1.5 to 14.0, 1.5 to 14.5, 1.5 to 15.0, 2.0 to 10.5, 2.0 to 11.0, 2.0 to 11.5, 2.0 to 12.0, 2.0 to 12.5, 2.0 to 13.0, 2.0 to 13.5, 2.0 to 14.0, 2.0 to 14.5, 2.0 to 15.0, 2.5 to 10.5, 2.5 to 11.0, 2.5 to 11.5, 2.5 to 12.0, 2.5 to 12.5, 2.5 to 13.0, 2.5 to 13.5, 2.5 to 14.0, 2.5 to 14.5, or 2.5 to 15.0. More preferably, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.1 to 5.9, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, or 3.0 to 5.5.

"The sweetness intensity X2": 0.05 to 0.5, 0.05 to 1.0, 0.05 to 1.5, 0.05 to 2.0, 0.05 to 2.5, 0.05 to 3.0, 0.05 to 3.5, 0.05 to 4.0, 0.05 to 4.5, 0.05 to 5.0, 0.05 to 5.5, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, 3.0 to 5.5, 2.0 to 6.5, 2.0 to 7.0, 2.0 to 7.5, 2.0 to 6.0, 2.0 to 6.5, 2.0 to 7.0, 2.0 to 7.5, 2.5 to 7.0, 2.5 to 7.5, 2.5 to 6.0, 2.5 to 6.5, 2.5 to 7.0, 2.5 to 7.5, 3.0 to 7.5, 3.0 to 6.0, 3.0 to 6.5, 3.0 to 7.0, 3.0 to 7.5, 3.0 to 8.0, 3.0 to 8.5, 3.0 to 9.0, 3.0 to 9.5, 3.5 to 7.0, 3.5 to 7.5, 3.5 to 8.0, 4.5 to 8.5, 3.5 to 9.0, 3.5 to 9.5, 4.0 to 7.5, 4.0 to 8.0, 4.0 to 8.5, 4.0 to 9.0, 4.0 to 9.5, 3.5 to 8.5, 3.5 to 9.0, 3.5 to 9.5, 3.5 to 10.0, 3.5 to 10.5, 3.5 to 11.0, 3.5 to 11.5, 4.0 to 11.5, 0.05 to 6.0, 0.05 to 6.5, 0.05 to 7.0, 0.05 to 7.5, 0.05 to 8.0, 0.05 to 8.5, 0.05 to 9.0, 0.05 to 9.5, 0.05 to 10.0, 0.05 to 10.5, 0.05 to 11.0, 0.05 to 11.5, 0.05 to 12.0, 0.05 to 13.0, 0.05 to 14.0, 0.05 to 15.0, 0.05 to 16.0, 0.05 to 17.0, 0.05 to 18.0, 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11.0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 10.0, 3.0 to 10.5, 3.0 to 11.0, 3.0 to 11.5, 3.0 to 12.0, 3.0 to 13.0, 3.0 to 14.0, 3.0 to 15.0, 3.0 to 16.0, 3.0 to 17.0, 3.0 to 18.0, 3.5 to 4.0, 3.5 to 4.5, 3.5 to 5.0, 3.5 to 5.5, 3.5 to 6.0, 3.5 to 6.5, 3.5 to 12.0, 3.5 to 13.0, 3.5 to 14.0, 3.5 to 15.0, 3.5 to 16.0, 3.5 to 17.0, 3.5 to 18.0, 4.0 to 4.5, 4.0 to 5.0, 4.0 to 5.5, 4.0 to 6.0, 4.0 to 6.5, 4.0 to 7.0, 4.0 to 10.0, 4.0 to 10.5, 4.0 to 11.0, 4.0 to 12.0, 4.0 to 13.0, 4.0 to 14.0, 4.0 to 15.0, 4.0 to 16.0, 4.0 to 17.0, or 4.0 to 18.0. More preferably, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, or 3.0 to 5.5.

"The amount of sodium": 5 to 35mg/100ml, 5 to 34mg/100ml, 5 to 33mg/100ml, 5 to 32mg/100ml, 5 to 31mg/100ml, 5 to 30mg/100ml, 5 to 29mg/100ml, 5 to 28mg/100ml, 5 to 27mg/100ml, 5 to 26mg/100ml, 5 to 25mg/100ml, 5 to 24mg/100ml, 5 to 23mg/100ml, 5 to 22mg/100ml, 5 to 21mg/100ml, 5 to 20mg/100ml, 10 to 35mg/100ml, 10 to 34mg/100ml, 10 to 33mg/100ml, 10 to 32mg/100ml, 10 to 31mg/100ml, 10 to 30mg/100ml, 10 to 29mg/100ml, 10 to 28mg/100ml, 10 to 27mg/100ml, 10 to 26mg/100ml, 10 to 25mg/100ml, 10 to 24mg/100ml, 10 to 23mg/100ml, 10 to 22mg/100ml, 10 to 21mg/100ml, 10 to 20mg/100ml, 15 to 35mg/100ml, 15 to 34mg/100ml, 15 to 33mg/100ml, 15 to 32mg/100ml, 15 to 31mg/100ml, 15 to 30mg/100ml, 15 to 29mg/100ml, 15 to 28mg/100ml, 15 to 27mg/100ml, 15 to 26mg/100ml, 15 to 25mg/100ml, 20 to 35mg/100ml, 20 to 34mg/100ml, 20 to 33mg/100ml, 20 to 32mg/100ml, 20 to 31mg/100ml, 20 to 30mg/100ml, 20 to 29mg/100ml, 20 to 28mg/100ml, 20 to 27mg/100ml, 20 to 26mg/100ml, or 20 to 25mg/100ml.

"The amount of potassium": 0.5 to 45mg/100ml, 0.5 to 40mg/100ml, 0.5 to 39mg/100ml, 0.5 to 38mg/100ml, 0.5 to 37mg/100ml, 0.5 to 36mg/100ml, 0.5 to 35mg/100ml, 0.5 to 34mg/100ml, 0.5 to 33mg/100ml, 0.5 to 32mg/100ml, 0.5 to 31mg/100ml, 0.5 to 30mg/100ml, 1 to 45mg/100ml, 1 to 40mg/100ml, 1 to 39mg/100ml, 1 to 38mg/100ml, 1 to 37mg/100ml, 1 to 36mg/100ml, 1 to 35mg/100ml, 1 to 34mg/100ml, 1 to 33mg/100ml, 1 to 32mg/100ml, 1 to 31mg/100ml, 1 to 30mg/100ml, 5 to 45mg/100ml, 5 to 40mg/100ml, 5 to 39mg/100ml, 5 to 38mg/100ml, 5 to 37mg/100ml, 5 to 36mg/100ml, 5 to 35mg/100ml, 5 to 34mg/100ml, 5 to 33mg/100ml, 5 to 32mg/100ml, 5 to 31mg/100ml, 5 to 30mg/100ml, 7 to 45mg/100ml, 7 to 40mg/100ml, 7 to 39mg/100ml, 7 to 38mg/100ml, 7 to 37mg/100ml, 7 to 36mg/100ml, 7 to 35mg/100ml, 7 to 34mg/100ml, 7 to 33mg/100ml, 7 to 32mg/100ml, 7 to 31mg/100ml, 7 to 30mg/100ml, 10 to 45mg/100ml, 10 to 40mg/100ml, 10 to 39mg/100ml, 10 to 38mg/100ml, 10 to 37mg/100ml, 10 to 36mg/100ml, 10 to 35mg/100ml, 15 to 45mg/100ml, 15 to 40mg/100ml, 15 to 39mg/100ml, 15 to 38mg/100ml, 15 to 37mg/100ml, 15 to 36mg/100ml, 15 to 35mg/100ml, 15 to 34mg/100ml, 15 to 33mg/100ml, 15 to 32mg/100ml, 15 to 31mg/100ml, 15 to 30mg/100ml, 20 to 45mg/100ml, 20 to 40mg/100ml, 20 to 39mg/100ml, 20 to 38mg/100ml, 20 to 37mg/100ml, 20 to 36mg/100ml, 20 to 35mg/100ml, 20 to 34mg/100ml, 20 to 33mg/100ml, 20 to 32mg/100ml, 20 to 31mg/100ml, or 20 to 30mg/100ml.

"The amount of calcium": 0.5 to 45mg/100ml, 0.5 to 40mg/100ml, 0.5 to 39mg/100ml, 0.5 to 38mg/100ml, 0.5 to 37mg/100ml, 0.5 to 36mg/100ml, 0.5 to 35mg/100ml, 0.5 to 34mg/100ml, 0.5 to 33mg/100ml, 0.5 to 32mg/100ml, 0.5 to 31mg/100ml, 0.5 to 30mg/100ml, 1 to 45mg/100ml, 1 to 40mg/100ml, 1 to 39mg/100ml, 1 to 38mg/100ml, 1 to 37mg/100ml, 1 to 36mg/100ml, 1 to 35mg/100ml, 1 to 34mg/100ml, 1 to 33mg/100ml, 1 to 32mg/100ml, 1 to 31mg/100ml, 1 to 30mg/100ml, 5 to 45mg/100ml, 5 to 40mg/100ml, 5 to 39mg/100ml, 5 to 38mg/100ml, 5 to 37mg/100ml, 5 to 36mg/100ml, 5 to 35mg/100ml, 5 to 34mg/100ml, 5 to 33mg/100ml, 5 to 32mg/100ml, 5 to 31mg/100ml, 5 to 30mg/100ml, 7 to 45mg/100ml, 7 to 40mg/100ml, 7 to 39mg/100ml, 7 to 38mg/100ml, 7 to 37mg/100ml, 7 to 36mg/100ml, 7 to 35mg/100ml, 7 to 34mg/100ml, 7 to 33mg/100ml, 7 to 32mg/100ml, 7 to 31mg/100ml, 7 to 30mg/100ml, 10 to 45mg/100ml, 10 to 40mg/100ml, 10 to 39mg/100ml, 10 to 38mg/100ml, 10 to 37mg/100ml, 10 to 36mg/100ml, 10 to 35mg/100ml, 15 to 45mg/100ml, 15 to 40mg/100ml, 15 to 39mg/100ml, 15 to 38mg/100ml, 15 to 37mg/100ml, 15 to 36mg/100ml, 15 to 35mg/100ml, 15 to 34mg/100ml, 15 to 33mg/100ml, 15 to 32mg/100ml, 15 to 31mg/100ml, 15 to 30mg/100ml, 20 to 45mg/100ml, 20 to 40mg/100ml, 20 to 39mg/100ml, 20 to 38mg/100ml, 20 to 37mg/100ml, 20 to 36mg/100ml, 20 to 35mg/100ml, 20 to 34mg/100ml, 20 to 33mg/100ml, 20 to 32mg/100ml, 20 to 31mg/100ml, or 20 to 30mg/100ml.

"The sweetness intensity X3": 4.0 to 20, 4.0 to 15, 4.0 to 12. 5, 4.0 to 10, 4.5 to 20, 4.5 to 15, 4.5 to 12.5, 4.5 to 10, 5.0 to 20, 5.0 to 15, 5.0 to 12. 5, 5.0 to 10, 5.5 to 20, 5.5 to 15, 5.5 to 12.5, 5.5 to 10, 6.0 to 20, 6.0 to 15, 6.0 to 12. 5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, 10.5 to 12.5, 4.0 to 18, 4.0 to 16, 4.0 to 15.5, 4.0 to 14, 4.5 to 18, 4.5 to 16, 4.5 to 15.5, 4.5 to 14, 5.0 to 18, 5.0 to 16, 5.0 to 15.5, 5.0 to 14, 5.5 to 18, 5.5 to 16, 5.5 to 15.5, 5.5 to 14, 6.0 to 18, 6.0 to 16, 6.0 to 15.5, 6.0 to 14, 6.5 to 18, 6.5 to 16, 6.5 to 15.5, 6.5 to 14, 7.0 to 18, 7.0 to 16, 7.0 to 15.5, 7.0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9.0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16, or 10.5 to 15.5.

"The amount of mogroside V P2 (ppm)": 20 to 550, 25 to 550, 30 to 550, 35 to 550, 40 to 550, 45 to 550, 50 to 550, 55 to 550, 20 to 540, 25 to 540, 30 to 540, 35 to 540, 40 to 540, 45 to 540, 50 to 540, 55 to 540, 20 to 530, 25 to 530, 30 to 530, 35 to 530, 40 to 530, 45 to 530, 50 to 530, 55 to 530, 20 to 520, 25 to 520, 30 to 520, 35 to 520, 40 to 520, 45 to 520, 50 to 520, 55 to 520, 20 to 510, 25 to 510, 30 to 510, 35 to 510, 40 to 510, 45 to 510, 50 to 510, 55 to 510, 20 to 505, 25 to 505, 30 to 505, 35 to 505, 40 to 505, 45 to 505, 50 to 505, 55 to 505, 20 to 500, 25 to 500, 30 to 500, 35 to 500, 40 to 500, 45 to 500, 50 to 500, 55 to 500, 20 to 495, 25 to 495, 30 to 495, 35 to 495, 40 to 495, 45 to 495, 50 to 495, 55 to 495, 20 to 490, 25 to 490, 30 to 490, 35 to 490, 40 to 490, 45 to 490, 50 to 490, 55 to 490, 1 to 700, 5 to 700, 10 to 700, 15 to 700, 20 to 700, 25 to 700, 30 to 700, 35 to 700, 40 to 700, 45 to 700, 50 to 700, 55 to 700, 1 to 600, 5 to 600, 10 to 600, 15 to 600, 20 to 600, 25 to 600, 30 to 600, 35 to 600, 40 to 600, 45 to 600, 50 to 600, 55 to 600, 1 to 550, 1 to 540, 1 to 530, 1 to 520, 1 to 510, 1 to 505, 1 to 500, 1 to 495, 1 to 490, 5 to 550, 5 to 540, 5 to 530, 5 to 520, 5 to 510, 5 to 505, 5 to 500, 5 to 495, 5 to 490, 10 to 550, 10 to 540, 10 to 530, 10 to 520, 10 to 510, 10 to 505, 10 to 500, 10 to 495, 10 to 490, 15 to 550, 15 to 550, 15 to 530, 15 to 520, 15 to 510, 15 to 505, 15 to 500, 15 to 495, or 15 to 490.

The energy: 0 to 30Kcal/100ml, 0 to 25Kcal/100ml, 0 to 20Kcal/100ml, 0 to 15Kcal/100ml, 0 to 10Kcal/100ml, 0 to 5Kcal/100ml, 5 to 30Kcal/100ml, 5 to 25Kcal/100ml, 5 to 20Kcal/100ml, 5 to 15Kcal/100ml, 5 to 10Kcal/100ml, 10 to 30Kcal/100ml, 10 to 25Kcal/100ml, 10 to 20Kcal/100ml, 10 to 15Kcal/100ml, 15 to 30Kcal/100ml, 15 to 25Kcal/100ml, 15 to 20Kcal/100ml, 20 to 30Kcal/100ml, 20 to 25Kcal/100ml, 25 to 30Kcal/100ml, 0 to 24Kcal/100ml, 0 to 8Kcal/100ml, 0 to 4Kcal/100ml, 4 to 30Kcal/100ml, 4 to 24Kcal/100ml, 4 to 8Kcal/100ml, 8 to 30Kcal/100ml, 8 to 24Kcal/100ml, or 24 to 30Kcal/100ml.

The natural sugar (including an example of a combination of glucose, sucrose, fructose, maltose, an oligosaccharide, a high-fructose corn syrup, and lactose) and the forms of sodium, potassium, and calcium in flavored water C of the present invention are defined as described in the section of the fruit juice of the present invention.

Further, another aspect of the present invention provides a flavored water comprising:
(a) natural sugar in an amount of 0.1 to 0.5 w/v%, 0.1 to 1.0 w/v%, 0.1 to 1.5 w/v%, 0.1 to 2.0 w/v%, 0.1 to 2.5 w/v%, 0.1 to 3.0 w/v%, 0.1 to 3.5 w/v%, 0.1 to 4.0 w/v%, 0.1 to 4.5 w/v%, 0.1 to 5.0 w/v%, 0.1 to 5.5 w/v%, 0.1 to 5.9 w/v%, 0.5 to 1.0 w/v%, 0.5 to 1.5 w/v%, 0.5 to 2.0 w/v%, 0.5 to 2.5 w/v%, 0.5 to 3.0 w/v%, 0.5 to 3.5 w/v%, 0.5 to 4.0 w/v%, 0.5 to 4.5 w/v%, 0.5 to 5.0 w/v%, 0.5 to 5.5 w/v%, 0.5 to 5.9 w/v%, 1.0 to 1.5 w/v%, 1.0 to 2.0 w/v%, 1.0 to 2.5 w/v%, 1.0 to 3.0 w/v%, 1.0 to 3.5 w/v%, 1.0 to 4.0 w/v%, 1.0 to 4.5 w/v%, 1.0 to 5.0 w/v%, 1.0 to 5.5 w/v%, 1.0 to 5.9 w/v%, 1.5 to 2.0 w/v%, 1.5 to 2.5 w/v%, 1.5 to 3.0 w/v%, 1.5 to 3.5 w/v%, 1.5 to 4.0 w/v%, 1.5 to 4.5 w/v%, 1.5 to 5.0 w/v%, 1.5 to 5.5 w/v%, 1.5 to 5.9 w/v%, 2.0 to 2.5 w/v%, 2.0 to 3.0 w/v%, 2.0 to 3.5 w/v%, 2.0 to 4.0 w/v%, 2.0 to 4.5 w/v%, 2.0 to 5.0 w/v%, 2.0 to 5.5 w/v%, or 2.0 to 5.9 w/v%;
(b) at least one high-intensity sweetener selected from the group consisting of rebaudioside M, rebaudioside D, Luo han guo extract, mogroside V, and combinations thereof in an amount of 20 to 550ppm, 25 to 550 ppm, 30 to 550 ppm, 35 to 550 ppm, 40 to 550 ppm, 45 to 550 ppm, 50 to 550 ppm, 55 to 550 ppm, 20 to 540 ppm, 25 to 540 ppm, 30 to 540 ppm, 35 to 540 ppm, 40 to 540 ppm, 45 to 540 ppm, 50 to 540 ppm, 55 to 540 ppm, 20 to 530 ppm, 25 to 530 ppm, 30 to 530 ppm, 35 to 530 ppm, 40 to 530 ppm, 45 to 530 ppm, 50 to 530 ppm, 55 to 530 ppm, 20 to 520 ppm, 25 to 520 ppm, 30 to 520 ppm, 35 to 520 ppm, 40 to 520 ppm, 45 to 520 ppm, 50 to 520 ppm, 55 to 520 ppm, 20 to 510 ppm, 25 to 510 ppm, 30 to 510 ppm, 35 to 510 ppm, 40 to 510 ppm, 45 to 510 ppm, 50 to 510 ppm, 55 to 510ppm, 20 to 505ppm, 25 to 505ppm, 30 to 505ppm, 35 to 505ppm, 40 to 505ppm, 45 to 505ppm, 50 to 505ppm, 55 to 505ppm, 20 to 500ppm, 25 to 500ppm, 30 to 500ppm, 35 to 500ppm, 40 to 500ppm, 45 to 500ppm, 50 to 500ppm, 55 to 500ppm, 20 to 495ppm, 25 to 495ppm, 30 to 495ppm, 35 to 495ppm, 40 to 495ppm, 45 to 495ppm, 50 to 495ppm, 55 to 495ppm, 20 to 490ppm, 25 to 490ppm, 30 to 490ppm, 35 to 490ppm, 40 to 490ppm, 45 to 490ppm, 50 to 490ppm, or 55 to 490ppm;
(c) less than 40mg/100ml, 0.1g/100ml to less than 40mg/100ml, 0.1 to 39mg/100ml, 0.1 to 38mg/100ml, 0.1 to 37mg/100ml, 0.1 to 36mg/100ml, 0.1 to 35mg/100ml, 0.1 to 34mg/100ml, 0.1 to 33mg/100ml, 0.1 to 32mg/100ml, 0.1 to 31mg/100ml, 0.1 to 30mg/100ml, 0.1 to 29mg/100ml, 0.1 to 28mg/100ml, 0.1 to 27mg/100ml, 0.1 to 26mg/100ml, 0.1 to 25mg/100ml, 0.1 to 24mg/100ml, 0.1 to 23mg/100ml, 0.1 to 22mg/100ml, 0.1 to 21mg/100ml, 0.1 to 20mg/100ml, 0.1 to 19mg/100ml, 0.1 to 18mg/100ml, 0.1 to 17mg/100ml, 0.1 to 16mg/100ml, 0.1 to 15mg/100ml, 0.1 to 14mg/100ml, 0.1 to 13mg/100ml, 0.1 to 12mg/100ml, 0.1 to 11mg/100ml, 0.1 to 10mg/100ml, 1g/100ml to less than 40mg/100ml, 1 to 39mg/100ml, 1 to 38mg/100ml, 1 to 37mg/100ml, 1 to 36mg/100ml, 1 to 35mg/100ml, 1 to 34mg/100ml, 1 to 33mg/100ml, 1 to 32mg/100ml, 1 to 31mg/100ml, 1 to 30mg/100ml, 1 to 29mg/100ml, 1 to 28mg/100ml, 1 to 27mg/100ml, 1 to 26mg/100ml, 1 to 25mg/100ml, 1 to 24mg/100ml, 1 to 23mg/100ml, 1 to 22mg/100ml, 1 to 21mg/100ml, 1 to 20mg/100ml, 1 to 19mg/100ml, 1 to 18mg/100ml, 1 to 17mg/100ml, 1 to 16mg/100ml, 1 to 15mg/100ml, 1 to 14mg/100ml, 1 to 13mg/100ml, 1 to 12mg/100ml, 1 to 11mg/100ml, 1 to 10mg/100ml, 5g/100ml to less than 40mg/100ml, 5 to 39mg/100ml, 5 to 38mg/100ml, 5 to 37mg/100ml, 5 to 36mg/100ml, 5 to 35mg/100ml, 5 to 34mg/100ml, 5 to 33mg/100ml, 5 to 32mg/100ml, 5 to 31mg/100ml, 5 to 30mg/100ml, 5 to 29mg/100ml, 5 to 28mg/100ml, 5 to 27mg/100ml, 5 to 26mg/100ml, 5 to 25mg/100ml, 5 to 24mg/100ml, 5 to 23mg/100ml, 5 to 22mg/100ml, 5 to 21mg/100ml, 5 to 20mg/100ml, 5 to 19mg/100ml, 5 to 18mg/100ml, 5 to 17mg/100ml, 5 to 16mg/100ml, 5 to 15mg/100ml, 5 to 14mg/100ml, 5 to 13mg/100ml, 5 to 12mg/100ml, 5 to 11mg/100ml, 5 to 10mg/100ml, 10g/100ml to less than 40mg/100ml, 10 to 39mg/100ml, 10 to 38mg/100ml, 10 to 37mg/100ml, 10 to 36mg/100ml, 10 to 35mg/100ml, 10 to 34mg/100ml, 10 to 33mg/100ml, 10 to 32mg/100ml, 10 to 31mg/100ml, 10 to 30mg/100ml, 10 to 29mg/100ml, 10 to 28mg/100ml, 10 to 27mg/100ml, 10 to 26mg/100ml, 10 to 25mg/100ml, 10 to 24mg/100ml, 10 to 23mg/100ml, 10 to 22mg/100ml, 10 to 21mg/100ml, 10 to 20mg/100ml, 15g/100ml to less than 40mg/100ml, 15 to 39mg/100ml, 15 to 38mg/100ml, 15 to 37mg/100ml, 15 to 36mg/100ml, 15 to 35mg/100ml, 15 to 34mg/100ml, 15 to 33mg/100ml, 15 to 32mg/100ml, 15 to 31mg/100ml, 15 to 30mg/100ml, 20g/100ml to less than 40mg/100ml, 20 to 39mg/100ml, 20 to 38mg/100ml, 20 to 37mg/100ml, 20 to 36mg/100ml, 20 to 35mg/100ml, 20 to 34mg/100ml, 20 to 33mg/100ml, 20 to 32mg/100ml, 20 to 31mg/100ml, 20 to 30mg/100ml, 25g/100ml to less than 40mg/100ml, 25 to 39mg/100ml, 25 to 38mg/100ml, 25 to 37mg/100ml, 25 to 36mg/100ml, or 25 to 35mg/100ml of sodium; and
(d) less than 70mg/100ml, 0.1g/100ml to less than 70mg/100ml, 0.1 to 65mg/100ml, 0.1 to 60mg/100ml, 0.1 to 55mg/100ml, 0.1 to 50mg/100ml, 0.1 to 45mg/100ml, 0.1 to 40mg/100ml, 0.1 to 35mg/100ml, 0.1 to 30mg/100ml, 0.1 to 25mg/100ml, 0.1 to 20mg/100ml, 0.1 to 19mg/100ml, 0.1 to 18mg/100ml, 0.1 to 17mg/100ml, 0.1 to 16mg/100ml, 0.1 to 15mg/100ml, 0.1 to 14mg/100ml, 0.1 to 13mg/100ml, 0.1 to 12mg/100ml, 0.1 to 11mg/100ml, 0.1 to 10mg/100ml, 0.5g/100ml to less than 70mg/100ml, 0.5 to 65mg/100ml, 0.5 to 60mg/100ml, 0.5 to 55mg/100ml, 0.5 to 50mg/100ml, 0.5 to 45mg/100ml, 0.5 to 40mg/100ml, 0.5 to 35mg/100ml, 0.5 to 30mg/100ml, 0.5 to 25mg/100ml, 0.5 to 20mg/100ml, 0.5 to 19mg/100ml, 0.5 to 18mg/100ml, 0.5 to 17mg/100ml, 0.5 to 16mg/100ml, 0.5 to 15mg/100ml, 0.5 to 14mg/100ml, 0.5 to 13mg/100ml, 0.5 to 12mg/100ml, 0.5 to 11mg/100ml, 0.5 to 10mg/100ml, 1g/100ml to less than 70mg/100ml, 1 to 65mg/100ml, 1 to 60mg/100ml, 1 to 55mg/100ml, 1 to 50mg/100ml, 1 to 45mg/100ml, 1 to 40mg/100ml, 1 to 35mg/100ml, 1 to 30mg/100ml, 1 to 25mg/100ml, 1 to 20mg/100ml, 1 to 19mg/100ml, 1 to 18mg/100ml, 1 to 17mg/100ml, 1 to 16mg/100ml, 1 to 15mg/100ml, 1 to 14mg/100ml, 1 to 13mg/100ml, 1 to 12mg/100ml, 1 to 11mg/100ml, 1 to 10mg/100ml, 5g/100ml to less than 70mg/100ml, 5 to 65mg/100ml, 5 to 60mg/100ml, 5 to 55mg/100ml, 5 to 50mg/100ml, 5 to 45mg/100ml, 5 to 40mg/100ml, 5 to 35mg/100ml, 5 to 30mg/100ml, 5 to 25mg/100ml, 5 to 20mg/100ml, 5 to 19mg/100ml, 5 to 18mg/100ml, 5 to 17mg/100ml, 5 to 16mg/100ml, 5 to 15mg/100ml, 5 to 14mg/100ml, 5 to 13mg/100ml, 5 to 12mg/100ml, 5 to 11mg/100ml, 5 to 10mg/100ml, 7g/100ml to less than 70mg/100ml, 7 to 65mg/100ml, 7 to 60mg/100ml, 7 to 55mg/100ml, 7 to 50mg/100ml, 7 to 45mg/100ml, 7 to 40mg/100ml, 7 to 35mg/100ml, 7 to 30mg/100ml, 7 to 25mg/100ml, 7 to 20mg/100ml, 7 to 19mg/100ml, 7 to 18mg/100ml, 7 to 17mg/100ml, 7 to 16mg/100ml, 7 to 15mg/100ml, 10g/100ml to less than 70mg/100ml, 10 to 65mg/100ml, 10 to 60mg/100ml, 10 to 55mg/100ml, 10 to 50mg/100ml, 10 to 45mg/100ml, 10 to 40mg/100ml, 10 to 35mg/100ml, 10 to 30mg/100ml, 10 to 25mg/100ml, 10 to 20mg/100ml, 10 to 19mg/100ml, 10 to 18mg/100ml, 10 to 17mg/100ml, 10 to 16mg/100ml, 10 to 15mg/100ml, 15g/100ml to less than 70mg/100ml, 15 to 65mg/100ml, 15 to 60mg/100ml, 15 to 55mg/100ml, 15 to 50mg/100ml, 15 to 45mg/100ml, 15 to 40mg/100ml, 15 to 35mg/100ml, 15 to 30mg/100ml, 15 to 25mg/100ml, 15 to 20mg/100ml, 20g/100ml to less than 70mg/100ml, 20 to 65mg/100ml, 20 to 60mg/100ml, 20 to 55mg/100ml, 20 to 50mg/100ml, 20 to 45mg/100ml, 20 to 40mg/100ml, 20 to 35mg/100ml, 20 to 30mg/100ml, 20 to 25mg/100ml, 25g/100ml to less than 70mg/100ml, 25 to 65mg/100ml, 25 to 60mg/100ml, 25 to 55mg/100ml, 25 to 50mg/100ml, 25 to 45mg/100ml, 25 to 40mg/100ml, 25 to 35mg/100ml, or 25 to 30mg/100ml of potassium, and/or less than 70mg/100ml, 0.1g/100ml to less than 70mg/100ml, 0.1 to 65mg/100ml, 0.1 to 60mg/100ml, 0.1 to 55mg/100ml, 0.1 to 50mg/100ml, 0.1 to 45mg/100ml, 0.1 to 40mg/100ml, 0.1 to 35mg/100ml, 0.1 to 30mg/100ml, 0.1 to 25mg/100ml, 0.1 to 20mg/100ml, 0.1 to 19mg/100ml, 0.1 to 18mg/100ml, 0.1 to 17mg/100ml, 0.1 to 16mg/100ml, 0.1 to 15mg/100ml, 0.1 to 14mg/100ml, 0.1 to 13mg/100ml, 0.1 to 12mg/100ml, 0.1 to 11mg/100ml, 0.1 to 10mg/100ml, 0.5g/100ml to less than 70mg/100ml, 0.5 to 65mg/100ml, 0.5 to 60mg/100ml, 0.5 to 55mg/100ml, 0.5 to 50mg/100ml, 0.5 to 45mg/100ml, 0.5 to 40mg/100ml, 0.5 to 35mg/100ml, 0.5 to 30mg/100ml, 0.5 to 25mg/100ml, 0.5 to 20mg/100ml, 0.5 to 19mg/100ml, 0.5 to 18mg/100ml, 0.5 to 17mg/100ml, 0.5 to 16mg/100ml, 0.5 to 15mg/100ml, 0.5 to 14mg/100ml, 0.5 to 13mg/100ml, 0.5 to 12mg/100ml, 0.5 to 11mg/100ml, 0.5 to 10mg/100ml, 1g/100ml to less than 70mg/100ml, 1 to 65mg/100ml, 1 to 60mg/100ml, 1 to 55mg/100ml, 1 to 50mg/100ml, 1 to 45mg/100ml, 1 to 40mg/100ml, 1 to 35mg/100ml, 1 to 30mg/100ml, 1 to 25mg/100ml, 1 to 20mg/100ml, 1 to 19mg/100ml, 1 to 18mg/100ml, 1 to 17mg/100ml, 1 to 16mg/100ml, 1 to 15mg/100ml, 1 to 14mg/100ml, 1 to 13mg/100ml, 1 to 12mg/100ml, 1 to 11mg/100ml, 1 to 10mg/100ml, 5g/100ml to less than 70mg/100ml, 5 to 65mg/100ml, 5 to 60mg/100ml, 5 to 55mg/100ml, 5 to 50mg/100ml, 5 to 45mg/100ml, 5 to 40mg/100ml, 5 to 35mg/100ml, 5 to 30mg/100ml, 5 to 25mg/100ml, 5 to 20mg/100ml, 5 to 19mg/100ml, 5 to 18mg/100ml, 5 to 17mg/100ml, 5 to 16mg/100ml, 5 to 15mg/100ml, 5 to 14mg/100ml, 5 to 13mg/100ml, 5 to 12mg/100ml, 5 to 11mg/100ml, 5 to 10mg/100ml, 7g/100ml to less than 70mg/100ml, 7 to 65mg/100ml, 7 to 60mg/100ml, 7 to 55mg/100ml, 7 to 50mg/100ml, 7 to 45mg/100ml, 7 to 40mg/100ml, 7 to 35mg/100ml, 7 to 30mg/100ml, 7 to 25mg/100ml, 7 to 20mg/100ml, 7 to 19mg/100ml, 7 to 18mg/100ml, 7 to 17mg/100ml, 7 to 16mg/100ml, 7 to 15mg/100ml, 10g/100ml to less than 70mg/100ml, 10 to 65mg/100ml, 10 to 60mg/100ml, 10 to 55mg/100ml, 10 to 50mg/100ml, 10 to 45mg/100ml, 10 to 40mg/100ml, 10 to 35mg/100ml, 10 to 30mg/100ml, 10 to 25mg/100ml, 10 to 20mg/100ml, 10 to 19mg/100ml, 10 to 18mg/100ml, 10 to 17mg/100ml, 10 to 16mg/100ml, 10 to 15mg/100ml, 15g/100ml to less than 70mg/100ml, 15 to 65mg/100ml, 15 to 60mg/100ml, 15 to 55mg/100ml, 15 to 50mg/100ml, 15 to 45mg/100ml, 15 to 40mg/100ml, 15 to 35mg/100ml, 15 to 30mg/100ml, 15 to 25mg/100ml, 15 to 20mg/100ml, 20g/100ml to less than 70mg/100ml, 20 to 65mg/100ml, 20 to 60mg/100ml, 20 to 55mg/100ml, 20 to 50mg/100ml, 20 to 45mg/100ml, 20 to 40mg/100ml, 20 to 35mg/100ml, 20 to 30mg/100ml, 20 to 25mg/100ml, 25g/100ml to less than 70mg/100ml, 25 to 65mg/100ml, 25 to 60mg/100ml, 25 to 55mg/100ml, 25 to 50mg/100ml, 25 to 45mg/100ml, 25 to 40mg/100ml, 25 to 35mg/100ml, or 25 to 30mg/100ml of calcium.

### 2. Method for producing a flavored water

Even for a flavored water having an energy (Kcal/100 ml) controlled to be low by setting the amounts of the natural sugar and the high-intensity sweetener blended each to a low level, the sweetness based on the natural sugar and the high-intensity sweetener can be enhanced by adding low concentration(s) of potassium and/or calcium in addition to sodium in a concentration so low as to not be detectable by the human.

Therefore, the present invention provides, as yet another embodiment, the following method for producing a flavored water with an enhanced sweetness (hereinafter, referred to as "the method of the present invention").

A method for producing a flavored water, comprising:
to a raw material,
(i) adding (a) natural sugar in an amount corresponding to a sweetness intensity X1 and (b) high-intensity sweetener in an amount corresponding to a sweetness intensity X2;
(ii) adding (c) sodium such that a sodium content in a flavored water is less than 40 mg/100 ml; and
(iii) adding (d) potassium such that a potassium content in the flavored water is less than 70 mg/100 ml and/or adding (d) calcium such that a calcium content in the flavored water is less than 70 mg/100 ml,
   wherein
   the high-intensity sweetener comprises at least one high-intensity sweetener b1 selected from the group consisting of rebaudioside M, rebaudioside D, rebaudioside N, rebaudioside 0, rebaudioside E, Luo han guo extract, mogroside V, and thaumatin,
   the flavored water has a sweetness of a sweetness intensity X3 exhibited by the components (a) to (d), and 0.1 < (X1 + X2) ≤ 20 is satisfied.

The flavored water produced by the method of the present invention is a flavored water of the present invention described in the above section "1. Flavored water having a natural sugar and a high-intensity sweetener with an improved taste quality." In addition, the "raw material" in the method of the present invention can be each material needed to produce a flavored water or a mixture thereof, and can further contain an additional component such as a preservative, a flavor, a carrier, or a milk component. In addition, the "raw material" can be composed of a plurality of materials. However, regardless of the type of the raw material, the flavored water of the present invention finally produced does not include a substance having a sweetness other than the components (a) and (b) as a sweetener.

In the method of the present invention, any of the following Steps (i) to (iii) can be carried out first.
(i) Adding (a) natural sugar in an amount corresponding to a sweetness intensity X1 and (b) high-intensity sweetener in an amount corresponding to a sweetness intensity X2
(ii) Adding (c) sodium such that a sodium content in a flavored water is less than 40 mg/100 ml
(iii) Adding (d) potassium such that a potassium content in the flavored water is less than 70 mg/100 ml and/or adding (d) calcium such that a calcium content in the flavored water is less than 70 mg/100 ml

In Step (i), (a) natural sugar in an amount corresponding to a sweetness intensity X1 and (b) high-intensity sweetener in an amount corresponding to a sweetness intensity X2 are added to a raw material, but (a) natural sugar in an amount corresponding to a sweetness intensity X1 and (b) high-intensity sweetener in an amount corresponding to sweetness intensity X2 can be added separately.

Further, even when (a) natural sugar in an amount of corresponding to a sweetness intensity X1 is added, the natural sugar in an amount corresponding to a sweetness intensity X1 does not need to be added at once but can be added in several divided batches. Similarly, even when (b) high-intensity sweetener in an amount corresponding to sweetness intensity X2 is added, the high-intensity sweetener in an amount corresponding to sweetness intensity X2 does not need to be added at once but can be added in several divided batches.

In addition, as another embodiment, a mixture of the natural sugar and the high-intensity sweetener can also be added in several divided batches to make an adjustment such that the amount of the natural sugar and the amount of the high-intensity sweetener contained in the flavored water finally produced are the amount corresponding to the sweetness intensity X1 and the amount corresponding to the sweetness intensity X2, respectively.

Even when adding (c) sodium such that a sodium content in the flavored water is less than 40 mg/100 ml in Step (ii), sodium does not need to be added at once, and sodium can be added in several divided batches.

The sodium added to the raw material in Step (ii) can be, for example, in the form of at least one selected from the group consisting of sodium chloride, sodium hydroxide, sodium malate, sodium sulfate, sodium citrate, sodium phosphate, sodium carbonate, sodium disulfide, sodium bicarbonate, sodium alginate, sodium arginate, sodium glucoheptonate, sodium gluconate, monosodium glutamate, sodium tartrate, monosodium aspartate, sodium lactate, sodium caseinate, sodium ascorbate, and mixtures thereof.

In addition, when sodium is contained in the flavor, the fruit juice, the extract, and the like contained in the flavored water, the total content of sodium derived from these and additional sodium is adjusted to less than 40 mg/100 ml.

The potassium that can be added to the raw material in Step (iii) can be, for example, in the form of at least one selected from the group consisting of potassium alginate, potassium chloride, potassium citrate, potassium gluconate, monopotassium L-glutamate, potassium bromate, potassium hydrogen DL-tartrate, potassium hydrogen L-tartrate, potassium nitrate, potassium hydroxide, potassium sorbate, potassium carbonate, potassium lactate, potassium norbixin, potassium pyrosulfite, tetrapotassium pyrophosphate, potassium ferrocyanide, potassium polyphosphate, potassium metaphosphate, potassium aluminum sulfate, potassium sulfate, tripotassium phosphate, dipotassium hydrogen phosphate, potassium dihydrogen phosphate, and mixtures thereof.

In addition, when potassium is contained in the flavor, the fruit juice, the extract, and the like contained in the flavored water, the total content of potassium derived from these and additional potassium is adjusted to less than 70 mg/100 ml.

The calcium that can be added to the raw material in Step (iii) can be, for example, in the form of at least one selected from the group consisting of calcium L-ascorbate, calcium alginate, calcium disodium ethylenediaminetetraacetate, calcium chloride, carboxymethylcellulose calcium, calcium citrate, calcium glycerophosphate, calcium gluconate, monocalcium Di-L-glutamate, calcium silicate, calcium acetate, calcium oxide, calcium hydroxide, calcium stearate, calcium stearoyl lactate, calcium sorbate, calcium carbonate, calcium lactate, calcium pantothenate, calcium dihydrogen pyrophosphate, calcium ferrocyanide, calcium propionate, calcium 5'-ribonucleotide, calcium sulfate, tricalcium phosphate, calcium monohydrogen phosphate, calcium dihydrogen phosphate, and mixtures thereof.

In addition, when calcium is contained in the flavor, the fruit juice, the extract, and the like, and water (particularly hard water) contained in the flavored water, the total content of calcium derived from these and additional calcium is adjusted to less than 70 mg/100 ml.

The "addition" herein means not only the actual operation of adding any of the components (a) to (d) to the raw material but also the operation of adjusting the amounts of the components (a) to (d) in the flavored water finally produced through the production process of the flavored water of the present invention to the amount corresponding to the sweetness intensity X1, the amount corresponding to the sweetness intensity X2, less than 40 mg/100 ml of sodium, and less than 70 mg/100 ml of potassium and/or less than 70 mg/100 ml of calcium, respectively.

For example, if a first raw material contains a milk component, a grain, a bean, or an extract thereof, and accordingly the raw material contains any one or more of the components (a) to (d) in advance, a second raw material for being mixed with the first raw material also contains the components (a) to (d), and the flavored water of the present invention can be produced by mixing the first and second raw materials, then there is no operation of individually adding the components (a) to (d) to the raw materials, but in the method of the present invention, Steps (i) to (iii) are considered to have been carried out as long as the flavored water of the present invention finally produced contains (a) natural sugar in an amount corresponding to a sweetness intensity X1, (b) high-intensity sweetener in an amount corresponding to a sweetness intensity X2, (c) less than 40 mg/100 ml of sodium, and (d) less than 70 mg/100 ml of potassium and/or less than 70 mg/100 ml of calcium.

When the flavored water of the present invention is made into a packed-in-container beverage, the method for producing a beverage according to the present invention includes filling the container with the flavored water. In addition, when the flavored water of the present invention is made into a packed-in-container beverage, sterilization of the flavored water before or after filling the container with the flavored water is preferable because the sterilization allows long-term storage of the packed-in-container beverage. For example, when the flavored water of the present invention is made into a canned flavored water, a can can be filled with a predetermined amount of the flavored water and subjected to retort sterilization, for example, at 120 to 125°C for about 5 to 20 minutes to perform heat sterilization. In addition, when the flavored water of the present invention is made into a PET bottled, paper packed, or bottled beverage, the flavored water can be subjected to UHT sterilization involving holding, for example, at 130 to 145°C for about 2 to 120 seconds or the like and a predetermined amount thereof can be subjected to hot packing or aseptic packaging at a low temperature to obtain a packed-in-container beverage.

In the method of the present invention, the "flavored water", "natural sugar", "sweetness intensity X1", "high-intensity sweetener", "sweetness intensity X2", sodium content, potassium and/or calcium content, forms of sodium and potassium and/or calcium in the flavored water, "sweetness intensity X3", and energy are defined as described in the above section for the flavored water, and the numerical values described in the above section for the flavored water are applicable to numerical values thereof as they are. In addition, examples of the "combination of glucose, sucrose, fructose, maltose, an oligosaccharide, a high-fructose corn syrup, and lactose" and the "combination of high-intensity sweeteners" are also the same as the examples described in the above section for the flavored water.

In a certain embodiment, the flavored water produced by the method of the present invention is a flavored water comprising:
(a) natural sugar in an amount corresponding to a sweetness intensity X1 of 0.1 to 5;
(b) high-intensity sweetener in an amount corresponding to a sweetness intensity X2 of 0.1 to 5;
(c) less than 40 mg/100 ml of sodium; and
(d) less than 70 mg/100 ml of potassium and/or less than 70 mg/100 ml of calcium,
wherein the flavored water has a sweetness of a sweetness intensity X3 exhibited by the components (a) to (d) of 5.5 to 12.5, and 0.2 < (X1 + X2) ≤ 12.5 is satisfied.

In another embodiment, the flavored water produced by the method of the present invention is a flavored water comprising:
(a) natural sugar in an amount corresponding to a sweetness intensity X1 of 3 to 5;
(b) high-intensity sweetener in an amount corresponding to a sweetness intensity X2 of 1 to 5;
(c) 5 to 35 mg/100 ml of sodium; and
(d) 0.1 to 60 mg/100 ml of potassium and/or 0.1 to 60 mg/100 ml of calcium,
wherein the flavored water has a sweetness of a sweetness intensity X3 exhibited by the components (a) to (d) of 5.5 to 12.5, and 0.1 < (X1 + X2) ≤ 12.5 is satisfied.

In yet another embodiment, the flavored water produced by the method of the present invention is a flavored water comprising:
(a) natural sugar in an amount corresponding to a sweetness intensity X1 of 0.1 to 5;
(b) high-intensity sweetener in an amount corresponding to a sweetness intensity X2 of 0.1 to 5;
(c) less than 40 mg/100 ml of sodium; and
(d) 0.5 to 50 mg/100 ml of potassium and/or 0.5 to 50 mg/100 ml of calcium,
wherein the flavored water has a sweetness of a sweetness intensity X3 exhibited by the components (a) to (d) of 2.0 to 12.0, and 0.1 < (X1 + X2) ≤ 12.5 is satisfied.

In yet another embodiment, the flavored water produced by the method of the present invention is a flavored water comprising:
(a) natural sugar in an amount corresponding to a sweetness intensity X1 of 3 to 5;
(b) high-intensity sweetener in an amount corresponding to a sweetness intensity X2 of 1 to 5;
(c) 5 to 35 mg/100 ml of sodium; and
(d) 0.5 to 50 mg/100 ml of potassium and/or 0.5 to 50 mg/100 ml of calcium,
wherein the flavored water has a sweetness of a sweetness intensity X3 exhibited by the components (a) to (d) of 2.0 to 12.0, and 0.1 < (X1 + X2) ≤ 12.5 is satisfied.

In a specific embodiment, the present invention provides the following method (hereinafter, referred to as "method A of the present invention").

A method for producing a flavored water, comprising:
to a raw material,
   (i) adding (a) natural sugar in an amount corresponding to a sweetness intensity X1 and (b) high-intensity sweetener selected from the group consisting of rebaudioside M, rebaudioside D, and combinations thereof in an amount corresponding to a sweetness intensity X2;
   (ii) adding (c) sodium such that a sodium content in a flavored water is 5 to 35 mg/100 ml; and
   (iii) adding (d) potassium such that a potassium content in the flavored water is 0.5 to 50 mg/100 ml and/or adding (d) calcium such that a calcium content in the flavored water is 0.5 to 50 mg/100 ml
      wherein
      the flavored water has a sweetness of a sweetness intensity X3 exhibited by the components (a) to (d), and
      0.1 < (X1 + X2) ≤ 20 is satisfied.

In method A of the present invention, the "flavored water," "natural sugar" (including an example of a combination of glucose, sucrose, fructose, maltose, an oligosaccharide, a high-fructose corn syrup, and lactose), "sweetness intensity X1", "high-intensity sweetener", "sweetness intensity X2", sodium content, potassium and/or calcium content, forms of sodium, potassium and calcium in the flavored water, "sweetness intensity X3", and energy are defined as described in the above section for flavored water A, and the numeral values and the like described in the above section for flavored water A are applicable to values and the like thereof as they are. In addition, the flavored water in method A of the present invention corresponds to flavored water A of the present invention, and the items described above for flavored water A of the present invention are applicable to the flavored water in method A of the present invention as they are. Further, the "raw material", "addition", the order of Steps (i) to (iii), and the mode of addition of each component in method A of the present invention are defined as described above for the method of the present invention.

In another specific embodiment, the present invention provides the following method (hereinafter, referred to as "method B of the present invention").

A method for producing a flavored water, comprising:
to a raw material,
(i) adding (a) natural sugar in an amount corresponding to a sweetness intensity X1 and (b) Luo han guo extract in an amount corresponding to a sweetness intensity X2;
(ii) adding (c) sodium such that a sodium content in a flavored water is 5 to 35 mg/100 ml; and
(iii) adding (d) potassium such that a potassium content in the flavored water is 0.5 to 50 mg/100 ml and/or adding (d) calcium such that a calcium content in the flavored water is 0.5 to 50 mg/100 ml,
wherein the flavored water has a sweetness of a sweetness intensity X3 exhibited by the components (a) to (d), and 0.1 < (X1 + X2) ≤ 20 is satisfied.

In method B of the present invention, the "flavored water," "natural sugar" (including an example of a combination of glucose, sucrose, fructose, maltose, an oligosaccharide, a high-fructose corn syrup, and lactose), "sweetness intensity X1", "luo han guo extract", "sweetness intensity X2", sodium content, potassium and/or calcium content, forms of sodium, potassium and calcium in the flavored water, "sweetness intensity X3", and energy are defined as described in the above section for flavored water B, and the numeral values and the like described in the above section for flavored water B are applicable to values and the like thereof as they are. In addition, the flavored water in method B of the present invention corresponds to flavored water B of the present invention, and the items described above for flavored water B of the present invention are applicable to the flavored water in method B of the present invention as they are. Further, the "raw material", "addition", the order of Steps (i) to (iii), and the mode of addition of each component in method B of the present invention are defined as described above for the method of the present invention.

In another specific embodiment, the present invention provides the following method (hereinafter, referred to as "method C of the present invention").

A method for producing a flavored water, comprising:
to a raw material,
(i) adding (a) natural sugar in an amount corresponding to a sweetness intensity X1 and (b) mogroside V in an amount corresponding to a sweetness intensity X2;
(ii) adding (c) sodium such that a sodium content in a flavored water is 5 to 35 mg/100 ml; and
(iii) adding (d) potassium such that a potassium content in the flavored water is 0.5 to 50 mg/100 ml and/or adding (d) calcium such that a calcium content in the flavored water is 0.5 to 50 mg/100 ml,
   wherein
   the flavored water has a sweetness of a sweetness intensity X3 exhibited by the components (a) to (d), and
   0.1 < (X1 + X2) ≤ 20 is satisfied.

In method C of the present invention, the "flavored water," "natural sugar" (including an example of a combination of glucose, sucrose, fructose, maltose, an oligosaccharide, a high-fructose corn syrup, and lactose), "sweetness intensity X1", "mogroside V", "sweetness intensity X2", sodium content, potassium and/or calcium content, forms of sodium, potassium and calcium in the flavored water, "sweetness intensity X3", and energy are defined as described in the above section for flavored water C, and the numeral values and the like described in the above section for flavored water C are applicable to values and the like thereof as they are. In addition, the flavored water in method C of the present invention corresponds to flavored water C of the present invention, and the items described above for flavored water C of the present invention are applicable to the flavored water in method C of the present invention as they are. Further, the "raw material", "addition", the order of Steps (i) to (iii), and the mode of addition of each component in method C of the present invention are defined as described above for the method of the present invention.

In the flavored water produced by the method of the present invention, the sweetness intensity X1 of the natural sugar, the sweetness intensity X2 of the high-intensity sweetener, the sodium content, the potassium and/or calcium content, and the sweetness intensity X3 exhibited by the flavored water and the energy of the flavored water can each be any value as long as 0.1 < (X1 + X2) ≤ 20 is satisfied, and for example, any of the numerical values of the sweetness intensity X1, the sweetness intensity X2, the sodium content, the potassium and/or calcium content, the sweetness intensity X3, and the energy shown in the section of the flavored water of the present invention can also be combined.

### 3. Concentrate for providing a flavored water

The present invention provides, as another embodiment, a concentrate for providing the flavored water of the present invention (hereinafter, referred to as "the concentrate of the present invention"). According to an embodiment of the present invention, the concentrate of the present invention comprises:
(a) natural sugar in an amount corresponding to a sweetness intensity X4;
(b) high-intensity sweetener in an amount corresponding to a sweetness intensity X5;
(c) less than 400 mg/100 ml of sodium; and
(d) less than 700 mg/100 ml of potassium and/or less than 700 mg/100 ml of calcium,
wherein (X4 + X5) ≤ 200, preferably 1 < (X4 + X5) ≤ 200, and more preferably 50 < (X4 + X5) ≤ 200 is satisfied.

The concentrate of the present invention is used to provide a flavored water by diluting the concentrate in any ratio. The "flavored water" is the same as described in "1. Flavored water having natural sugar and a high-intensity sweetener with an improved taste quality." For example, the concentrate of the present invention can be used as a syrup or an undiluted solution in a beverage. In this instance, the concentrate can be diluted 2-fold, 3-fold, 4-fold, 5-fold, 6-fold, 7-fold, 8-fold, 9-fold, or 10-fold and used. In addition, the concentrate of the present invention is preferable in the aspects of preservability and transportability because it is concentrated. The concentrate of the present invention can be solid or liquid.

The concentrate of the present invention is 2 to 10-fold concentrate, preferably 3 to 9-fold concentrate, more preferably 4 to 8-fold concentrate, and further preferably 5 to 7-fold concentrate, of the flavored water of the present invention.

The concentrate according to an embodiment of the present invention is 5-fold concentrate of the flavored water of the present invention and comprises:
(a) the natural sugar in an amount corresponding to a sweetness intensity X6;
(b) the high-intensity sweetener in an amount corresponding to a sweetness intensity X7;
(c) less than 200 mg/100 ml of sodium; and
(d) less than 350 mg/100 ml of potassium and/or less than 350 mg/100 ml of calcium,
wherein (X6 + X7) ≤ 100, preferably 0.5 < (X6 + X7) ≤ 100, and more preferably 20 < (X6 + X7) ≤ 100 is satisfied.

The concentrate according to an embodiment of the present invention is 6-fold concentrate of the flavored water of the present invention and comprises:
(a) natural sugar in an amount corresponding to a sweetness intensity X8;
(b) high-intensity sweetener in an amount corresponding to a sweetness intensity X9;
(c) less than 240 mg/100 ml of sodium; and
(d) less than 420 mg/100 ml of potassium and/or less than 420 mg/100 ml of calcium,
wherein (X8 + X9) ≤ 120, preferably 0.6 < (X8 + X9) ≤ 120, and more preferably 30 < (X8 + X9) ≤ 120 is satisfied.

The concentrate according to another embodiment of the present invention is 8-fold concentrate of the flavored water of the present invention and comprises:
(a) natural sugar in an amount corresponding to a sweetness intensity X10;
(b) high-intensity sweetener in an amount corresponding to a sweetness intensity X11;
(c) less than 320 mg/100 ml of sodium; and
(d) less than 560 mg/100 ml of potassium and/or less than 560 mg/100 ml of calcium,
wherein (X10 + X11) ≤ 160, preferably 0.8 < (X10 + X11) ≤ 160, and more preferably 40 < (X10 + X11) ≤ 160 is satisfied.

### 4. Method for enhancing the sweetness of a flavored water

The present invention provides, as another embodiment, a method for enhancing the sweetness of flavored water (hereinafter, referred to as "the sweetness enhancement method of the present invention"). According to an embodiment of the present invention, the sweetness enhancement method of the present invention is characterized by containing:
(a) natural sugar in an amount corresponding to a sweetness intensity X1;
(b) high-intensity sweetener in an amount corresponding to a sweetness intensity X2;
(c) less than 40 mg/100 ml of sodium; and
(d) less than 70 mg/100 ml of potassium and/or less than 70 mg/100 ml of calcium
in a flavored water.

According to the sweetness enhancement method of the present invention, the sweetness of the flavored water is enhanced and a flavored water having a sweetness more than the sweetness intensity obtained when the component (a) is added to the flavored water and the sweetness intensity obtained when the component (b) is added to the flavored water can be provided. In the sweetness enhancement method of the present invention, the "flavored water", "natural sugar", "sweetness intensity X1", "high-intensity sweetener", "sweetness intensity X2", sodium content, potassium and/or calcium content, forms of sodium, potassium and calcium in the flavored water, "sweetness intensity X3", and energy are defined as described in the above section for the flavored water, and the numerical values described in the above section for the flavored water are applicable to numerical values thereof as they are. In addition, examples of the "combination of glucose, sucrose, fructose, maltose, an oligosaccharide, a high-fructose corn syrup, and lactose" and the "combination of high-intensity sweeteners" are also the same as the examples described in the above section for the flavored water.

As used herein, the term "at least" means that the number of a specific item can be greater than or equal to the number expressed. In addition, in the present application, the term "about" means that a subject matter is in ranges of ±25%, ±10%, ±5%, ±3%, ±2%, or ±1%, of the numerical value following the "about." For example, "about 10" means a range from 7.5 to 12.5.

### EXAMPLES

Hereinafter the present invention will be specifically described with reference to Examples, but the present invention is not limited to the following Examples.

In the Examples shown below, the sodium and potassium content in the base beverage before the addition of various additives was measured by atomic absorption spectroscopy using SpectrAA240FS (manufactured by Agilent Technologies, Inc.), and the calcium content was measured by ICP emission spectrometry using 5100VDV (manufactured by Agilent Technologies, Inc.) and ICPE-9000 (manufactured by Shimadzu Corporation). In addition, the sodium, potassium, and calcium content of a beverage sample after blending various additives was obtained by adding the sodium, potassium, and calcium content in the various additives calculated from the amounts blended to the sodium, potassium, and calcium content in the base beverage measured by the above method.

### Example 1 Evaluation of the improving effect of sodium, potassium, and calcium on taste qualities

### Experimental method

Natural sugars {sucrose (manufactured by Pacific Sugar Mfg. Co., Ltd.) and glucose (manufactured by Showa Sangyo Co., Ltd.)}, rebaudioside D (RebD) (purity 95% or more), sodium gluconate, potassium chloride, and calcium chloride were dissolved in a sugar-free orange flavored water (amount of sodium and amount of potassium: 0 (mg/100 ml), amount of calcium: 1.1 (mg/100 ml), energy: 0 (kcal/100 ml), absorbance at wavelength of 660 nm: 0.01 or less, and ΔE value of transmitted light: 3.5 or less) in the ratios shown in Table 2 below to prepare beverage samples. In addition, a solution to which none of sodium gluconate, potassium chloride, and calcium chloride was added was used as sample 1.

Brix in Table 2 was calculated from the concentrations of the natural sugars, the amount of sodium was calculated from the sodium gluconate concentration, the amount of potassium was calculated from the potassium chloride concentration, and the amount of calcium was calculated from the calcium chloride concentration and the amount of calcium derived from the flavored water. In addition, the energy (kcal/100 ml) was calculated with the energy of RebD and the sodium, potassium, and calcium-derived components being 0 (kcal/100 ml).

As shown in Table 2, sample 1-1 has an amount of Na added of 20 mg/100 ml, sample 1-2 has a total amount of Na + K added of 20 mg/100 ml, and sample 1-3 has a total amount of Na + Ca added of 20 mg/100 ml.

**Table 2**

| Content | Sample 1 | 1-1 | 1-2 | 1-3 |
|---|---|---|---|---|
| Sucrose (w/v%) | 1.0 | 1.0 | 1.0 | 1.0 |
| Glucose (w/v%) | 3.5 | 3.5 | 3.5 | 3.5 |
| Brix (derived from sucrose + glucose) | 4.5 | 4.5 | 4.5 | 4.5 |
| RebD (ppm) | 208 | 208 | 208 | 208 |
| Sodium gluconate (g/L) | 0 | 1.90 | 0.95 | 0.95 |
| Sodium content in beverage sample (mg/100ml) | 0 | 20 | 10 | 10 |
| Potassium chloride (g/L) | 0 | 0 | 0.2 | 0 |
| Potassium content in beverage sample (mg/100ml) | 0 | 0 | 10 | 0 |
| Calcium chloride (g/L) | 0 | 0 | 0 | 0.28 |
| Calcium content in beverage sample (mg/100ml) | 1.1 | 1.1 | 1.1 | 11.1 |
| Energy (Kcal/100ml) | 18 | 18 | 18 | 18 |

The improving effect of sodium, potassium, and calcium on taste qualities was verified by the sensory comparison of the taste qualities of these beverage samples. The taste qualities that were the sensory evaluation items were "intensity of sweetness", "intensity of flavor (aroma)", "intensity of unpleasant taste (bitterness, astringency, or the like)", and "intensity of saltiness", and those who had received sensory training (4 persons) carried out verification as panelists.

First, each panelist calculated a "sensory evaluation score" for each taste quality for each beverage sample based on the common taste quality criteria established through daily training.

The "sensory evaluation score" is a numerical value of the difference in taste quality from sample 1 in the range of -3.0 to +3.0, with the degree of taste quality of sample 1 being "0" (reference). The criterion for each item of the "sensory evaluation score" is as follows.

### Sensory evaluation score

- "+3.0": The target taste quality feels very strong compared to sample 1.
- "+2.0": The target taste quality feels strong compared to sample 1.
- "+1.0": The target taste quality feels slightly strong compared to sample 1.
- "0": The target taste quality is the same as that of sample 1.
- "-1.0": The target taste quality feels slightly week compared to sample 1.
- "-2.0": The target taste quality feels week compared to sample 1.
- "-3.0": The target taste quality feels very week compared to sample 1.

In light of the above criteria, for example, when it was determined that the taste quality was between "+1.0" and "+2.0", it scored "+1.5" and the scores were given in 0.5 increments.

Then, the "sensory evaluation score" calculated by each panelist was converted to the "conversion score" according to the following criteria, and the total conversion score of the four panelists for each taste was calculated.

### Conversion score

- Conversion score "3": The sensory evaluation score is +1.5 or more.
- Conversion score "2": The sensory evaluation score is +1.0 or more and less than +1.5.
- Conversion score "1": The sensory evaluation score is +0.5 or more and less than +1.0.
- Conversion score "0": The sensory evaluation score is more than -0.5 and less than +0.5.
- Conversion score "-1": The sensory evaluation score is more than -1.0 and -0.5 or less.
- Conversion score "-2": The sensory evaluation score is more than -1.5 and -1.0 or less.
- Conversion score "-3": The sensory evaluation score is -1.5 or less.

For "intensity of sweetness" and "intensity of flavor", a larger total conversion score is more preferable, and for "intensity of unpleasant taste" and "intensity of saltiness", a smaller total conversion score is more preferable.

### Results

Table 3 shows the calculated results of the total conversion scores of each taste quality.

**Table 3**

| Taste quality | Sample 1 | 1-1 | 1-2 | 1-3 |
|---|---|---|---|---|
| Intensity of sweetness | 0 | 3 | 3 | 6 |
| Intensity of flavor | 0 | 5 | 5 | 9 |
| Intensity of odd taste | 0 | -2 | -2 | -4 |
| Intensity of saltiness | 0 | 1 | 0 | 0 |

### Example 2 Evaluation of the effect of difference in potassium and/or calcium concentration on improvement in taste qualities

### Experimental method

In the same ways as in Example 1, natural sugars {sucrose (manufactured by Pacific Sugar Mfg. Co., Ltd.) and glucose (manufactured by Showa Sangyo Co., Ltd.)}, rebaudioside D (RebD) (purity 95% or more), sodium gluconate, potassium chloride, and calcium chloride were dissolved in a sugar-free orange flavored water (amount of sodium and amount of potassium: 0 (mg/100 ml), amount of calcium: 1.1 (mg/100 ml), energy: 0 (kcal/100 ml), absorbance at wavelength of 660 nm: 0.01 or less, and ΔE value of transmitted light: 3.5 or less) in the ratios shown in Table 4 below to prepare beverage samples. In addition, a solution to which none of sodium gluconate, potassium chloride, and calcium chloride was added was used as sample 2. Brix in Table 4 was calculated from the concentrations of the natural sugars, the amount of sodium was calculated from the sodium gluconate concentration, the amount of potassium was calculated from the potassium chloride concentration, and the amount of calcium was calculated from the calcium chloride concentration and the amount of calcium derived from the flavored water. In addition, the energy (kcal/100 ml) was calculated with the energy of RebD and the sodium, potassium, and calcium-derived components being 0 (kcal/100 ml).

**Table 4**

| Content | Sample 2 | 2-1 | 2-2 | 2-3 | 2-4 | 2-5 | 2-6 | 2-7 | 2-8 |
|---|---|---|---|---|---|---|---|---|---|
| Sucrose (w/v%) | 1.0 | 1.0 | 1.0 | 1.0 | 1.0 | 1.0 | 1.0 | 1.0 | 1.0 |
| Glucose (w/v%) | 3.5 | 3.5 | 3.5 | 3.5 | 3.5 | 3.5 | 3.5 | 3.5 | 3.5 |
| Brix (derived from sucrose + glucose) | 4.5 | 4.5 | 4.5 | 4.5 | 4.5 | 4.5 | 4.5 | 4.5 | 4.5 |
| RebD (ppm) | 208 | 208 | 208 | 208 | 208 | 208 | 208 | 208 | 208 |
| Sodium gluconate (g/L) | 0 | 0.95 | 0.95 | 0.95 | 0.95 | 0.95 | 0.95 | 0.95 | 0.95 |
| Sodium content in beverage sample (mg/100ml) | 0 | 10 | 10 | 10 | 10 | 10 | 10 | 10 | 10 |
| Potassium chloride (g/L) | 0 | 0.2 | 0.4 | 0.6 | 0.8 | 0 | 0 | 0 | 0 |
| Potassium content in beverage sample (mg/100ml) | 0 | 10 | 20 | 30 | 40 | 0 | 0 | 0 | 0 |
| Calcium chloride (g/L) | 0 | 0 | 0 | 0 | 0 | 0.28 | 0.56 | 0.84 | 1.12 |
| Calcium content in beverage sample (mg/100ml) | 1.1 | 1.1 | 1.1 | 1.1 | 1.1 | 11.1 | 21.1 | 31.1 | 41.1 |
| Energy (Kcal/100ml) | 18 | 18 | 18 | 18 | 18 | 18 | 18 | 18 | 18 |

The effect of difference in potassium and/or calcium concentration on improvement in taste qualities was verified by the sensory comparison of the taste qualities of these beverage samples. The taste qualities that were the sensory evaluation items were "intensity of sweetness", "intensity of flavor (aroma)", "intensity of unpleasant taste (bitterness, astringency, or the like)", and "intensity of saltiness", and those who had received sensory training (4 persons) carried out verification as panelists. Specifically, the same evaluation as in Example 1 was carried out, and the "sensory evaluation score" calculated by each panelist was converted to the "conversion score", and the total conversion score of the four panelists for each taste quality was calculated.

### Results

Table 5 shows the calculated results of the total conversion scores of each taste quality.

**Table 5**

| Taste quality | Sample 2 | 2-1 | 2-2 | 2-3 | 2-4 | 2-5 | 2-6 | 2-7 | 2-8 |
|---|---|---|---|---|---|---|---|---|---|
| Intensity of sweetness | 0 | 6 | 6 | 6 | 6 | 5 | 6 | 4 | 5 |
| Intensity of flavor | 0 | 3 | 2 | 2 | 3 | 2 | 6 | 7 | 3 |
| Intensity of odd taste | 0 | 0 | -2 | -2 | -1 | 0 | 1 | 1 | 3 |
| Intensity of saltiness | 0 | 0 | 0 | 0 | 0 | 0 | 0 | 0 | 0 |

### Example 3 Evaluation of the improving effect of various high-intensity sweeteners and sodium and potassium and/or calcium on taste qualities

### Experimental method

In the same way as in Example 1, natural sugars {sucrose (manufactured by Pacific Sugar Mfg. Co., Ltd.) and glucose (manufactured by Showa Sangyo Co., Ltd.)}, a high-intensity sweetener {mogroside V (MogV) (purity 95% or more) or rebaudioside M (RebM) (purity 99% or more)}, sodium gluconate, potassium chloride, and calcium chloride were dissolved in a sugar-free orange flavored water (amount of sodium and amount of potassium: 0 (mg/100 ml), amount of calcium: 1.1 (mg/100 ml), energy: 0 (kcal/100 ml), absorbance at wavelength of 660 nm: 0.01 or less, and ΔE value of transmitted light: 3.5 or less) in the ratios shown in Table 6 below to prepare beverage samples. In addition, solutions to which none of sodium gluconate, potassium chloride, and calcium chloride was added were used as sample 3 and sample 3A. Brix in Table 6 was calculated from the concentrations of the natural sugars, the amount of sodium was calculated from the sodium gluconate concentration, the amount of potassium was calculated from the potassium chloride concentration, and the amount of calcium was calculated from the calcium chloride concentration and the amount of calcium derived from the flavored water. In addition, the energy (kcal/100 ml) was calculated with the energy of MogV, RebM, and the sodium, potassium, and calcium-derived components being 0 (kcal/100 ml).

**Table 6**

| Content | Sample 3 | 3-1 | 3-2 | Sample 3A | 3-3 | 3-4 | 3-5 |
|---|---|---|---|---|---|---|---|
| Sucrose (w/v%) | 1.0 | 1.0 | 1.0 | 1.0 | 1.0 | 1.0 | 1.0 |
| Glucose (w/v%) | 3.5 | 3.5 | 3.5 | 3.5 | 3.5 | 3.5 | 3.5 |
| Brix (derived from sucrose + glucose) | 4.5 | 4.5 | 4.5 | 4.5 | 4.5 | 4.5 | 4.5 |
| MogV (ppm) | 208 | 208 | 208 | 0 | 0 | 0 | 0 |
| RebM (ppm) | 0 | 0 | 0 | 208 | 208 | 208 | 208 |
| Sodium gluconate (g/L) | 0 | 0.95 | 0.95 | 0 | 1.90 | 0.95 | 0.95 |
| Sodium content in beverage sample (mg/100ml) | 0 | 10 | 10 | 0 | 20 | 10 | 10 |
| Potassium chloride(g/L) | 0 | 0.2 | 0 | 0 | 0 | 0.2 | 0 |
| Potassium content in beverage sample (mg/100ml) | 0 | 10 | 0 | 0 | 0 | 10 | 0 |
| Calcium chloride (mM) | 0 | 0 | 0.28 | 0 | 0 | 0 | 0.28 |
| Calcium content in beverage sample (mg/100ml) | 1.1 | 1.1 | 11.1 | 1.1 | 1.1 | 1.1 | 11.1 |
| Energy (Kcal/100ml) | 18 | 18 | 18 | 18 | 18 | 18 | 18 |

The improving effect of sodium, potassium, and calcium on taste qualities was verified by the sensory comparison of the taste qualities of these beverage samples. The taste qualities that were the sensory evaluation items were "intensity of sweetness", "intensity of flavor (aroma)", "intensity of unpleasant taste (bitterness, astringency, or the like)", and "intensity of saltiness", and those who had received sensory training (4 persons) carried out verification as panelists. Specifically, the same evaluation as in Example 1 was carried out, and the "sensory evaluation score" calculated by each panelist was converted to the "conversion score", and the total conversion score of the four panelists for each taste quality was calculated. For samples 3 to 3-2, the score of sample 3 was used as a reference (0 points), and for samples 3A to 3-5, the score of sample 3A was used as a reference (0 points).

### Results

Table 7 shows the calculated results of the total conversion scores of each taste quality.

**Table 7**

| Taste quality | Sample3 | 3-1 | 3-2 | Sample3A | 3-3 | 3-4 | 3-5 |
|---|---|---|---|---|---|---|---|
| Intensity of sweetness | 0 | 8 | 3 | 0 | 3 | 9 | 7 |
| Intensity of flavor | 0 | 5 | 1 | 0 | 3 | 6 | 2 |
| Intensity of odd taste | 0 | 0 | 0 | 0 | 0 | 0 | 0 |
| Intensity of saltiness | 0 | 0 | 0 | 0 | 0 | 0 | 0 |

### Example 4 Aroma component analysis using gas chromatography

### Experimental method

In the same ways as in Example 1, natural sugars {sucrose (manufactured by Pacific Sugar Mfg. Co., Ltd.) and glucose (manufactured by Showa Sangyo Co., Ltd.)}, rebaudioside D (RebD) (purity 95% or more), sodium gluconate, potassium chloride, and calcium chloride were dissolved in a sugar-free orange flavored water (amount of sodium and amount of potassium: 0 (mg/100 ml), amount of calcium: 1.1 (mg/100 ml), energy: 0 (kcal/100 ml), absorbance at wavelength of 660 nm: 0.01 or less, and ΔE value of transmitted light: 3.5 or less) in the ratios shown in Table 8 below to prepare beverage samples. In addition, a solution to which none of sodium gluconate, potassium chloride, and calcium chloride was added was used as sample 4.

Brix in Table 8 was calculated from the concentrations of the natural sugars, the amount of sodium was calculated from the sodium gluconate concentration, the amount of potassium was calculated from the potassium chloride concentration, and the amount of calcium was calculated from the calcium chloride concentration and the amount of calcium derived from the flavored water. In addition, the energy (kcal/100 ml) was calculated with the energy of RebD and the sodium, potassium, and calcium-derived components being 0 (kcal/100 ml).

**Table 8**

| Content | Sample 4 | 4-1 | 4-2 |
|---|---|---|---|
| Sucrose (w/v%) | 1.0 | 1.0 | 1.0 |
| Glucose (w/v%) | 3.5 | 3.5 | 3.5 |
| Brix (derived from sucrose + glucose) | 4.5 | 4.5 | 4.5 |
| RebD (ppm) | 208 | 208 | 208 |
| Sodium gluconate (g/L) | 0 | 0.95 | 0.95 |
| Sodium content in beverage sample (mg/100ml) | 0 | 10 | 10 |
| Potassium chloride(g/L) | 0 | 0.2 | 0 |
| Potassium content in beverage sample (mg/100ml) | 0 | 10 | 0 |
| Calcium chloride (mM) | 0 | 0 | 0.28 |
| Calcium content in beverage sample (mg/100ml) | 1.1 | 1.1 | 1.11 |
| Energy (Kcal/100ml) | 18 | 18 | 18 |

### Method for collecting samples for aroma component analysis

About 50 ml of the beverage sample was placed in an impinger. While causing clean nitrogen to flow from one opening of the impinger at a flow rate of 100 ml/min, the gas flowing into a Tedlar bag attached to the other opening was collected for 10 minutes.

### Apparatus and analysis conditions

The apparatus and measurement of gas chromatography mass (TCT-GC/MS) analysis were carried out under the following conditions.
Apparatus: TCT GL Sciences HP524
Column: CP-SIL5CB (0.25 mm I.D. × 60 m df = 0.25 µm)
Column temperature: 40°C → 280°C (10°C/min, hold)
Carrier gas: 1.0 mL/min
Detector: GC/MS Agilent Technologies Model 5977B
Ion source temperature: 230°C
Ionization method: EI
Measurement mass range: m/z 30 to 600

The peaks obtained by the analysis were compared between sample 4-1 and sample 4-2 and sample 4, and the area value of the peak having a peak appearance time of 4.0 minutes, which was considered to be the peak of an aroma component, was calculated. Results thereof are shown in Table 9. As a result, it was found that the addition of calcium has the effect of improving the aroma.

**Table 9**

| | Sample 4 | 4-1 | 4-2 |
|---|---|---|---|
| Area value of peak having peak appearance time of 4.0 minutes | 157 | 197 | 216 |

### INDUSTRIAL APPLICABILITY

The method of the present invention provides a method for increasing the sweetness of a flavored water or sweet composition, which is not a simple sweetness that is obtained by increasing the amounts of natural sugar and high-intensity sweetener used, and providing good taste.

## Claims

1. A flavored water comprising:
(a) natural sugar in an amount corresponding to a sweetness intensity X1;
(b) high-intensity sweetener in an amount corresponding to a sweetness intensity X2;
(c) less than 40 mg/100 ml of sodium; and
(d) less than 70 mg/100 ml of potassium and/or less than 70 mg/100 ml of calcium,
wherein the high-intensity sweetener comprises at least one high-intensity sweetener b1 selected from the group consisting of rebaudioside M, rebaudioside D, rebaudioside N, rebaudioside 0, rebaudioside E, Luo han guo extract, mogroside V, and thaumatin, and
0.1 < (X1 + X2) ≤ 20 is satisfied.

2. Flavored water according to claim 1, wherein the sodium content is 5 to 35 mg/100 ml.

3. Flavored water according to claim 1 or 2, which comprises 0.1 to 60 mg/100 ml of potassium and/or 0.1 to 60 mg/100 ml of calcium.

4. Flavored water according to any one of claims 1 to 3, wherein energy is 30 Kcal/100 ml or less.

5. Flavored water according to any one of claims 1 to 4, wherein X1 is 0.1 to 5.9.

6. Flavored water according to any one of claims 1 to 5, wherein an absorbance of the flavored water at a wavelength of 660 nm is 0.06 or less.

7. Flavored water according to any one of claims 1 to 6, wherein a carbon dioxide gas pressure of the flavored water at 20°C is less than 1.0 kgf/cm².

8. Flavored water according to any one of claims 1 to 7, wherein the natural sugar is at least one selected from the group consisting of glucose, sucrose, fructose, maltose, oligosaccharides, high-fructose corn syrup, lactose, psicose, allose, tagatose, and combinations thereof.

9. Flavored water according to any one of claims 1 to 8, wherein the high-intensity sweetener b1 is at least one selected from the group consisting of rebaudioside M, rebaudioside D, Luo han guo extract, mogroside V, and combinations thereof.

10. Flavored water according to any one of claims 1 to 9, wherein the sodium is at least one selected from the group consisting of sodium chloride, sodium hydroxide, sodium malate, sodium sulfate, sodium citrate, sodium phosphate, sodium carbonate, sodium disulfide, sodium bicarbonate, sodium alginate, sodium arginate, sodium glucoheptonate, sodium gluconate, monosodium glutamate, sodium tartrate, monosodium aspartate, sodium lactate, sodium caseinate, sodium ascorbate, and mixtures thereof.

11. Flavored water according to any one of claims 1 to 10, wherein the potassium is at least one selected from the group consisting of potassium alginate, potassium chloride, potassium citrate, potassium gluconate, monopotassium L-glutamate, potassium bromate, potassium hydrogen DL-tartrate, potassium hydrogen L-tartrate, potassium nitrate, potassium hydroxide, potassium sorbate, potassium carbonate, potassium lactate, potassium norbixin, potassium pyrosulfite, tetrapotassium pyrophosphate, potassium ferrocyanide, potassium polyphosphate, potassium metaphosphate, potassium aluminum sulfate, potassium sulfate, tripotassium phosphate, dipotassium hydrogen phosphate, potassium dihydrogen phosphate, and mixtures thereof.

12. Flavored water according to any one of claims 1 to 11, wherein the calcium is at least one selected from the group consisting of calcium L-ascorbate, calcium alginate, calcium disodium ethylenediaminetetraacetate, calcium chloride, carboxymethylcellulose calcium, calcium citrate, calcium glycerophosphate, calcium gluconate, monocalcium Di-L-glutamate, calcium silicate, calcium acetate, calcium oxide, calcium hydroxide, calcium stearate, calcium stearoyl lactate, calcium sorbate, calcium carbonate, calcium lactate, calcium pantothenate, calcium dihydrogen pyrophosphate, calcium ferrocyanide, calcium propionate, calcium 5'-ribonucleotide, calcium sulfate, tricalcium phosphate, calcium monohydrogen phosphate, calcium dihydrogen phosphate, and mixtures thereof.

13. Flavored water according to any one of claims 1 to 12, wherein the flavored water comprises 5 to 35 mg/100 ml of sodium and comprises 0.1 to 60 mg/100 ml of potassium and/or 0.1 to 60 mg/100 ml of calcium, energy is 30 Kcal/100 ml or less, and X1 + X2 is 6 or more.

14. Flavored water according to any one of claims 1 to 13, which is packed in a container.

15. A method for producing a flavored water, comprising:
to a raw material,
(i) adding (a) natural sugar in an amount corresponding to a sweetness intensity X1 and (b) high-intensity sweetener in an amount corresponding to a sweetness intensity X2;
(ii) adding (c) sodium such that a sodium content in a flavored water age is less than 40 mg/100 ml; and
(iii) adding (d) potassium such that a potassium content in the flavored water is less than 70 mg/100 ml and/or adding (d) calcium such that a calcium content in the flavored water is less than 70 mg/100 ml,
wherein
the high-intensity sweetener comprises at least one high-intensity sweetener b1 selected from the group consisting of rebaudioside M, rebaudioside D, rebaudioside N, rebaudioside 0, rebaudioside E, Luo han guo extract, mogroside V, and thaumatin, and
0.1 < (X1 + X2) ≤ 20 is satisfied.

16. Method according to claim 15, wherein in the flavored water, the sodium content is 5 to 35 mg/100 ml.

17. Method according to claim 15 or 16, which comprises 0.1 to 60 mg/100 ml of potassium and/or 0.1 to 60 mg/100 ml of calcium.

18. Method according to any one of claims 15 to 17, wherein energy of the flavored water is 30 Kcal/100 ml or less.

19. Method according to any one of claims 15 to 18, wherein X1 is 0.1 to 5.9.

20. Method according to any one of claims 15 to 19, wherein an absorbance of the flavored water at a wavelength of 660 nm is 0.06 or less.

21. Method water according to any one of claims 15 to 20, wherein a carbon dioxide gas pressure of the flavored water at 20°C is less than 1.0 kgf/cm².

22. Method according to any one of claims 15 to 21, wherein the natural sugar is at least one selected from the group consisting of glucose, sucrose, fructose, maltose, oligosaccharides, high-fructose corn syrup, lactose, psicose, allose, tagatose, and combinations thereof.

23. Method according to any one of claims 15 to 22, wherein the high-intensity sweetener b1 is at least one selected from the group consisting of rebaudioside M, rebaudioside D, Luo han guo extract, mogroside V, and combinations thereof.

24. Method according to any one of claims 15 to 23, wherein the sodium is at least one selected from the group consisting of sodium chloride, sodium hydroxide, sodium malate, sodium sulfate, sodium citrate, sodium phosphate, sodium carbonate, sodium disulfide, sodium bicarbonate, sodium alginate, sodium arginate, sodium glucoheptonate, sodium gluconate, monosodium glutamate, sodium tartrate, monosodium aspartate, sodium lactate, sodium caseinate, sodium ascorbate, and mixtures thereof.

25. Method according to any one of claims 15 to 24, wherein the potassium is at least one selected from the group consisting of potassium alginate, potassium chloride, potassium citrate, potassium gluconate, monopotassium L-glutamate, potassium bromate, potassium hydrogen DL-tartrate, potassium hydrogen L-tartrate, potassium nitrate, potassium hydroxide, potassium sorbate, potassium carbonate, potassium lactate, potassium norbixin, potassium pyrosulfite, tetrapotassium pyrophosphate, potassium ferrocyanide, potassium polyphosphate, potassium metaphosphate, potassium aluminum sulfate, potassium sulfate, tripotassium phosphate, dipotassium hydrogen phosphate, potassium dihydrogen phosphate, and mixtures thereof.

26. Method according to any one of claims 15 to 25, wherein the calcium is at least one selected from the group consisting of calcium L-ascorbate, calcium alginate, calcium disodium ethylenediaminetetraacetate, calcium chloride, carboxymethylcellulose calcium, calcium citrate, calcium glycerophosphate, calcium gluconate, monocalcium Di-L-glutamate, calcium silicate, calcium acetate, calcium oxide, calcium hydroxide, calcium stearate, calcium stearoyl lactate, calcium sorbate, calcium carbonate, calcium lactate, calcium pantothenate, calcium dihydrogen pyrophosphate, calcium ferrocyanide, calcium propionate, calcium 5'-ribonucleotide, calcium sulfate, tricalcium phosphate, calcium monohydrogen phosphate, calcium dihydrogen phosphate, and mixtures thereof.

27. Method according to any one of claims 15 to 26, wherein the flavored water comprises 10 to 30 mg/100 ml of sodium and comprises 0.1 to 60 mg/100 ml of potassium and/or 0.1 to 60 mg/100 ml of calcium, energy is 30 Kcal/100 ml or less, and X1 + X2 is 6 or more.

28. A concentrate for providing a flavored water according to claim 1, comprising:
(a) natural sugar in an amount corresponding to a sweetness intensity X4;
(b) high-intensity sweetener in an amount corresponding to a sweetness intensity X5;
(c) less than 400 mg/100 ml of sodium; and
(d) less than 700 mg/100 ml of potassium and/or less than 700 mg/100 ml of calcium,
wherein (X4 + X5) ≤ 200 is satisfied.

29. A method for enhancing the sweetness of a flavored water, comprising containing:
(a) natural sugar in an amount corresponding to a sweetness intensity X1;
(b) high-intensity sweetener in an amount corresponding to a sweetness intensity X2;
(c) less than 40 mg/100 ml of sodium; and
(d) less than 70 mg/100 ml of potassium and/or less than 70 mg/100 ml of calcium
in the flavored water.
